# EUROPEAN PATENT APPLICATION

(11) **EP 1 712 506 A1**
(43) Date of publication of application: **18.10.2006**
(21) Application number: 06008491.0
(22) Date of filing: 28.02.2001
(51) Int. Cl.: B65H 54/76, B65H 54/78, B65H 54/80, B65H 69/06, B65H 71/00, C03B 37/03, C03B 37/12, B65H 51/005, B65H 51/015, D01D 7/00, B65H 57/28, F26B 13/00, C03C 25/64

(54) **A package of strand and a method and apparatus for manufacturing the same**

(30) Priority: 02.03.2000 US 186354 P; 26.02.2001 US 793414
(62) Divisional of application: 01920155.7
(71) Applicant: OWENS CORNING, Toledo, Ohio 43659 (US)
(72) Inventor: Lueneburger, Christoph, Brooklyn New York 11201 (US); Fazio, Michael B., Newak, OH 43055 (US); Strait, Michael A., Johnstown, OH 43031 (US); Forbes, Clark T., Newark, OH 43055 (US); Green, Richard A., Pataskala, OH 43062 (US); Grube, Fred C., Johnstown, OH 43031 (US); Ramey, Eric H., Thornville, OH 43076 (US)
(74) Representative: Jacob, Reuben Ellis

(57) **Abstract**

A package of strand comprising:
an approximately planar bottom plate having a perimeter (372);
a plurality of upright columnar supports (374) disposed about, and projecting upwardly from, said perimeter of said bottom plate (372) and defining between said supports (374) and said plate (372) a strand containing volume; and
a self-supporting block of strand bound together by a coating of size and disposed within and substantially filling said strand containing volume.

## Description

### TECHNICAL FIELD AND INDUSTRIAL

### APPLICABILITY OF THE INVENTION

This invention relates generally to a new package of strand and a method and apparatus for manufacturing a package of strand, and in particular, to a self supported package of strand made of glass filaments and a method and apparatus for manufacturing a self-supporting package of glass strand. The invention is particularly useful in the production of fiberglass strand for use in molding resinous articles.

### BACKGROUND OF THE INVENTION

A strand of glass filaments is typically formed by attenuating molten glass through a plurality of orifices in a bottom plate of a bushing. The filaments are attenuated by applying tractive forces to the streams of glass, so as to attenuate the streams. The filaments are coated with a size or binder material which serves to provide a lubricating quality to the individual filaments to provide them with abrasion resistance. The glass filaments are sized with the size material substantially immediately after they are formed. The filaments are gathered in parallel relationship to form a strand.

In conventional filament forming systems, the streams of glass have been attenuated by winding the filaments on an exterior of a rotating tube. The strand of filaments is wound on the tube as a cylindrical package. The winding device with the rotating tube pulls the filaments and collects the strand.

As the exterior diameter of the package increases, the peripheral speed of the package increases and the attenuating force on the strand increases. The increase in speed and force causes the filaments to be more finely attenuated and continuously smaller in diameter. The change in filament characteristics results in a variation in the final product.

Attempts have been made to overcome this problem. One concept was to reduce the rotational speed of the tube and maintain a constant surface speed as the package diameter increases.

A wound package of strand has inherent drawbacks as well. The package is formed with a hollow center because it was wound on a rotating tube. The hollow center takes up space during shipping and storage and less strand occupies a given space.

If the tube is made of a smaller diameter to decrease the volume of the hollow center, the rotational speed of the tube may exceed an acceptable speed for the attenuation of filaments. Also with a smaller tube, the relative difference in linear speed of the filaments, due to an increased package diameter as the strand builds up, is accentuated.

Mating wheels have been suggested as an alternative source of the attenuating force to pull the filaments. Such wheels have been unsatisfactory because of the tendency of the gathered filaments to separate and stick to the wheels as they rotate.

Another alternative source of attenuating force is to pull the filaments with a pair of belts. Some belts have smooth surfaces and sometimes slip relative to each other. Filaments tend to wrap around the smooth surfaced belts instead of following a downward trajectory.

Instead of winding the strand around a rotating tube, the strand may be gathered into a bucket. The strand is typically collected in a bucket when it is pulled by a pulling device such as mating wheels or a pair of belts.

### SUMMARY OF THE INVENTION

The disclosed package of strand is directed to a self-supporting package of strand. The disclosed method of manufacturing a package of strand is directed to the bulk collection of the strand.

The disclosed strand collection system includes an attenuator that attenuates filaments from a bushing. A size material is applied to the filaments and they are gathered into a strand. The attenuator includes a pair of belts between which the strand is pinched to pull the filaments from the bushing. The attenuator directs the strand to a deflector assembly that slows down and imparts a degree of movement to the strand.

The deflector assembly includes primary and secondary deflector surfaces which the strand engages. After the strand deflects off the secondary deflector surface, it is directed into a container assembly. The attenuator and deflector assembly traverse above the container assembly to deposit the strand.

The container assembly is periodically vibrated by a vibrating mechanism as it collects strand. The vibrations settle and shift the strand in the container assembly for better strand distribution. Accordingly, more strand can be collected and the resulting package of strand has a high average density.

The container assembly includes inner and outer containers. The container assembly includes an outer container with perforations through which air and water can flow to remove moisture from the package. The container assembly also includes an inner container that provides support during the shipping of the package after the outer container is removed.

After the strand has filled the container assembly, the container assembly and strand is dielectrically dried. The package may include intra-package splices of the strand if the strand breaks during the collection process. The splicing of strands eliminates the strand that is wasted when an incomplete package is formed. Any strand ends that broke and were spliced during the strand collection process are manually spliced. The outer container is removed from the inner container and strand. The dried strand package is self-supporting. The strand collection system includes an auto splicer/cutter that splices and/or cuts the strand during start up and when the strand breaks. The system also includes an auto thread up system that simplifies the threading of the strand to the attenuator.

Multiple strands may be formed from the attenuated filaments. The strands are collected into package form using the bulk collection process. When an end user pulls the strands from the package, the strands may move or slip relative to one another, thereby interfering with the secondary process of the end user.

The strand collection system overcomes this problem by coupling filaments or strands together to reduce or eliminate slippage of the strands when they are pulled from the package. The links are referred to as authentic links. When the strands have been coupled, the strands are easily and accurately run out of the package.

### BRIEF DESCRIPTION OF THE DRAWINGS

Fig. 1 is a schematic view of a conventional fiberglass forming apparatus.
Fig. 2 is a schematic view of a strand collection system embodying the principles of the invention.
Fig. 3 is a side view of a strand collection system embodying the principles of the invention.
Fig. 4 is a perspective view of a linear actuator assembly, attenuator, and deflector assembly of the strand collection system of Fig. 3.
Fig. 5 is a side view of the linear actuator assembly, attenuator, and deflector assembly of Fig. 3.
Fig. 6 is an isometric view of an attenuator embodying the principles of the invention.
Fig. 7 is a side view of the attenuator of Fig. 6.
Fig. 8 is a side view of the attenuator of Fig. 6.
Fig. 9 is a rear view of the attenuator of Fig. 6.
Fig. 10 is a partial cross-sectional view of a belt of the attenuator of Fig. 6.
Fig. 11 is an enlarged front view of the belt of the attenuator of Fig. 6.
Fig. 12 is a top view of a deflector assembly embodying the principles of the invention.
Fig. 13 is a cross-sectional side view of the deflector assembly taken along the lines "13"-"13" in Fig. 12.
Fig. 14 is a schematic plan view of the path in which the strand is deposited in the container assembly.
Fig. 15 is a schematic plan view of multiple layers of deposited strand in the container assembly.
Fig. 16A is a schematic plan view showing an alternative strand path.
Fig. 16B is a schematic plan view showing an alternate and preferred strand path.
Fig. 17 is a schematic plan view showing an alternative strand path.
Fig 18 is a schematic plan view showing several positions of the second deflection point and the rotating ring of the deflector assembly relative to the container assembly.
Fig. 19 is a schematic plan view showing an alternative motion pattern of the rotating ring of the deflector assembly relative to the container assembly.
Fig. 20 is an assembled perspective view of a container assembly embodying the principles of the invention.
Fig. 21 is an exploded perspective view of the container assembly of Fig. 20.
Fig. 22 is an exploded perspective view of the inner container of the container assembly of Fig. 20.
Fig. 23 is an exploded perspective view of the outer container of the container assembly of Fig. 20.
Fig. 24 is a side view of a side of the outer container of Fig. 23.
Fig. 25 is an end view of a side of the outer container of Fig. 23.
Fig. 26 is a plan view of a side of the outer container of Fig. 23.
Fig. 27 is a side view of the perforated sheet of the outer container of Fig. 23.
Fig. 28 is a top view of the bottom plate of the outer container of Fig. 23.
Fig. 29 is a cross-sectional side view of the bottom plate taken along the lines ''29''- "29" in Fig. 28.
Fig. 30 is a top view of a corner piece of the outer container of Fig. 23.
Fig. 31 is a side view of the corner piece of Fig. 30.
Fig. 32 is a schematic plan view showing the relationship between the corner piece posts, the outer container sides, and an inner container column.
Fig. 33 is a top view of a vibrating mechanism embodying the principles of the invention.
Fig. 34 is a cross-sectional side view of the vibrating mechanism taken along the line "34"-"34" in Fig. 33.
Fig. 35 is an end view of the vibrating mechanism of Fig. 33.
Fig. 36 is a schematic view of the strand collection process in accordance with the principles of the invention.
Fig. 37 is a side view of an auto splicer/cutter embodying the principles of the invention.
Fig. 38 is a front view of the auto splicer/cutter of Fig. 37.
Fig. 39A is a perspective view of the arm of the auto splicer/cutter of Fig. 37.
Fig. 39B is a side view of a portion of the auto splicer/cutter.
Fig. 40 is an end view of the arm of the auto splicer/cutter.
Fig. 41 is a side view of an embodiment of a gripper finger of the auto splicer/cutter of Fig. 37.
Fig. 42 is a top view of the gripper finger of Fig. 41.
Fig. 43 is a rear view of the gripper finger of Fig. 41.
Fig. 44 is a side view of an embodiment of another gripper finger of the auto splicer/cutter of Fig. 37.
Fig. 45 is a rear view of the gripper finger of Fig. 44.
Fig. 46 is a top view of the gripper finger of Fig. 44.
Fig. 47 is a side view of an embodiment of a finger mounting bracket of the auto splicer/cutter of Fig. 37.
Fig. 48 is a top view of the finger mounting bracket of Fig. 47.
Fig. 49 is a rear view of the finger mounting bracket of Fig. 47.
Fig. 50 is a front view of an embodiment of a strand guide pin of the auto splicer/cutter of Fig. 37.
Fig. 51 is a top view of the strand guide pin of Fig. 50.
Fig. 52 is a side view of an alternative embodiment of a sensor bracket.
Fig. 53 is a cross-sectional side view of the sensor bracket of Fig. 52 taken along line "53-53" of Fig..
Fig. 54 is a rear view of the sensor bracket of Fig. 52.
Fig. 55 is a bottom view of the sensor bracket of Fig. 52.
Fig. 56 is a front view of the cutting assembly of the auto splicer/cutter of Fig. 37.
Fig. 57 is a side view of the cutting assembly of Fig. 37.
Fig. 58 is a side view of the splicing assembly of the auto splicer/cutter of Fig. 37.
Fig. 59A is a side view of the splicer assembly of the auto splicer/cutter of Fig. 37.
Fig. 59B is a front view of the splicer assembly of Fig. 59A.
Fig. 60 is a cross-sectional side view of the splicer assembly of Fig. 59B taken along the line "60-60".
Figs. 61A-C are flowcharts outlining the steps of the auto splicer sequence of the auto splicer/cutter in accordance with the principles of the invention.
Fig. 62 is a flowchart outlining the steps of the auto cutter sequence of the auto splicer/cutter in accordance with the principles of the invention.
Fig. 63 is a perspective view of a container assembly with strands that have been spliced by the auto splicer/cutter_in_accordance with the principles of the invention.
Fig. 64 is a schematic view of strands that have been spliced by a manual splicer in accordance with the principles of the invention.
Fig. 65 is an exploded schematic view of the splice of Fig. 64.
Fig. 66 is a side view of the auto thread up system embodying the principles of the invention.
Fig. 67 is a front view of the auto thread up system of Fig. 66.
Fig. 68 is a plan view of the auto thread up system of Fig. 66.
Fig. 69 is a perspective view of an oscillating/drag idler arm embodying the principles of the invention.
Fig. 70 is a perspective view of an extension arm embodying the principles of the invention.
Figs. 71 and 72 are schematic side and end views of the auto thread up system when only the pull rolls engage the strand.
Figs. 73 and 74 are schematic side and end views of the auto thread up system after the extension arm idler has moved to its retracted position and pulled the strand.
Figs. 75 and 76 are schematic side and end views of the auto thread up system after the oscillating/drag idler has moved to its retracted position and engaged the strand with the attenuator.
Figs. 77 and 78 are schematic side and end views of the auto thread up system during the strand collection process.
Fig. 79 is a flowchart outlining the steps of the auto thread up sequence of the auto thread up system in accordance with the principles of the invention.
Fig. 80 is a schematic view of a full container assembly.
Fig. 81 is a schematic view showing the removal of the outer container from the strand package in accordance with the principles of the invention.
Fig. 82 is a perspective view of a strand package that is prepared for shipping in accordance with the principles of the invention.
Fig. 83 is a schematic view of a strand package that is being used by an end user.
Figs. 84A-B are flowcharts outlining the steps of the operating sequence of the strand collection system in accordance with the principles of the invention.
Fig. 84C is a functional block diagram of the control system embodying the principles of the invention.
Fig. 85 is a schematic view of the strand forming process with a roll for coupling the strands in accordance with the principles of the invention.
Fig. 86 is a front view of the roll for coupling strands embodying the principles of the invention.
Fig. 87 is an enlarged close-up perspective view of a portion of the roll of Fig. 86.
Fig. 88 is a schematic view showing the relative positions of the filaments and the roll at a point in time in accordance with the principles of the invention.
Fig. 89 is a schematic view showing the relative positions of the filaments and the roll when the roll has rotated 90° from its position in Fig. 88.
Fig. 90 is a schematic view showing the relative positions of the filaments and the roll when the roll has rotated 90° from its position in Fig. 89.
Fig. 91 is a schematic view showing bundles of filaments that have been linked by the roll of Fig. 86.
Fig. 92 is a schematic view of the sine traverse mechanism and the strand forming process in accordance with the principles of the invention.
Fig. 93 is a schematic plan view of the sine traverse mechanism of Fig. 92.
Fig. 94 is a schematic side view of the sine traverse mechanism of Fig. 92.
Fig. 95 is a schematic cross-sectional plan view of the sine traverse mechanism taken along lines "95"-"95" in Fig. 94.
Fig. 96 is a schematic perspective view of the bottom surface of a shoe of the sine traverse mechanism.
Fig. 97 is a cross-sectional side view of a shoe of the sine traverse mechanism taken along lines "97"-"97" in Fig. 96.
Figs. 98-101 are schematic plan views showing the relative positions of the shoes of the sine traverse mechanism during operation.
Figs. 102-105 are schematic side views showing the relative positions of the shoes of the sine traverse mechanism during operation.
Figs. 106-109 are schematic perspective views showing the relative paths of the planes of strand during the operation of the sine traverse mechanism.
Fig. 110 is a schematic view showing bundles that have been coupled by the sine traverse mechanism.
Fig. 111 is a schematic side view of a comb embodying the principles of the invention.
Fig. 112 is a perspective view of a tensioner embodying the principles of the invention.
Fig. 113 is a schematic side view of the tensioner in its threading position.
Fig. 114 is a schematic side view of the tensioner in its operating position.
Fig. 115 is a schematic view of an alternative embodiment of a strand collection system.
Fig. 116 is a schematic view of an alternative embodiment of a strand collection process.
Fig. 117 is a perspective view of an alternative embodiment of a deflector.
Fig. 118 is a side view of the deflector of Fig. 117.
Fig. 119 is a cross-sectional side view of the deflector of Fig. 117 taken along lines "119-119".
Fig. 120 is a perspective view of an alternative embodiment of a deflector.
Fig. 121 is a schematic top view of an alternative embodiment of a strand collection process.
Fig. 122 is a schematic side view of the strand collection process of Fig. 121.
Fig. 123 is a top view of an alternative embodiment of a deflector.
Fig. 124 is a side view of the deflector of Fig. 123.
Fig. 125 is a cross-sectional top view of the deflector of Fig. 123 taken along lines "125-125".
Fig. 126 is a top view of an alternative embodiment of a deflector.
Fig. 127 is a cross-sectional top view of the deflector of Fig. 126.

### DETAILED DESCRIPTION AND PREFERRED EMBODIMENTS OF THE INVENTION

A strand may be formed from a group of filaments or fibers which are typically attenuated from a source of material. For glass strands, molten glass is delivered to a bushing that is electrically heated to maintain the glass in its molten state. The glass is pulled or attenuated as filaments from orifices in a bottom plate of the bushing. The filaments may be gathered into one or more strands by using a gathering shoe that has the same number of grooves as the desired number of strands. A comb-like structure may be used instead of the gathering shoe to separate the filaments into strands.

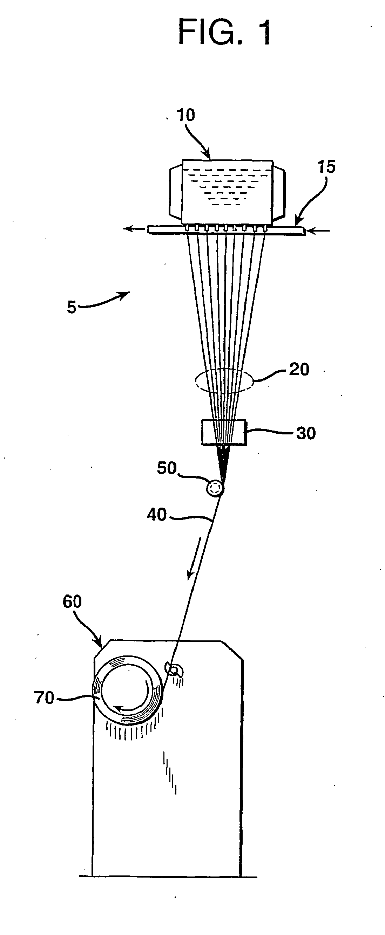

A conventional filament forming system is shown in Fig. 1. The filament forming system 5 includes a bushing 10 having a number of orifices through which a plurality of streams of molten glass are discharged. The orifices may be extended by hollow tips.

Glass filaments 20 are attenuated from the bottom plate of bushing 10 by a winding apparatus 60. Since the bushing 10 operates at high temperatures, a cooling system 15 is used to control the temperature of the bushing bottom plate and prevent any variance in the filaments due to a temperature gradient. As the artisan will appreciate, cooling systems may use air and/water to control the temperature.

The filaments 20 pass over a size applicator 30 which applies a liquid coating or size material to the filaments 20. The sized filaments 20 may be split into discrete bundles by a guide resembling a comb having a plurality of projections or teeth separating the filaments.

A downward force is applied to pull the filaments 20 from the bushing 10. In the illustrated forming system, filaments 20 are attenuated from the bushing 10 by a winding apparatus 60 that winds the filaments 20 in the form of a strand 40 around a collet to form a cylindrical package 70 as shown in Fig. 1. A gathering shoe 50 may be used to form the strand 40.

With these general principles identified, selected implementations of these principles in currently preferred embodiments are set forth below.

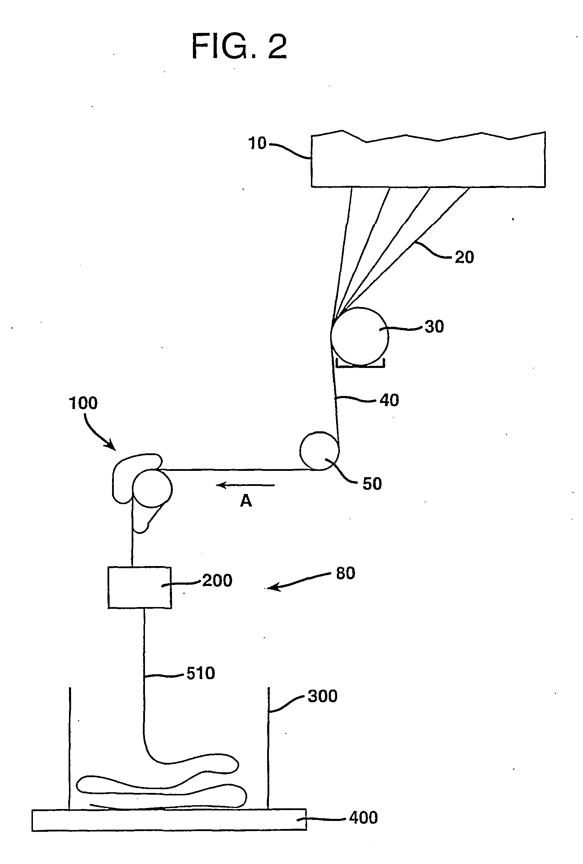

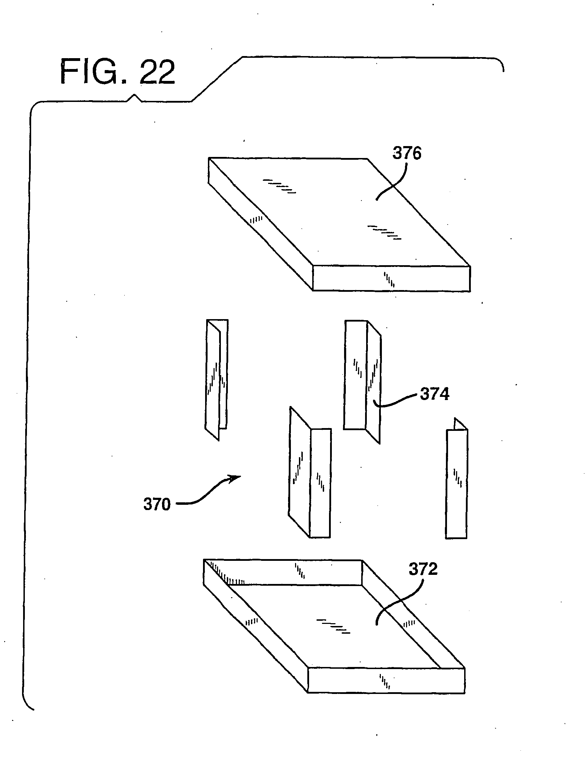

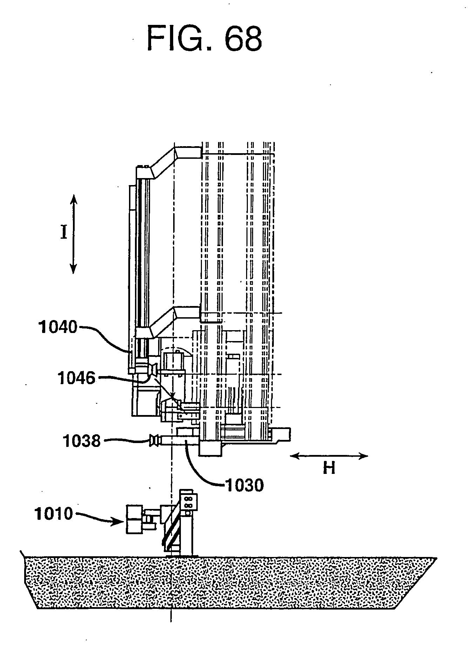

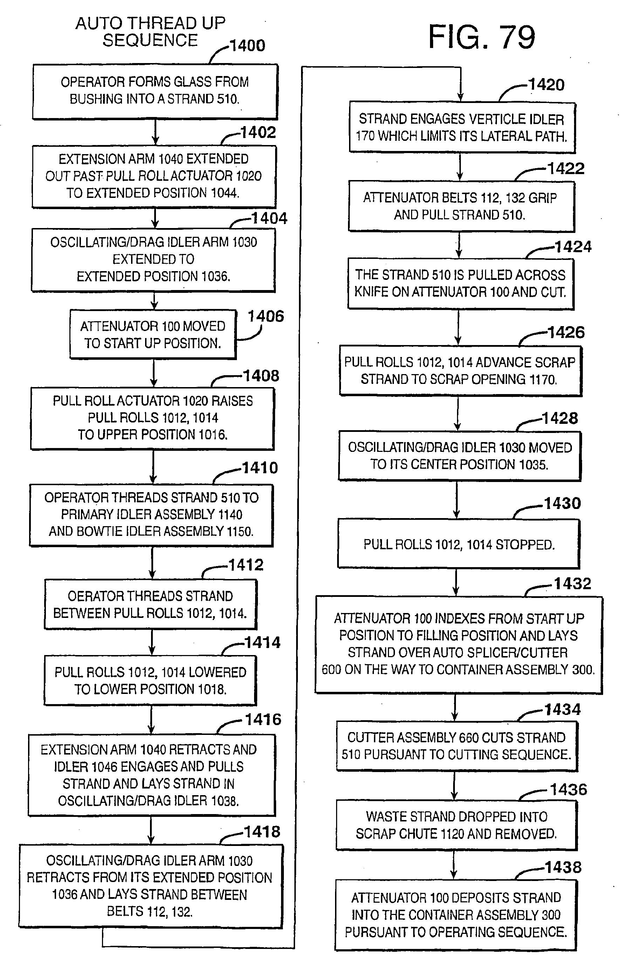

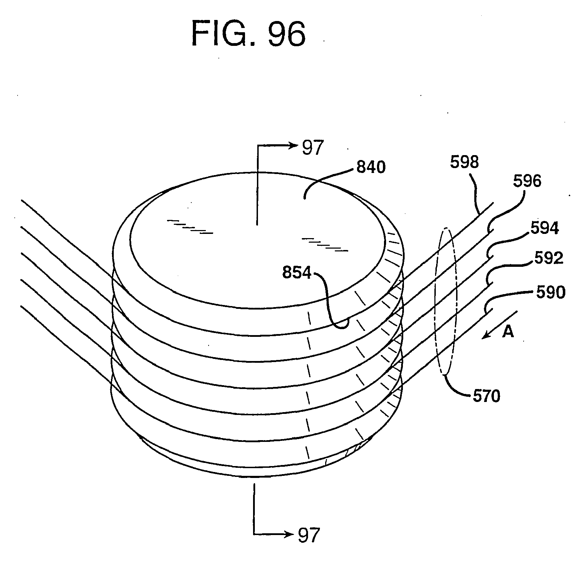

A strand collection system embodying the principles of the invention is shown in Figs. 2-96. The collected strand may be any type of material, preferably glass.

### Overview

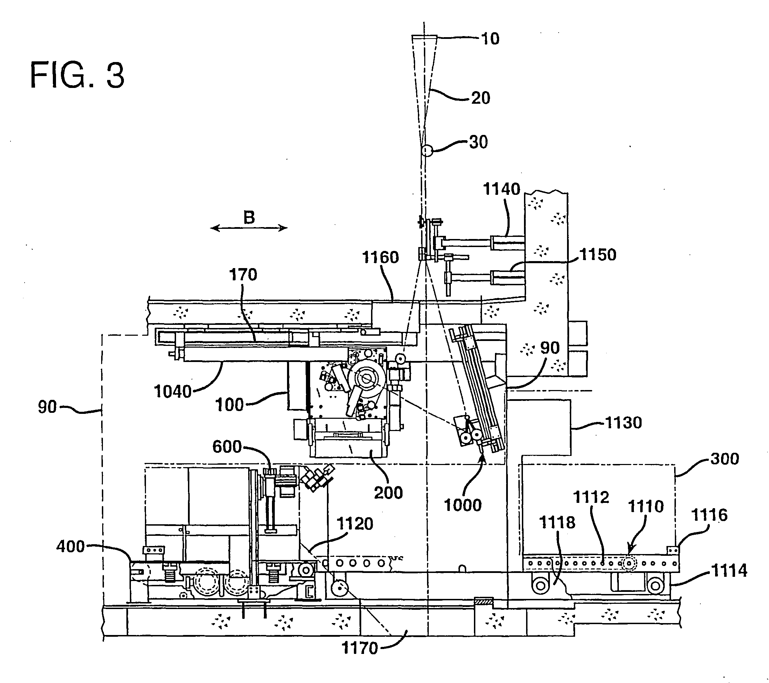

As shown in Figs. 2 and 3, the strand collection system 80 includes a bushing 10, an attenuator 100, a deflector assembly 200, a container assembly 300, and a vibrating mechanism 400. The system 80 also includes an auto thread up system 1000 and an auto splicer/cutter 600.

The strand collection system is split between an upper level and a lower level as shown in Fig. 3. The filament forming process which includes the bushing 10 and size applicator 30 is typically located on the upper level. The majority of the strand collection system 80 is typically located below the filament forming equipment. The filament forming level is maintained under a slight pressure during operation. Since the filament forming and strand collection levels are in communication to allow the strand to pass between the levels, the strand collection level must be maintained under pressure as well.

The strand collection system includes a housing 90 that encapsulates its components. The housing is a shield that enables the operators to safely view the strand collection process. Also, the housing enables the strand collection process to operate under a pressure close to that of the upper level.

The housing 90 extends from the linear actuator assembly 170 to the floor of the lower level and surrounds the attenuator 100, the deflector assembly 200, the vibrating mechanism 400, and the auto splicer/cutter 600. The housing 90 includes an aperture that enables the strand to enter from the upper level. The housing is made of plastic or plexiglass.

The auto thread up system 1000 threads a strand from bushing 10 and idler assemblies 1140, 1150 to the attenuator 100, which attenuates the filaments 20 from the bushing 10 along the direction of arrow "A" in Fig. 2. The deflector assembly 200 prepares and directs the strand prior to its collection in the container assembly 300. The container assembly 300 collects the randomly laid strand 510 in the form of a bulk collection package. Vibrating mechanism 400 periodically vibrates the container assembly 300 while it collects the strand to shift and settle the strand.

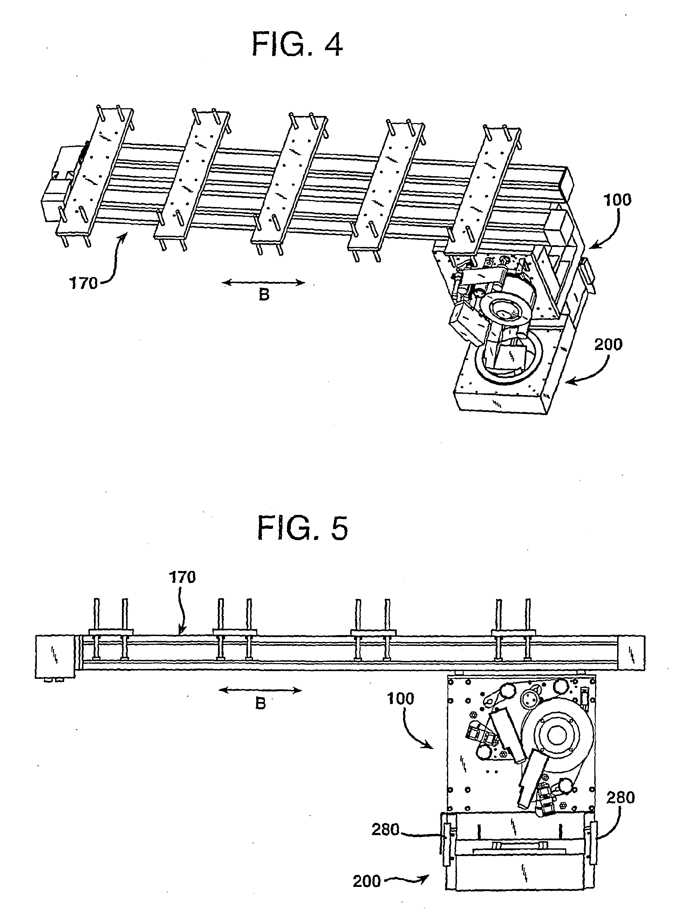

The attenuator 100 and deflector assembly 200 are coupled together and mounted to a linear actuator assembly 170 for movement above the container assembly along the arrow "B" in Fig. 3. The linear actuator assembly 170 includes a linear actuator from which the attenuator 100 is suspended as shown in Figs. 4-5. The attenuator 100 and deflector assembly 200 have a start up position above a scrap opening 1170 as shown in Fig. 3 and a filling position above the container assembly 300.

The strand collection system is operated by a master control system. The control system includes a programmed logic circuit (PLC) processor and four servo drive systems that are used to automate the strand collection process. The PLC processor includes control logic, which can be, for example, computer software code.

Each of the servo drive systems includes its own programmed code. The servo drive systems control the traversing of the attenuator, the rotating of the deflector assembly, the operation of the auto cutter/splicer, and the oscillating arm of the auto thread up system. The PLC processor sends output signals to a particular servo drive system to energize parts of the program for that servo drive system.

The other components of the system are moved by air actuated cylinders or motors, such as dc drive motors. The PLC processor controls the operation of the cylinders and the motors.

### Attenuator

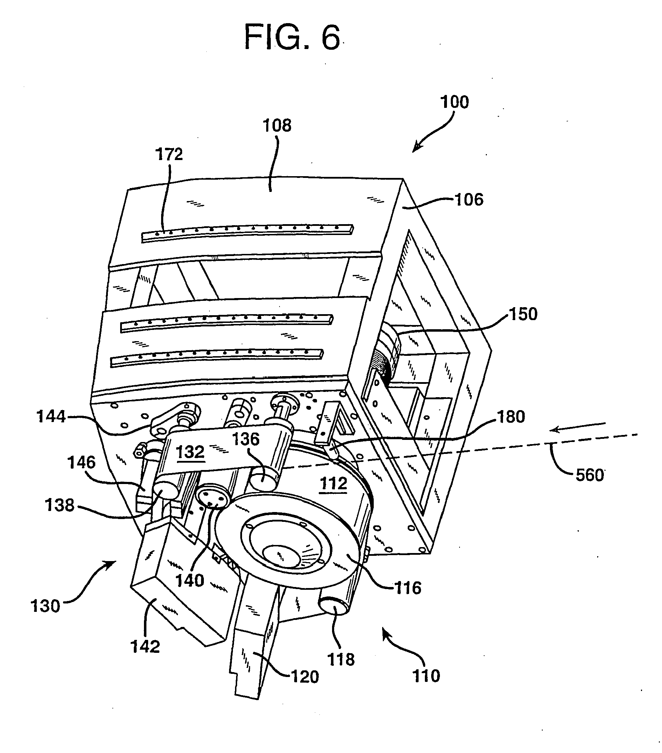

An attenuator 100 embodying the principles of the invention is shown in Figs. 6-11. The attenuator 100 includes a frame 106, a drive wheel assembly 110 and an idler wheel assembly 130. The frame 106 includes an upper surface 108 with bars 172 which enable the attenuator 100 to be suspended from the linear actuator. The attenuator 100 is mounted for reciprocal, traverse movement above the container assembly 300. The position of the attenuator 100 is monitored and controlled by a control system which operates the linear actuator assembly 170.

Each of the wheel assemblies 110, 130 includes a flexible, endless web or belt 112, 132, respectively. The belts 112, 132 grip a strand and rotate during the strand collection process to attenuate the filaments 40 forming the strand from the bushing 10. The attenuator 100 imparts an initial velocity to the strand with a forming moisture ranging from completely dry to completely saturated.

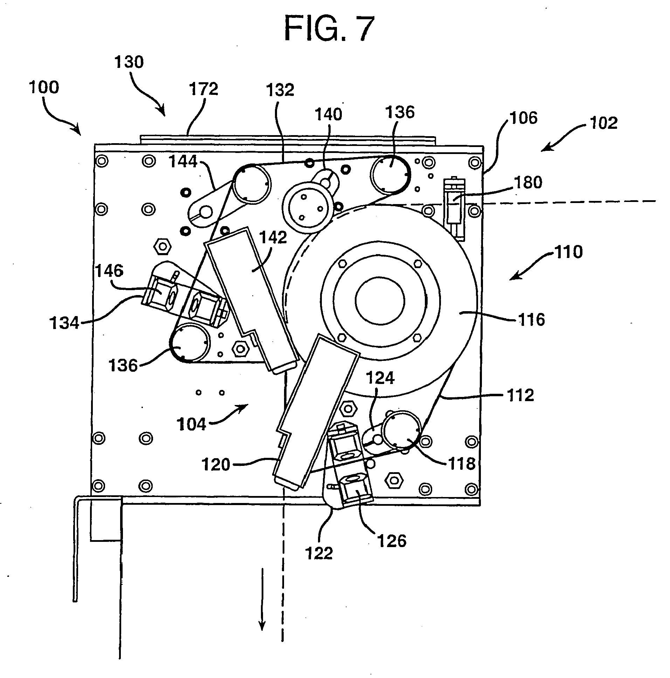

Drive wheel assembly 110 includes a drive wheel 116 that is driven by motor 150 that is mounted in frame 106. Belt 112 directly contacts and is rotated by drive wheel 116. The linear velocity of belt 112 is equivalent to the peripheral speed of the drive wheel 116. Drive wheel assembly 110 includes a nose bar 120 and a pivoting idler 118 around which belt 112 travels as shown in Fig. 7.

Idler wheel assembly 130 includes a stationary idler 136, a pivoting idler 138, a single pressure roll assembly 140, and a nose bar 142 around which belt 132 travels as shown in Fig. 7. Since belt 132 frictionally engages belt 112, belt 132 is driven by and rotates at substantially the same velocity as belt 112. The idler wheel assembly 130 includes a single pressure roll assembly 140 with a rolling surface that maintains belt 132 in contact with belt 112. An actuator 154 is used to pivotally adjust the position of the pressure roll assembly 140. Each of the idlers is a urethane coated roll.

A strand is pinched between the belts 112, 132 adjacent entry region 102. The path of the strand is shown as a dotted line in Fig. 7. The strand is discharged from the attenuator 100 adjacent the exit region 104 and travels to the deflector assembly 200. As the strand leaves the attenuator 100, the linear velocity of the strand is equal to the linear or peripheral velocity of the belts 112, 132.

As previously discussed, a liquid, preferably aqueous, size material is applied to the strand before it reaches the attenuator 100. The surface tension of the size material on the strand causes the strand to tend to adhere to the belts 112, 132. In order to separate the strand from the belts 112, 132 and direct it toward the container assembly 300, the belts 112, 132 change direction sharply so the strand momentum overcomes the surface tension of the size material.

As shown in Fig. 7, the idler wheel assembly belt 132 separates from the drive wheel assembly belt 112 upstream of the location where belt 112 changes its direction. The paths of belts 112, 132 change directions by an angle of approximately 90° adjacent the exit region 104. The angles may be varied so long as the strand momentum overcomes the surface tension of the size material.

If some filaments do not separate from the belts 112, 132, the filaments or the entire strand will "roll wrap" or wrap around one of the belts 112, 132. If one of the belts breaks or a "roll wrap" occurs, the torque on the drive wheel assembly 110 will change. The torque is monitored by a control system and any significant change in torque is typically indicative of a problem.

Nose bars 120, 142 are similar in structure and for simplicity only nose bar 120 is discussed in detail. Each nose bar 120, 142 includes a radiused surface that is mounted on bearings. The radiused surfaces rotate with the belts and have a diameter of approximately 0.5 in. (1.3 cm). The surface rotates with the belt 112 and separates the strand from the pulling surface of the belt 112 by subjecting the belt 112 to a sharp change in direction that the strand cannot follow. The radius of the nose bar surface can be increased with a profiled belt, thereby allowing lower rotational speeds and reduced stresses in the attenuator 100. The throw-off radius of the surface is made small enough for the strand momentum to overcome the surface tension of the size material.

Each nose bar is mounted on a base that resembles an upside-down triangle. The bottom of the triangle is a pivot point that is rotatably mounted to the surface of the attenuator 100. The nose bar pivots about the pivot point as controlled by the control system to control the tracking of the belts, as will be discussed in greater detail below.

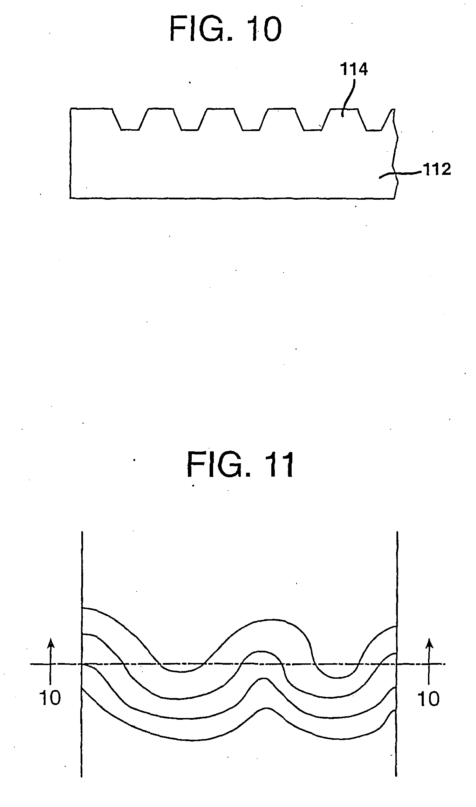

Each belt 112, 132 includes serrations or teeth 114 as shown in Figs. 10-11. The serrations reduce the contact area between the attenuated strand and the surfaces of the belts as compared to belts with smooth surfaces. By minimizing the contact area, the tendency of filaments in the strand to wrap around the belts 112, 132 is reduced.

A profiled belt can transport a much wetter strand than a smooth belt because the reduced contact area minimizes the strand adhesion caused by the surface tension of the size material. Profiled belts can attenuate strands with a moisture content ranging from zero moisture to a complete aqueous saturation.

The serrations 114 are preferably curved or non-linear instead of straight to prevent the meshing of the belts which could damage filaments. The serrations may also be non-symmetrical on the belts.

The top surface or land of the serrations 114 is flat to reduce the stresses on the glass filaments in the strand as shown in Fig. 11. The width of the top surfaces of the serrations should be greater than the distance between the bottoms of the serrations to prevent meshing of the belts. The height of the serrations 114 is also referred to as the belt profile depth. Preferably, the belt profile depth is greater than the maximum film thickness of the size chemistry on the filaments or the strand.

The width of the belts 112, 132 is related to the number of strands that are to be pulled simultaneously by the attenuator 100. The belt is preferably rubber, but may be metal, urethane, plastic links, or coated with silicone or polytetrafluoroethylene, or other suitable non-stick material. An example of a typical belt has a width of 4.5 in. (11.4 cm) and a thickness of 0.076 in. (0.2 cm).

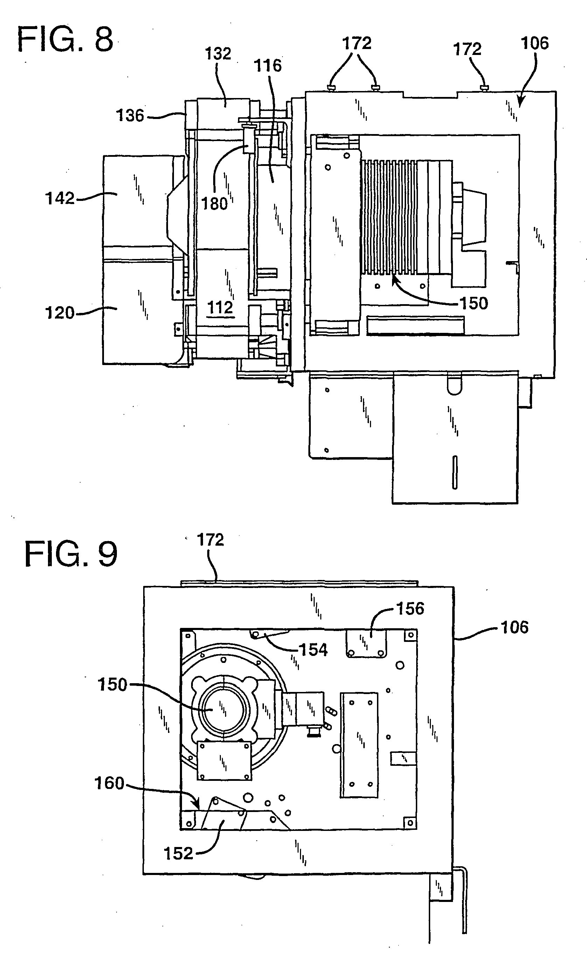

The attenuator 100 includes spray heads (not shown) for spraying an aqueous cleaning spray such as water on the belts 112, 132 to flush out built-up size material on the belts. Water is sprayed at any location on the belts to keep the size from the strand from drying on the belts 112, 132. If the size dries and becomes tacky, then filaments from the strand will tend to wrap around the belts 112, 132. The water is continuously sprayed during operation of the strand collection system. A water spray valve cover 160 is shown in Fig. 9. A spray head is used for each belt and each spray head sprays approximately 0.5 gal./hr. (0.13 1./hr.) of water.

The tracking and tension of each belt is sensed and adjusted as necessary during the strand collection process. Each belt has a natural tendency to climb to a high side of its path or in other words, take the shortest path. The drive wheel and idler wheel assemblies include belt sensors 126, 146, respectively, as shown in Fig. 7. Belt sensors 126, 146 function as belt guiding mechanisms and sense whether a belt is moving laterally with respect to its direction of motion.

Belt sensors 126, 146 are ultrasonic sensors and are mounted on belt sensor brackets 122, 134. Belt sensors are coated with water resistant coating so they may withstand the strand collection process. When a belt sensor senses that a belt is moving laterally, the corresponding nose bar is moved to change the tracking of the belt. The appropriate nose bar is pivoted about its pivot point to change the tracking of the belt.

The pivoting idlers 118, 138 of the drive wheel and idler wheel assemblies 110, 130 may be moved to change the tension of the belts. Each idler 118, 138 is mounted to a pivoting idler mount 124, 144 that is pivoted by actuators 152, 156, respectively. The mounts are pivoted outwardly away from the drive wheel 116 to increase the tension of the belts.

The control system operates the motor 150 of the drive wheel 116 of the attenuator 100, controls the speed of the attenuator belts 112, 132, and controls the position of the attenuator 100 along the linear actuator assembly 170. The control system also detects when the attenuator 100 fails to move and controls the tensioning of the belts 112, 132. The movement of the attenuator 100 along the linear actuator assembly 170 is controlled by a servo drive system. The servo drive system includes logic, such as a software code, that is activated by an output signal from the processor. An output signal related to the traversal of the attenuator 100 may be generated when the belts are at operating speed and the attenuator 100 is attenuating a strand. Another output signal may be generated by the processor when the container assembly 300 is full and the attenuator 100 should move to the end of the full container assembly 300.

The attenuator 100 includes a vertical idler 180 that is mounted to the frame 106 and used during the auto start up process to limit the lateral movement of the strand. The vertical idler 180 will be discussed in greater detail below.

As the artisan will appreciate, there are many possible variations on the embodiment of the attenuator 100 described above that would be consistent with the principles of the invention. Some of the modifications are identified below.

The idler wheel assembly 130 may include a drive wheel that is driven by motor 150 or a separate motor. A clutch may be used to ensure that belts 112, 132 are driven at the same speed. Driving the belt 132 of the idler wheel assembly 130 eliminates the reliance on the frictional contact between the belts 112, 132 to drive belt 132.

Wider belts may be used to increase the surface contact area between belts and increase the frictional contact between them.

The idlers of the drive wheel assembly and the idler wheel assembly may be crowned to improve the tracking of the belts.

The belts may be spliced instead of formed as endless loops.

The serrations 114 on the belts 112, 132 may be pointed instead of having a flat surface. Also, the serrations may be straight and perpendicular to the belt direction. The size and profile of the serrations may be varied as well.

A pair of rollers or a rotating drum may be used as an attenuator instead of the dual belt system at lower attenuation speeds.

The angle at which the belts of the attenuator change direction may be adjusted to be either less than or more than 90°. Any angle that provides a change in direction that causes the strand momentum to overcome the surface tension of the size material is acceptable.

The belts may be cleaned by a variety of methods other than water spraying, such as using brushes or ultrasonic cleaning methods.

### Deflector Assembly

The strand collection system 80 includes a deflector assembly. The deflector assembly 200 reduces the velocity of the strand and directs the strand into the container assembly 300. The deflector assembly 200 is coupled to the attenuator 100 for movement therewith as shown in Figs. 4 and 5. The attenuator 100 and the deflector assembly 200 traverse above the container assembly 300 as previously discussed. The deflector assembly 200 is coupled to the attenuator 100 by mounting clips 280 and mounting bracket 254.

As the strand is discharged from the attenuator 100, its linear velocity is equal to the velocity of belts 112, 132. If the strand has a high velocity, the inertia or momentum of the strand is high which makes bulk collection of the strand difficult. When the strand enters the container assembly 300 with a high velocity, the strand may fluff or separate upon impact with the previously deposited strand resulting in damage to the strand or penetrate previously deposited layers of strand, resulting in difficulties during pull out. The deflector assembly 200 absorbs the inertial forces of the strand prior to its collection in the container assembly 300.

The deflector assembly 200 introduces at least one dimension to the area over which the strand is deposited, rather than a single line onto which the strand always falls.

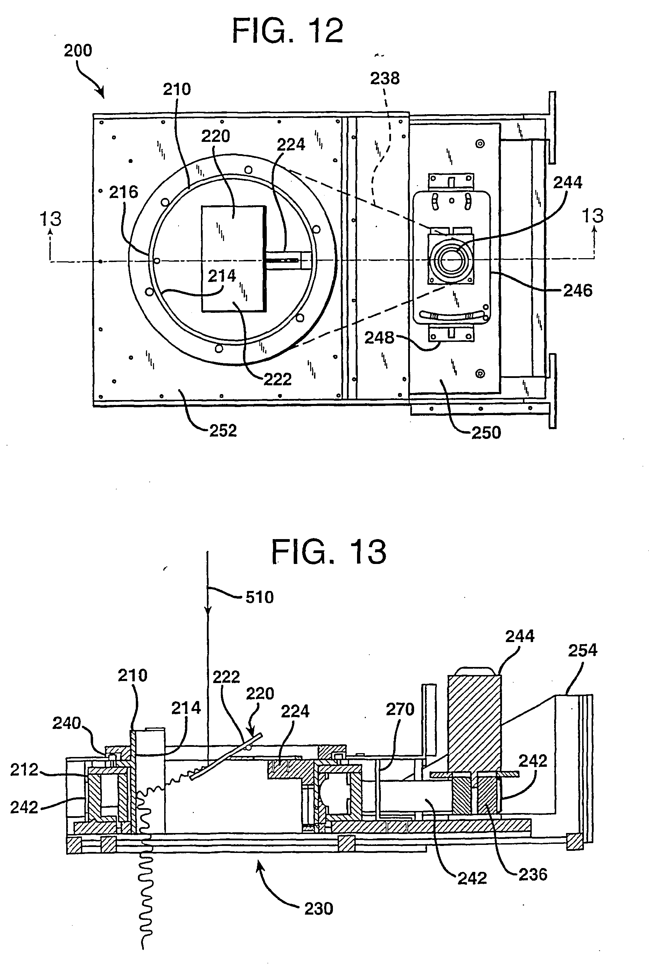

One implementation of a deflector assembly 200 is shown in Figs. 12-13. The deflector assembly 200 includes a ring 210 that is rotatably mounted in seal plate 252. Bearings. 240 are positioned between the ring 210 and the seal plate 252. The ring 210 also rests on bearings for rotation as well. The ring 210 rotates about a vertical axis that is incident with or substantially parallel to the path of the strand as it exits the attenuator 100. Seals are provided around the bearings 240 to prevent debris from interfering with the rotation of the ring 210.

The deflector assembly 200 includes a motor 244 that drives a belt 242 to rotate ring 210. The motor 244 rotates pulley 236. A base plate 250 is fastened to the seal plate 252 as shown in Fig. 12. A motor mounting plate 246 is fastened by screws or other type of fastener to the base plate 250 via a motor plate base 248. The motor 244 is mounted on the motor mounting plate 246. The motor 244 is a servo motor or high level position drive.

Belt 242 extends around pulley 236 and the rotating ring 210. The belt path 238 is shown by dotted lines in Fig. 12. The outer surface 212 of the ring 210 is toothed for engagement with the belt 242. Belt 242 is an endless timing belt that includes teeth on its outer surfaces. Belt 242 may be manufactured by Goodyear or Dayton Belt. The belt 242 is preferably a Kelvar reinforced belt with zero stretch, however any suitable material may be used.

The deflector assembly 200 includes a deflection chamber 230 through which the strand from the attenuator 100 passes. The deflection chamber 230 is sized such that its diameter is slightly smaller than the width of the container assembly 300 into which the strand is directed.

The deflector assembly 200 includes a deflector plate 220 with a primary deflector surface 222. The deflector plate 220 is mounted on a deflector mount 224 to an inner surface of the deflection chamber 230. A portion of the inner surface of the deflection chamber 230 functions as a secondary deflector surface 214.

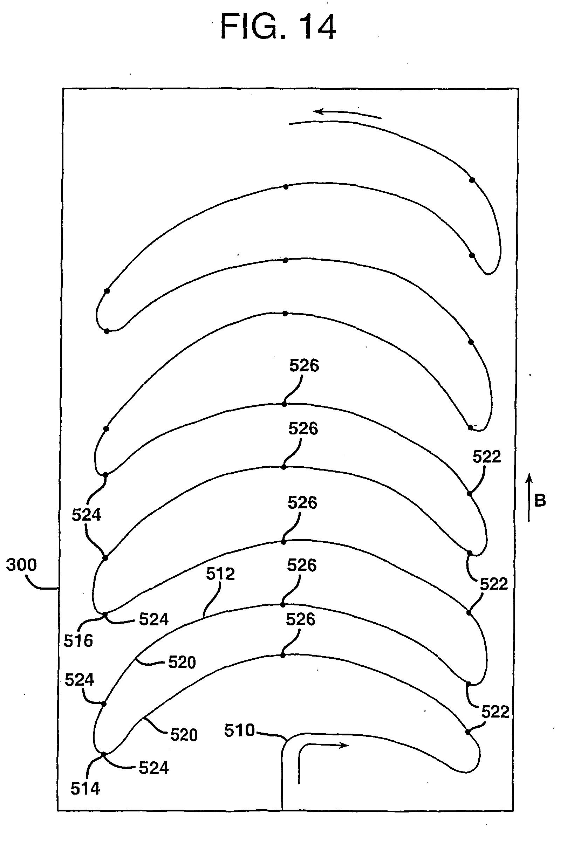

The deflector plate 220 is mounted at an angle with respect to a horizontal plane as shown in Fig. 13. By mounting plate 220 at an angle, the strand is deflected off the primary deflector surface 220 toward the secondary deflector surface 214. The angle should be sufficient to deflect the strand from its path 560, but small enough to prevent crimping or fluffing of filaments in the strand. The angle is directly related to the initial velocity of the strand. As the attenuating velocity of the strand increases, the energy that must be removed from the strand increases. This can be achieved by decreasing the angle at which the deflector plate is mounted as the initial velocity of the strand increases. The range of the angle is between 10° to 70°, and preferably approximately 45°.

The primary deflector surface 222 is the upper surface of the plate 220 shown in Figs. 12 and 13. The primary deflector surface 222 is textured to reduce the tendency of the strand to adhere to the deflector plate 220 due to the surface tension of the size material on the strand as compared to a smooth contact surface. A suitable material for primary deflector surface 222 is commercially available under the trade Rigidtex^{™}, which is manufactured by Rigidized Metals Corp. in Buffalo, NY.

A portion of the inner surface of the rotating ring 210 forms the secondary deflector surface 214. Surface 214 extends over the portion of the inner surface of the ring 210 opposite the deflector mount 224 as shown in Figs. 12 and 13. Surface 214 is also suitably formed of Rigidtex^{™}. The strand will engage the center of the surface 214 during operation. The engagement point 216 is shown in Fig. 12.

The strand from the attenuator 100 initially engages the primary deflector surface 222 at an initial velocity. Impact with the primary deflector surface 222 reduces the strand's velocity. Since the strand does not accumulate in the deflection chamber, the mass flow rate into the chamber equals the mass flow rate out of the chamber. Therefore, the product of the strand velocity and the strand's linear density at a point in the strand's path before impact with the first deflector surface is equal to the product at a point after the deflector surfaces. Since the strand's velocity is lower after impact, the linear density is higher. Thus, the strand's shape changes from linear to serpentine upon impact with the deflectors, as shown in Fig. 13.

The strand is deflected off primary deflector surface 222 and is directed toward the secondary deflector surface 214. The strand engages the secondary deflector surface 214 and drops into the container assembly 300. The overall velocity of the strand is reduced upon impact of the strand with the second deflector surface 214. The wavy or serpentine shape of the strand increases its amplitude or severity after the second deflection as shown in Fig. 13. As the strand travels between the primary and secondary deflector surfaces, gravity will cause the strand to slope downwardly. The strand thus impacts the secondary deflector surface 214 at an angle of approximately 45°, as shown in Fig. 13. Any remaining initial strand velocity is essentially eliminated and the strand drops downwardly into the container assembly 300 under the force of gravity. The strand 510 is shown in Fig. 13.

As the ring 210 rotates, the primary and second deflector surfaces 222, 214 rotate as well. The tangential velocity of the ring 210 is between 10 and 100 ft./min. (33 and 330 m./min.), and preferably 40 ft./min (131 m./min.).

The position of the deflector plate 220 is controlled by a control system that also determines when the deflector assembly 200 fails to operate. The motor that is used to rotate the rotating ring 210 is part of a servo drive system. The servo drive system includes logic, such as a software code, that is activated by an output signal from the processor. An output signal related to the rotation of the rotating ring 210 may be generated when the attenuator 100 and deflector assembly 200 begin traversing above the container assembly 300. Another output signal may be generated by the processor when the attenuator 100 and the deflector assembly 200 reach an end of the container assembly 300 and begin their traversal in the opposite direction.

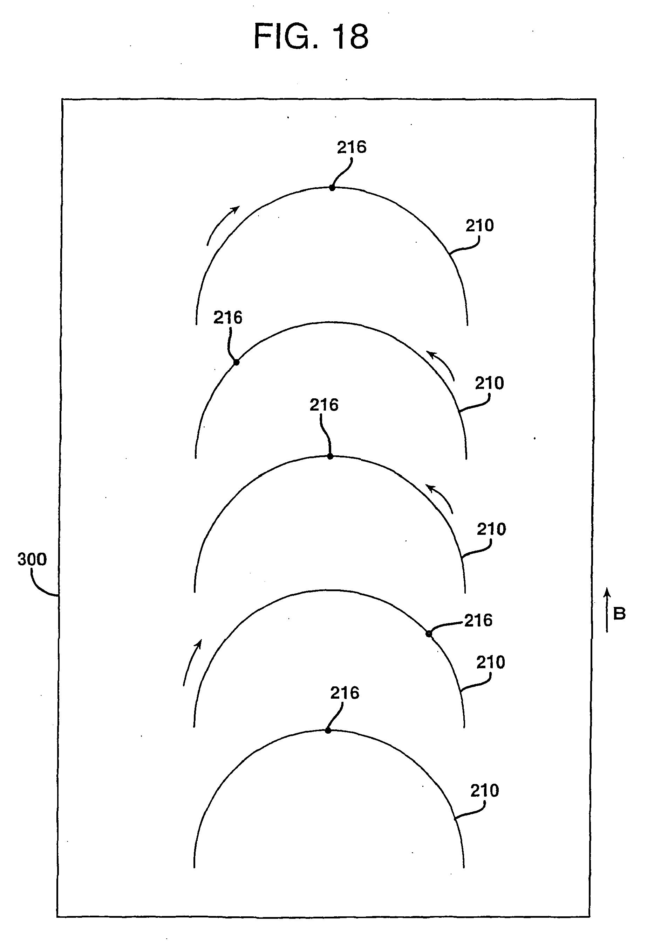

As previously discussed, the attenuator 100 and the deflector assembly 200 traverse above the container assembly 300. The movement of the ring 210 will be discussed in reference to Figs. 14-19. Figs. 14-17 show different patterns of strand in the container assembly 300. Figs. 18-19 show different rotation patterns of the rotating ring 210.

The attenuator 100 and deflector assembly 200 move above the container assembly 300 in the direction of arrow "B". When the attenuator 100 and deflector assembly 200 reach one end of the container assembly 300, the deflection chamber 230 turns around and the attenuator 100 and deflector assembly 200 traverse to the other end. The traversing pattern continues until the container assembly 300 is filled.

To achieve even distribution of the strand in the container assembly 300, the container assembly 300 and the exit point of the strand from the attenuator 100 move relative to one another -- otherwise the strand will be deposited on a single point in the container assembly 300. The exit point may be moved with respect to the container assembly 300, which is held fixed. Alternatively, the container assembly 300 may be moved and the exit point fixed. As a further alternative, both the exit point and the container assembly 300 may be moved.

In the illustrated embodiment, the exit point of the strand moves relative to the container assembly 300. The attenuator 100 and the deflector assembly 200 move along the longitudinal direction of the container assembly 300 in the directions of arrow "B" to distribute the strand along the length of the container. By rotating the ring 210 and the deflector plate 220, the stand is distributed laterally in the container. The strand may be deposited in a variety of pattems, such as arcuate and circular, as shown in Figs. 14-17, which will be discussed in greater detail below.

During operation, the rotating ring 210 rotates through a 90° arc symmetric about the axis of movement of the attenuator 100 and deflector assembly 200 (the direction denoted by arrow "B"). Initially, the ring 210 is oriented so that the deflector plate 220 faces in the direction of arrow "B". As the attenuator 100 and deflector assembly 200 move in the direction of arrow "B", the ring 210 oscillates through the 90° range of motion. The ring 210 continues this oscillation until the attenuator 100 and deflector assembly 200 reach the end of the container assembly 300. The ring 210 is then rotated so that the deflector plate 220 faces the opposite end of the container assembly 300.

The 90° range of movement is illustrated in Fig. 18. Secondary deflection point 216 on the rotating ring 210 is shown to indicate the range of rotation of the rotating ring 210. Since the deflector plate 220 is mounted to the ring 210, the plate 220 moves in a similar pattern.

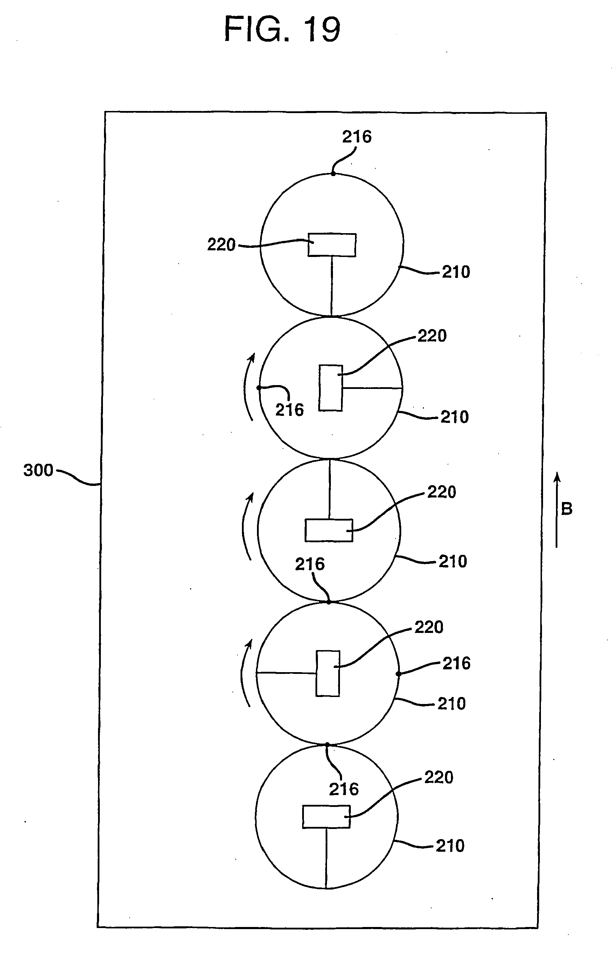

An alternative rotation cycle is shown in Fig. 19. The rotating ring 210 rotates in a complete circle as the attenuator 100 and deflector assembly 200 advance along the container assembly 300.

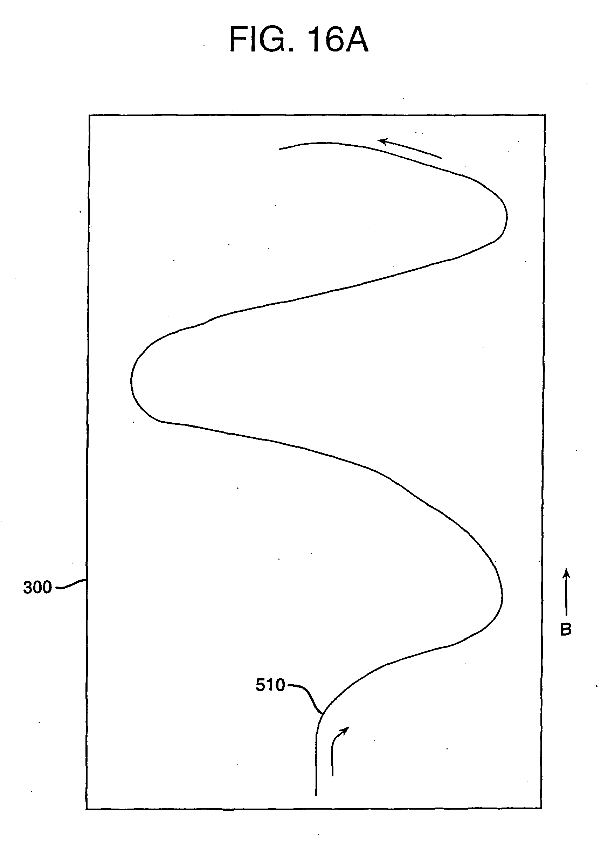

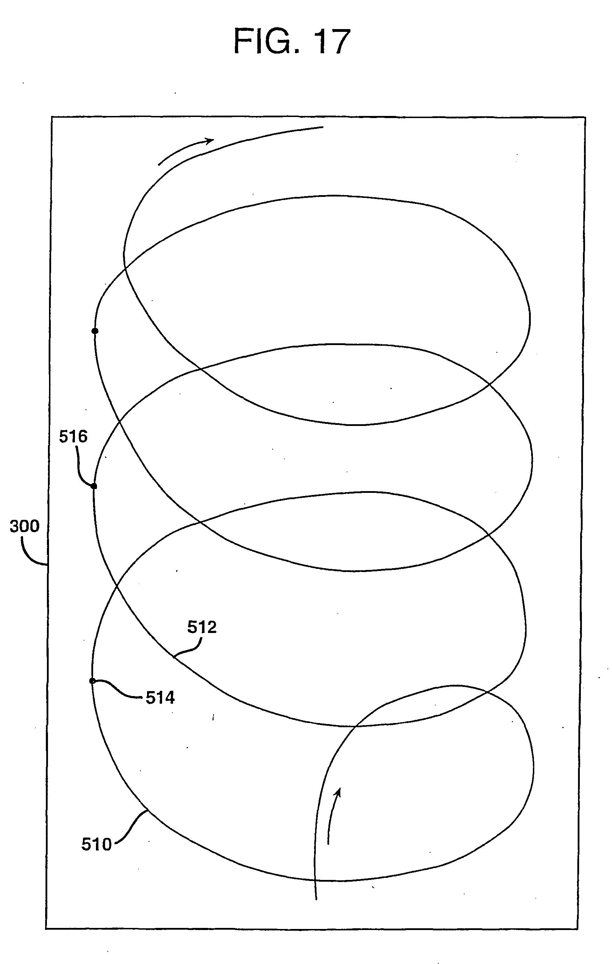

The patterns of strand 510 shown in Figs. 14-17 will now be discussed. When the rotating ring 210 travels in its 90° cycle, the strand is deposited in a cyclic pattern. The variables that affect the strand pattern are the rotational speed of the ring 210, the rotational pattern of the ring 210, and the movement of the attenuator 100 and deflector assembly 200 relative to the container assembly 300. If the ring 210 rotates at a relatively high speed while the attenuator 100 advances at a relatively low speed, the resulting strand pattern will be similar to that shown in Fig. 14. If the rotational speed of the ring 210 is reduced and the axial advancement speed held constant, the resulting strand pattern will be similar to that shown in Fig. 16A. If the rotation of the ring 210 is a full circle instead of an arc, a different strand pattern is achieved as shown in Fig. 17.

Referring to Fig. 14, the strand 510 is deposited in a serpentine pattern of a series of arcs 520 that are continuously connected. Each arc 520 includes end points 522, 524 and a center point 526. Each arc 520 is representative of the path of the strand as the rotating ring 210 rotates from its 45° to the right position to its 45° to the left position.

The arcs 520 are continuously connected to form loops 512. Each loop 512 includes a start point 514 and an end point 516 and is considered as a full cycle of movement of the rotating ring 210.

The loops 512 shown in Fig. 14 are referred to as nested loops. This nesting arrangement exists with each of the arcs 520 as well. Either one or both of the end points 522, 524 of an arc 520 is positioned behind the center point 526 of the previous arc 520. The term "behind" means that the end point is on the side of the center point 526 in the direction opposite to the traversing direction of the attenuator 100 and deflector assembly 200.

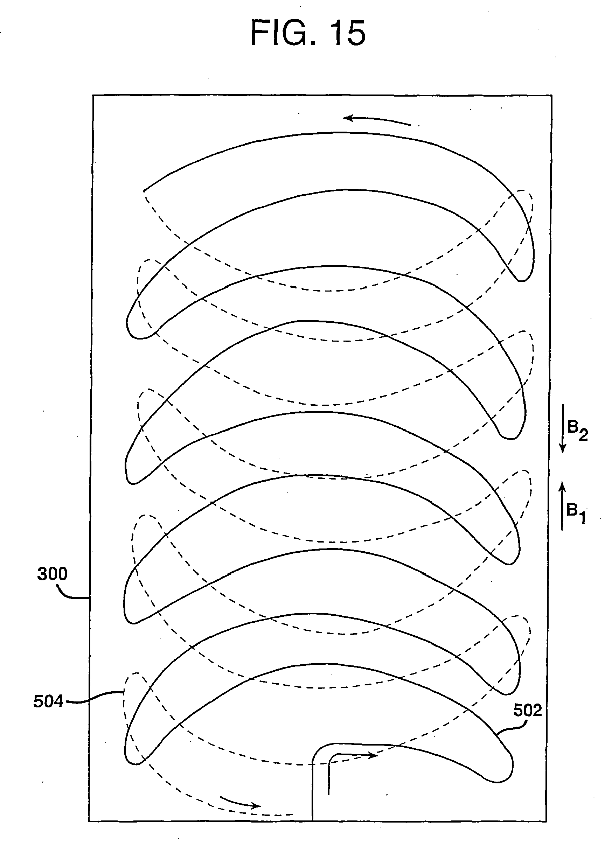

As the attenuator 100 and the deflector assembly 200 traverse in the direction of "B1" in Fig. 15, a first layer 502 of strand 510 is deposited in the container assembly 300. Layer 502 is shown as a solid line. As the attenuator 100 and the deflector assembly 200 traverse in the direction of "B2", a second layer 504 of strand 510 is deposited in the container assembly 300. Layer 504 is shown as a dotted line. Additional layers of strand 510 are deposited as the attenuator 100 and the deflector assembly 200 traverse. Each layer of strand is substantially parallel (along the vertical axis of the container assembly 300) to the preceding layer or layers of strand.

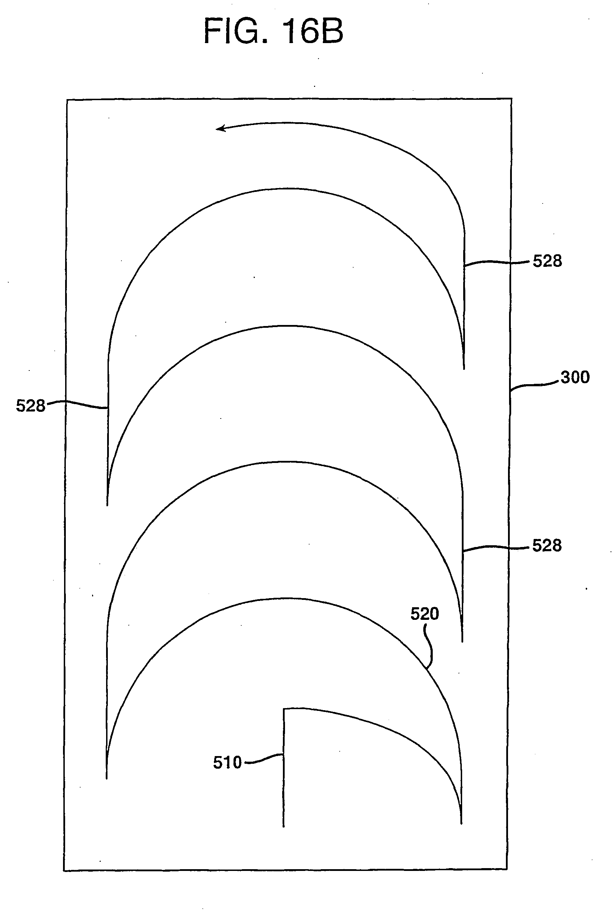

An alternative and preferred pattern of strand is shown in Fig. 16B. The rotating ring 210 rotates in a 180° cycle. Also, the rotating ring 210 pauses when it reaches the end of its movement on either side of the deflector assembly 200. Since the ring 210 pauses while the attenuator 100 and deflector assembly 200 continue to advance above the container assembly 300, the strand is deposited in a straight line or linear portion 528. The linear portion 528 connects the arcs 520. The ring 210 is paused for a second when it reaches its travel end points.

In this alternative embodiment, the attenuator 100 pauses when it reaches an end of the container assembly 300. The rotating ring 210 of the deflector assembly 200 continues to rotate while the attenuator 100 remains in place. The strand 510 is deposited in the container assembly 300 while the attenuator 100 is stationary. The strand 510 fills the corners and the end portion of the container assembly 300 during this time. The attenuator 100 is typically paused twelve seconds at each end of the container assembly 300.

A different strand pattern will result from the rotational pattern of the ring 210 shown in Fig. 19. The ring 210 rotates in a complete circle. The strand pattern includes a plurality of loops 512 having a start point 514 and an end point 516 as shown in Fig. 17. The loops 512 are considered to be nested because the loops overlap with a preceding loop 512, with the exception of the initial loop 512.

The deflector assembly 200 includes a switch bracket 270 for supporting a noncontacting proximity switch. The switch designates a home position for the rotating ring 210. Each time the ring 210 rotates past the home position, the proximity switch registers a count. The switch helps determine the location of the ring 210 and the deflector plate 220 as they rotate in their 90° pattern as described above.

As the artisan will appreciate, there are many possible variations on the embodiment of the deflector assembly 200 described above that would be consistent with the principles of the invention. Some of the variations are identified below.

During the strand collection process, the container assembly 300 may be mounted on rails for lateral movement as the attenuator and deflector assembly 200 traverse and the ring 210 and the deflector plate 220 are not rotated. The relative movement of the strand and the container assembly 300 may also be achieved by fixing the position of the attenuator 100 and the deflector assembly 200 and moving the container assembly 300 in its longitudinal and lateral directions.

Alternatively, the rotating ring 210 may be rotated 360° as the attenuator 100 and deflector assembly 200 traverse and/or the container assembly is moved.

The deflector mount 224 may be mounted for vertical movement in the deflection chamber 230. The deflector plate 220 may be mounted to the deflector mount 224 to permit adjustment of the deflection angle of the plate 220. The deflector plate 220 and deflector mount 224 may be coupled to the ring 210 to enable the deflector plate 220 to be pivoted out of the strand path.

Instead of depositing the strand in the container assembly 300 in a periodic or cyclic pattern, the strand may be deposited randomly by moving the combination of the attenuator 100 and deflector assembly 200, the deflector plate 220, or the container assembly 300 in a random pattern.

The ring 210 may be driven by a soft roll drive that includes active and passive rolls. A portion of the ring is mounted between motor driven active rolls and passive rolls. As the active rolls rotate, the ring rotates.

### Container Assembly

Turning to the bulk collection of the strand, the strand collection system 80 includes a container assembly 300. The container assembly 300 is positioned to receive the strand that exits the deflector assembly 200.

The container assembly 300 includes an outer container 310 and an inner container 370. The inner container 370 is placed inside the outer container 310 prior to the collection of strand. When the container assembly 300 is full and collected strand is dried the packaged strand becomes self-supporting and at least the outer container 310 can be removed. The inner container 370 remains on the strand package as a shipping insert. This allows less non-glass material to be shipped to an end user than if the outer container 310 were left on the strand package, thereby saving costs.

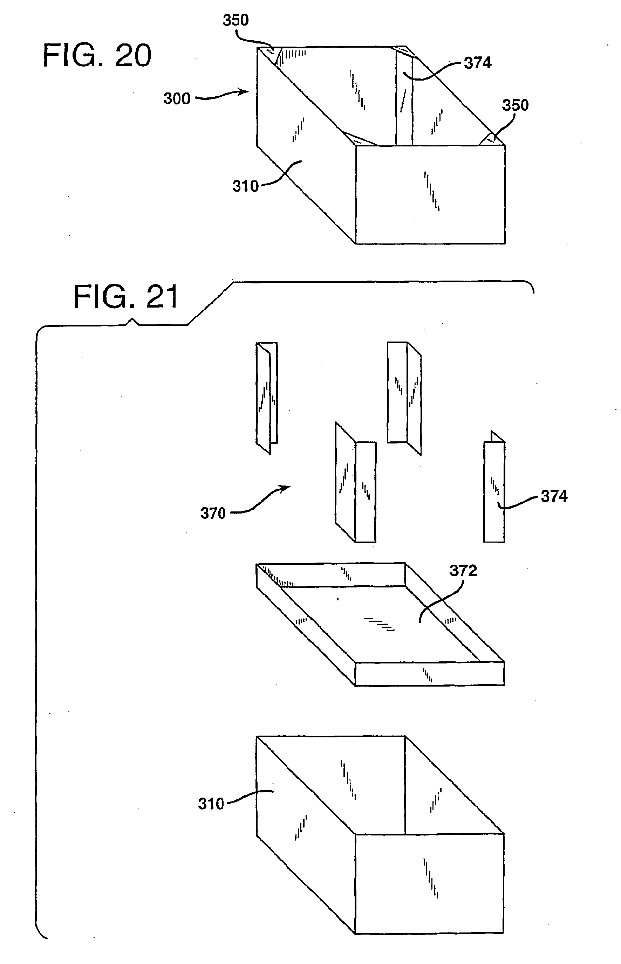

One implementation of a container assembly 300 embodying the principles of the invention is shown in Figs. 20-32. Assembled and exploded perspective views of this implementation are shown in Figs. 20-21.

The inner container 370 includes a bottom tray 372 and four corner posts or columns 374 as shown in Figs. 20-21. The bottom tray 372 and columns 374 are separate pieces and are positioned together to resemble an inverted table. The columns 374 are supported by the outer container 300 as described in detail below. The inner container 370 includes a cap 376 that is placed on the strand package after the package has been dried.

Preferably, the columns 374 are structurally rigid and sufficiently strong to support a proportional share of the weight of a second package. This is because in a preferred embodiment, once a package of strand has been shrink wrapped, it is loaded onto a pallet. Typically, two packages are loaded on side-by-side on a single pallet. A second pallet is then placed on top of the packages on the first pallet for transportation. The eight columns 374 of the two inner containers 370 on the lower pallet thus support the weight of the upper pallet and its two packages.

The inner container 370 is preferably formed of polypropylene. However, the inner container 370 may be alternatively be formed of cardboard or other material with sufficient structural rigidity. The inner container 370 should also be resistant to the solvent used with the size applied to the strand that is deposited in the inner container. Typically the size will be aqueous, and the container should thus be formed of water resistant material or be coated with a water resistant coating.

Each column 374 extends to the top of the outer container 310, which in the illustrated embodiment has a height of approximately 30 in (76 cm). The dimensions of the components of the inner container 370 may be varied dependant on the size of the package to be collected.

The outer container 310 provides support to the inner container 370 and the package of strand during the strand collection process. The outer container 310 includes perforated side walls to facilitate drying of the strand. The outer container 310 is easily removed from the dried package and reused in a subsequent strand collection process.

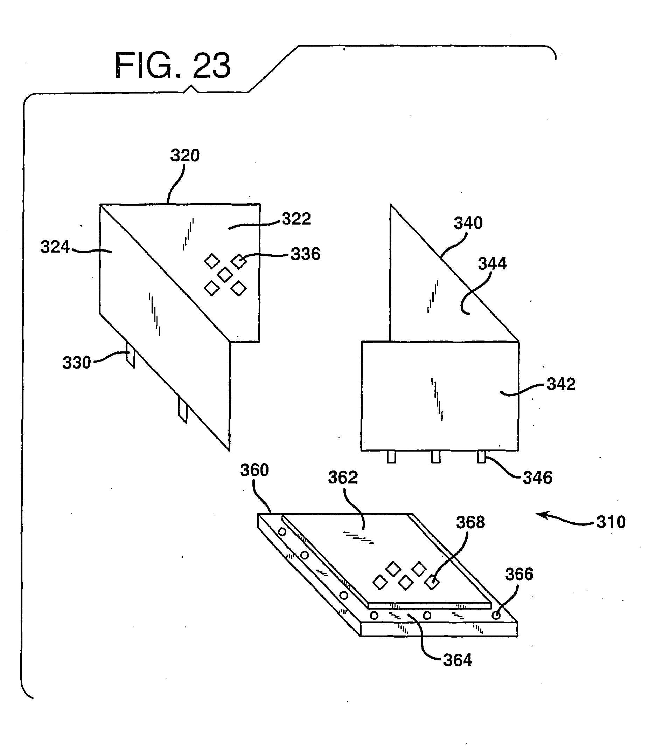

One implementation of the outer container embodying the principles of the invention is shown in Fig. 23. The outer container 310 includes two sides 320, 340 and a bottom plate 360 that are coupled together. The sides 320, 340 and bottom plate 360 define the volume in which the strand is collected.

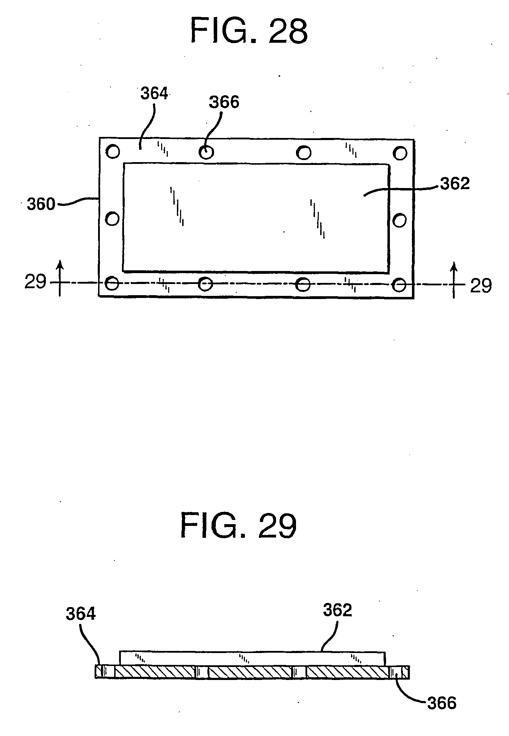

The bottom plate 360 defines the bottom surface of the container assembly 300. The bottom plate 360 includes a middle section 362 that is bounded by a ledge 364 around the perimeter of the plate 360 as shown in Figs. 23 and 28. The middle section 362 is dimensioned so that the sides 320, 340 fit around it when the sides 320, 340 and the bottom plate 360 are assembled. The ledge 364 includes holes 366 into which pins 330 are inserted when the parts are assembled.

The bottom plate 360 includes perforations 368 that enable circulation and drainage of the fluid size solvent (for example, water) to speed drying of the strand package. The perforations 368 shown in Fig. 23 are exemplary of the perforations along the entire middle section 362.

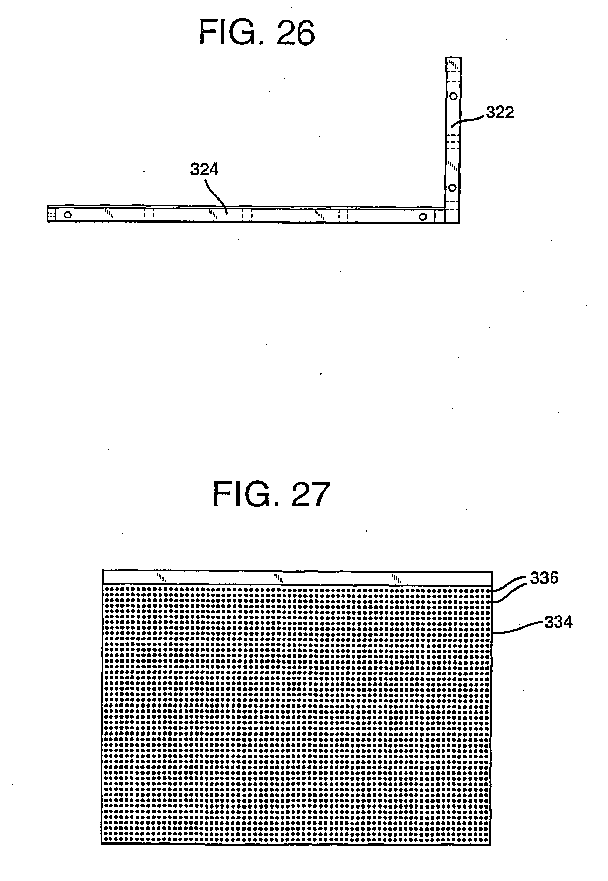

Turning to the sides 320, 340 of the outer container 310, the sides are coupled to each other by suitable connectors such as bolts, pins, or welds. Sides 320, 340 are mirror images of each other. Side 320 is generally L-shaped and includes a short portion 322 and a long portion 324 as shown in Figs. 23 and 26. Side 320 includes pins 330 for alignment with holes 366 in the bottom plate 360. Side 340 includes a similar short portion 342, long portion 344, and pins 346.

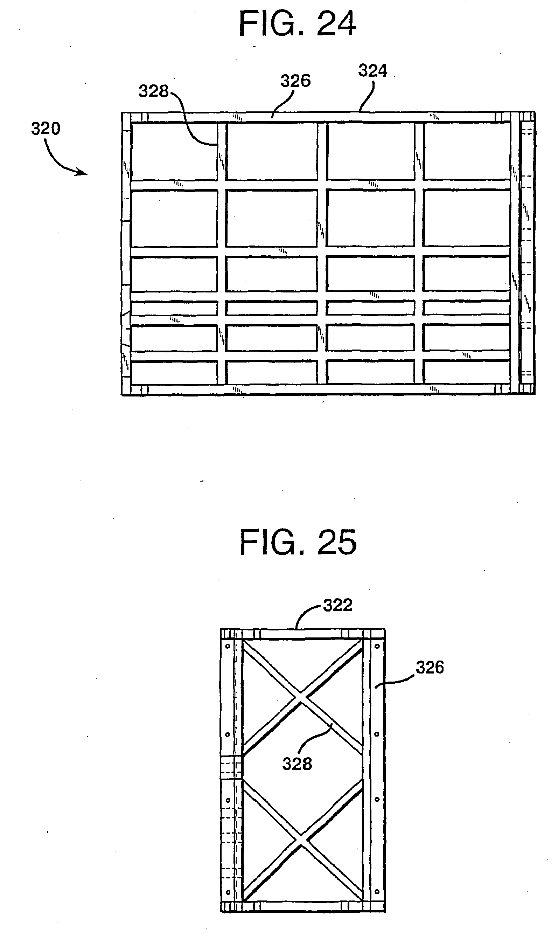

Each portion 322, 324 of side 320 includes an outer perimeter frame 326 and cross beams 328 as shown in Figs. 24-25. The beams 328 in the long portion 324 are generally horizontal or vertical as shown in Fig. 24. The beams 328 in the short portion 322 are generally diagonal as shown in Fig. 25. A perforated sheet 334 is mounted to the inner surface of the outer perimeter frame 326 to enclose the spaces between the beams 328 of each portion 322, 324. The sheet 334 includes perforations 336 as shown in Fig. 27.

The outer container 310 includes corner brackets 350 to hold the container assembly 300 together. Corner brackets 350 are positioned at each corner of the container assembly 300 as shown in Fig. 20. Corner brackets 350 are coupled to the outer container 310 and hold the sides 320, 340 together and retain the columns 374 in place.

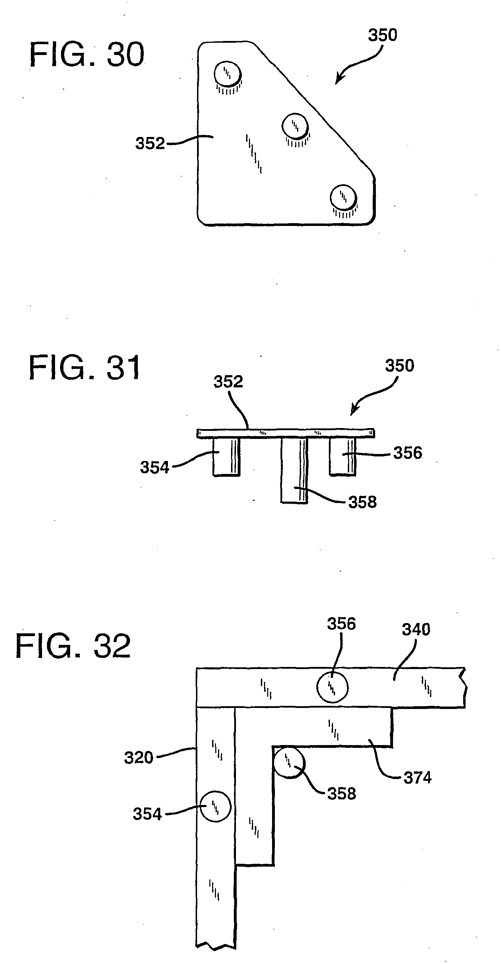

Each corner bracket 350 includes a plate 352 with depending side posts 354, 356 and a center post 358 as shown in Figs. 30-31. The side posts 354, 356 are inserted into holes 332 in the sides 320, 340 of the outer container 310. The center posts 358 are longer than the side posts 354, 356 and are used to hold the columns 354 in place against the corners of the outer container 310 as shown in Fig. 32.

The outer container 310 is preferably non-metallic and may be made from a polymer, such as polypropylene. Polypropylene has several desirable properties, including a low dielectric constant, a high operating temperature (greater than 240°F (115°C), a low density (approximately 56 lb/ft³ (870 kg/m³). Polypropylene is also easy to weld and to perforate.

The assembly of the inner and outer containers 310, 370 is now discussed. The sides 320, 340 are coupled together and set onto the bottom plate 360 with the pins 330 engaged in the holes 366. The bottom tray 372 and columns 374 of the inner container 370 are placed in the outer container 310. The corner brackets 350 are coupled to the sides 320, 340 to secure the container assembly 300 and hold columns 374 in place.

During the strand collection process, the strand is deposited inside the container assembly 300. To optimize the collection and shipping of the strand packages, the maximum amount of strand that the container assembly 300 can hold is preferably collected. A typical wet strand package weighs approximately 700 to 750 lbs. (318 to 340 kg) and has a moisture content between 15 and 18%.

After the strand is collected, unless the end user's secondary processes require a wet strand, the strand package is dried (that is, the size solvent, typically water, is evaporated or otherwise extracted) to cause the size material on the collected strands to adhere adjacent portions of the strand together, thus changing the collected mass of strand into a self-supporting block of strand. The outer container 310 is then readily removed from the inner container 370. The columns 374 are also adhered to the exterior surface of the block of strand by the dried size material on the strand.

The inner container 370 and strand package are then shrink wrapped and prepared for transportation. The outer container 310 is re-used in a subsequent strand collection process.

The following dimensions are provided for an exemplary container assembly embodying the principles of the invention.
height of bottom tray 372 = 2 in. (5 cm)
width of bottom tray 372 = 15 in. (38 cm)
length of bottom tray 372 = 46 in. (117 cm)
height of columns 374 = 30 in. (76 cm)
length of plate 360 = 50 in. (127 cm)
width of plate 360 =19 in. (48 cm)
thickness of plate 360 = 0.5 in. (1.3 cm)
thickness of middle section 362 = 0.5 in. (1.3 cm)
length of middle section 362 = 45 in. (114 cm)
width of middle section 362 = 2 in. (5 cm)
diameter of holes 366 = 0.5 in. (1.3 cm)
height of short portion 322 = 31 in. (79 cm)
width of short portion 322 = 16 in. (41 cm)
height of long portion 324 = 31 in. (79 cm)
width of long portion 324 = 48 in. (122 cm)
length of side posts = 1.25 in. (3.2 cm)
diameter of side posts = 0.75 in. (1.9 cm)
length of center post = 2 in. (5 cm)
diameter of center post = 0.75 in. (1.9 cm)
height of perforated sheet 334 = 31.5 in. (80 cm)
length of perforated sheet 334 = 45.5 in. (116 cm)
height of perforated sheet 338 = 31.5 in. (80 cm)
length of perforated sheet 338 = 17 in. (43 cm)
thickness of perforated sheets 334, 338 = 0.25 in. (0.6 cm)
diameter of perforations 336 = 0.25 in. (0.6 cm)

As the artisan will appreciate, there are many possible variations on the embodiment of the container assembly 300 described above that would be consistent with the principles of the invention. Some of the variations are identified below.

The inner container 370 may be removed from the package prior to shipping since the package of strand is self-supporting.

The outer container 310 and the inner container 350 may have a geometry other than a rectangular parallelepiped, for example, they may be cylinders of circular, oval, or polygonal cross-section.

The bottom tray 372 and columns 374 may be integrally formed.

The inner container 370 may include full sides instead of the individual columns 374. Alternatively, the inner container 370 may include only the bottom tray 372 and no columns 374.

### Strand Densification

Typically, packages of strand are placed onto a pallet and delivered to an end user. The amount of strand that may be transported on a pallet is limited by the type of strand package. In conventional wound packages, a strand package is in the shape of a tube with a cylindrical outer profile and an inner hole which is required for the collet onto which the package was wound. Accordingly, the amount of strand that can be placed on a pallet in wound packages is constrained by the interstitial spaces between packages and the center holes of the packages.

The bulk collection process produces a package that is evenly filled with glass strand. In a bulk collection process, the density of the resulting strand package is directly related to how much strand is collected in the container assembly. By increasing the density of a strand package, more strand may be transported to an end user in a given amount of space and the dried package gains internal stability. Accordingly, it is desirable to form strand packages with a high density of strand.

The density of a package formed by a bulk collection process may be varied. The density is related to the distribution of the strand in the container assembly during collection. A better strand distribution results in a package with a higher density.

The strand distribution may be varied by applying a force to the container assembly during the collection process. Applying a force on the container assembly to move the strand inside settles the deposited strand evenly in the container assembly. Strand with a high forming moisture naturally assumes a high density that can be increased with vibration.

A bulk collected strand that is collected in a container without vibration is fluffy. Fluffy strand is more voluminous and less fluffy strand is collected in a given volume of container assembly as compared to non-fluffy strand. Accordingly, in the preferred embodiment, the strand is subject to vibration during the strand collection process to increase the density of the resulting strand package. The vibration should be of such amplitude and frequency to impose on the strand during collection sufficient accelerational forces to shift and settle the strand. The vibration may have multiple directional components, such as vertical (normal to the planes of the parallel layers of collected strand), axial (parallel to the longitudinal axis of the container) and/or lateral (perpendicular to the longitudinal axis of the container).

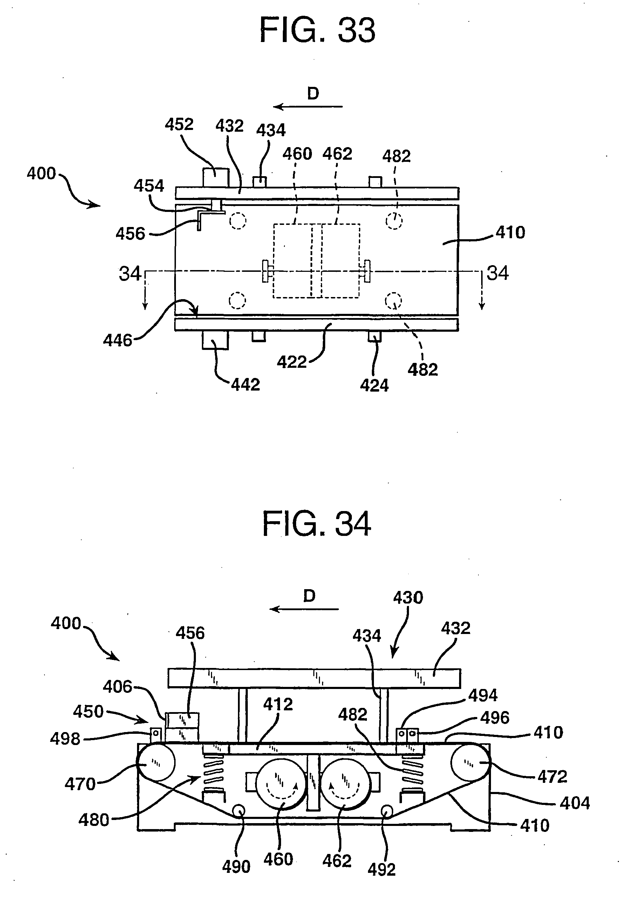

One implementation of a vibrating mechanism that applies suitable vibrational forces on the container and collected strand is shown in Figs. 33-36. The vibrating mechanism 400 includes a frame 404, a belt 410, a platform 412, and vibrators 460, 462. The container assembly 300 is in its filling position when it is positioned on the belt 410. Vibrators 460, 462 are operated to impart to the platform 412, belt 410, and the container assembly 300 vibrations having a primarily vertical force component, generated by contra-rotating eccentric masses rotating about an axis parallel to the plane of the belt 410. Suitable vibrators 460, 462 are rotary vibrators that are driven by an electric motor, such as Bulk Equipment Systems Technology Inc. (BEST), of Cleveland, OH, Model No. BX-60-4.

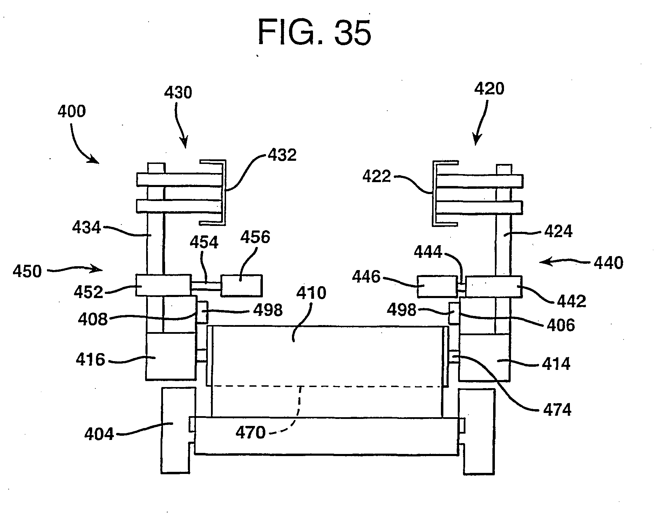

The vibrating mechanism 400 includes a motorized head pulley 470, a tail pulley 472, and multiple idlers 490, 492 around which the belt 410 passes. The motorized head pulley 470 is driven by an internal motor to rotate about its axle 474 which is mounted in mounts 414, 416 as shown in Fig. 35.

As the pulley 470 rotates, belt 410 advances in the direction of the arrow "D" shown in Figs. 34-35. The belt 410 is advanced at a velocity of approximately 32 ft./min. (10 m/min.) to remove a full container assembly and to position the empty container assembly 300 in its filling position.

The vibrating mechanism 400 includes a spring isolation system 480 as shown in Fig. 34. The spring system 480 includes four springs 482 that provide oscillatory movement to the platform 412 while it is vibrated. A suitable spring isolation system is available as BEST Model No. 104.

The vibrating mechanism 400 includes container side guides 420, 430 for guiding the container assembly 300. Side guide 420 includes an engaging member 422 that extends along the length of the vibrating mechanism 400 and limits the lateral movement of the container assembly 300. The engaging member 422 is supported from frame 404 by a support 424. Side guide 430 includes an engaging member 432 and a support 434 as well.

The vibrating mechanism includes container stops 440, 450 as shown in Figs. 33 and 35. Stop 440 includes an actuator 442 that is pneumatically actuated to move an arm 444 to which an engaging surface 446 is mounted. The engaging surface 446 is generally L-shaped. Actuator 442 retracts and extends arm 444 based on input from the control system. Stop 450 includes an actuator 452, arm 454, and engaging surface 456 as well. Stops 440, 450 are mounted on extensions 406, 408 of frame 404, respectively, as shown in Fig. 35.

Stop 440 is shown in its retracted position and stop 450 is shown in its extended position in Figs. 33 and 35. The vibrating mechanism 400 includes three sensors that are mounted on the frame 404 to determine the position of the container assemblies 300. As shown in Fig. 34, container sensors 494, 496, 498 are mounted on brackets that are coupled to the frame 404 of the vibrating mechanism 400. Container sensors are preferably implemented as photo or optical detectors. The control system detects whether the vibrating platform is out of position, if the conveyor fails to run, and whether the container stops fail to retract.

The container sensors of the vibrating mechanism 400 are used to position the filled and empty container assemblies 300. Sensor 494 is located on the incoming end of the vibration conveyor belt and is normally not blocked. Sensor 496 is located adjacent to the sensor 494. A container 300 normally blocks when it is in position for filling. Sensor 498 is located on the exit end of the conveyor and is normally not blocked during operation.

The container assembly 300 is intermittently vibrated for short intervals separated by longer periods without vibration, such as one minute of vibrating every fifteen minutes. The control system includes a timer for the operation of the vibrating mechanism 400.

When the container assembly 300 is full, the stops 440, 450 are withdrawn from the path of the container assembly 300. The belt 410 is advanced to remove the full container assembly 300 and bring in an empty container assembly 300.

The following dimensions are provided for the illustrated embodiment of the vibrating mechanism.
length of vibrating mechanism 400 = 59 in. (150 cm)
width of belt 410 = 22 in. (56 cm)
length of head pulley 470 = 23.5 in. (60 cm)
lateral spacing between retainers = 19.25 in. (49 cm)
length of a retainer = 48 in. (122 cm)
diameters of pulleys 470, 472 = 6 in. (15 cm)

As the artisan will appreciate, there are many possible variations on the embodiment of the vibration mechanism 400 described above that would be consistent with the principles of the invention. Some of the variations are identified below.

A single vibrator with sufficient capacity may be used to vibrate the belt and container assembly, rather than two contra-rotating vibrators.

The actuators 442, 452 of the stops 440, 450 may be operated by a linear actuator, motor, or other similar driving mechanism.

The tail pulley 472 may be replaced with a motor driven pulley.

The force applied by the vibrating mechanism on the container assembly may have horizontal and vertical components. The container assembly may be vibrated or oscillated in the horizontal direction only.

The amplitude and frequency of vibrations may be varied depending the desired density of the strand package.

The container assembly 300 may be continuously vibrated during the strand collection process.

The vibrating mechanism 400 may impart vibrations having a waveform other than the sinusoidal waveform produced by the illustrated vibrating mechanism.

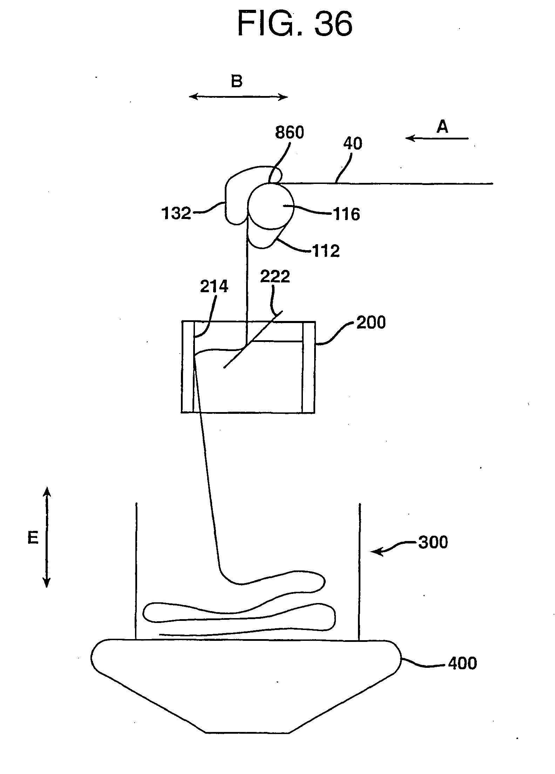

The relevant components of the strand collection process from the attenuator 100 to the vibrating mechanism 400 are shown in Fig. 36. The attenuator 100 and deflector assembly 200 traverse above the container assembly in the direction of arrow "B". A strand 40 is pinched between the belts 112, 132 of the attenuator 100 and pulled in the direction of arrow "A". The strand exits the attenuator 100 and engages primary deflector surface 222 and secondary deflector surface 214 of the deflector assembly 200. The strand drops into the container assembly 300. The vibrating mechanism 400 periodically vibrates the container assembly 300 in the direction of arrow "E" to settle the strand as it is collected.

### Strand Splicing

During the strand collection process, a strand may break. In a wound package forming system, the size of a package is limited if the strand breaks because the process cannot accommodate a break without discontinuing the package on the rotating tube. Typically, "short" packages are waste and the design size of the package is limited by process performance. In a bulk collection system, a strand that breaks may be spliced and the container may continue to be filled with the spliced strand. By splicing the strand ends, every package can be completed, regardless of process performance.

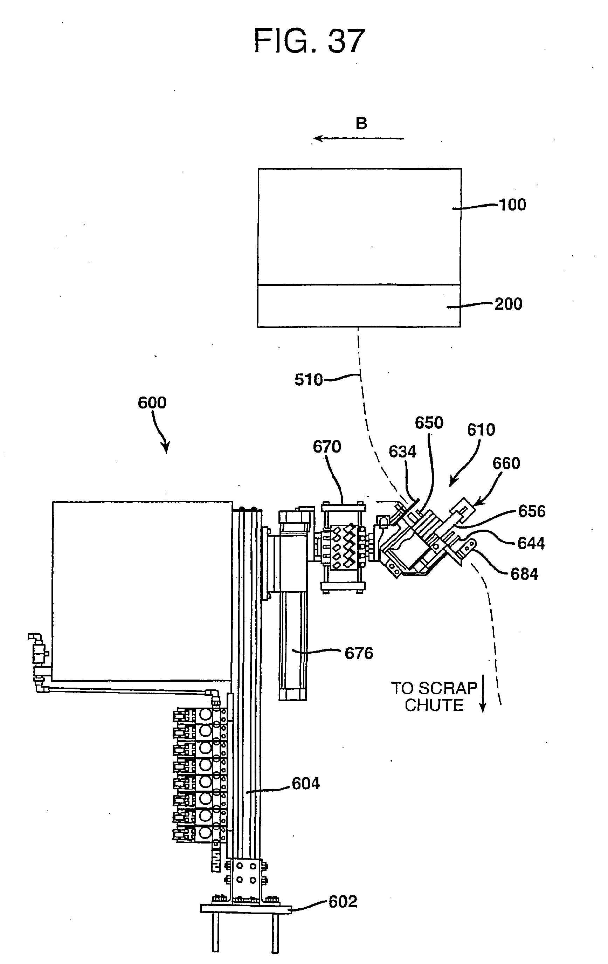

To splice strand ends, the strand that has broken is held while a new strand is rethread to the attenuator. The leading end of the new strand is gripped and held adjacent the broken strand. The strand ends are then spliced together. The strand collection system 80 thus preferably includes an automatic splicer/cutter 600 that is used to splice strand ends during the strand collection process. One implementation of a suitable automatic splicer/cutter embodying the principles of the invention is shown in Figs. 37-42.

The auto splicer/cutter 600 includes a base 602, a support 604 coupled to the base 602, and an arm 620 rotatably mounted to the support 604. The arm 620 is normally horizontal and may be pivoted downwardly in the direction of arrow "F" in Fig. 37.

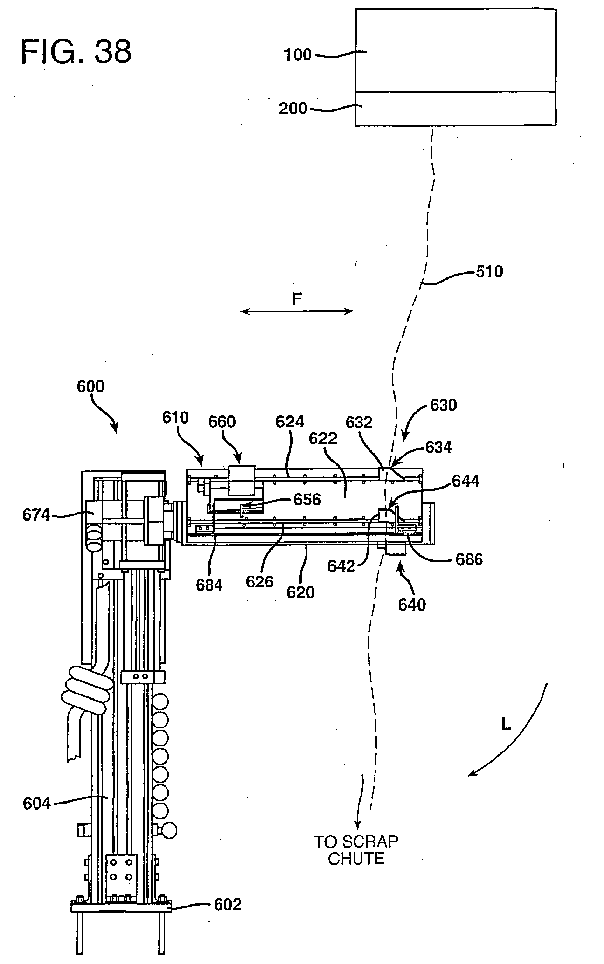

The auto splicer/cutter 600 includes a splicer assembly 610 and a cutter assembly 660 mounted to the arm 620. The splicer assembly 610 splices two strand ends together and the cutter assembly 660 cuts the strand ends after they are spliced. The splicer and cutter assemblies 610, 660 are located near an end of the arm 620 as shown in Fig. 38.

The splicer assembly 610 includes several grippers 630, 640, and 650 that are used to grasp, move, and hold the strands that are laid onto arm 620. The arm 620 includes an upper surface with slots 624, 626 extending substantially the length of the arm. Grippers 630 and 640 extend through the slots 624, 626 as shown in Figs. 38-39B. Grippers 630 and 640 are moved synchronously along the length of the arm 620 by a servo motor 674. The servo motor 674 is a separate servo drive system that includes logic, such as a software code, that is activated by an output signal from the processor. The operation of the servo motor is explained in greater detail below.

Gripper 630 includes a movable finger 632 and a fixed finger 634. Gripper 640 similarly includes a movable finger 642 and a fixed finger 644. Movable fingers 632, 642 are normally positioned below the upper surface 622. Once a strand has been detected, the fingers 632, 642 are pivoted upwardly and out through the slots. The fingers of grippers 630 and 640 are brought together to grasp a strand as shown in Fig. 38. Movement of the gripper fingers is accomplished by a linear drive actuator or similar mechanism as appreciated by the skilled artisan.

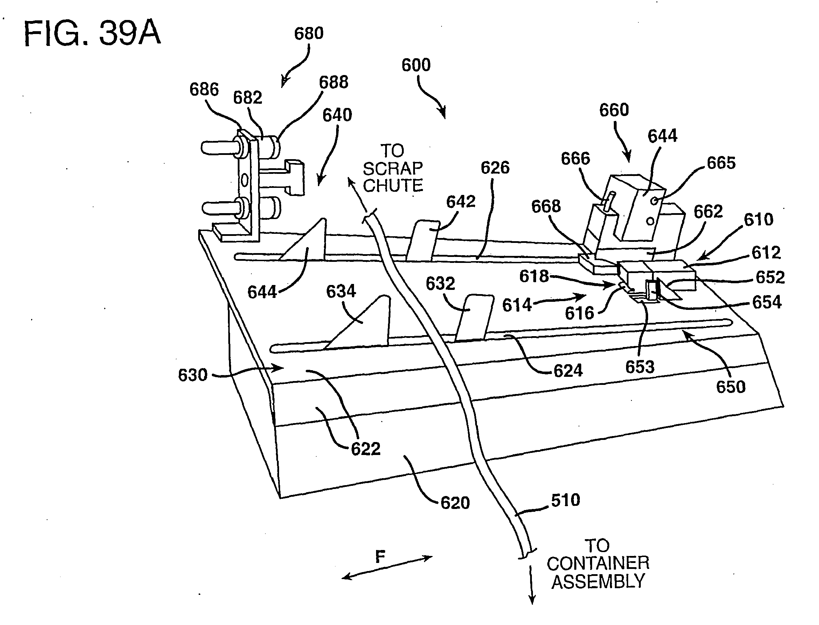

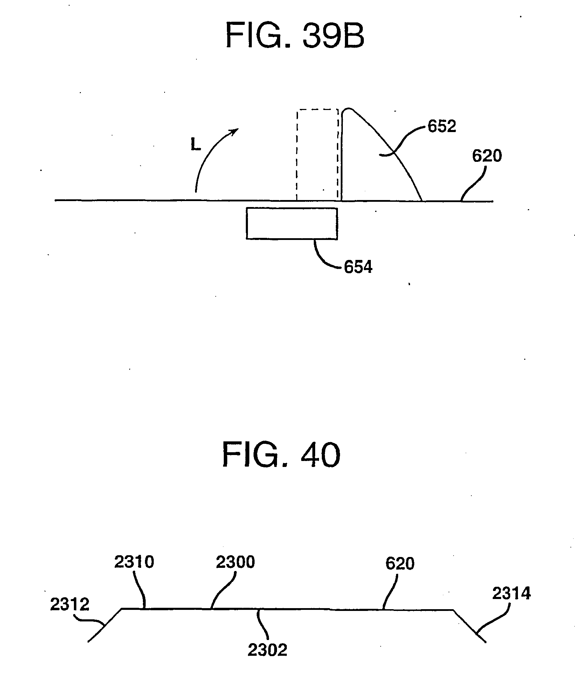

Gripper 650 adjacent the splicing assembly 610 has two movable fingers 652, 654 which pivot together to hold a strand as shown in Fig. 39A. In the illustrated embodiment, finger 654 pivots upwardly into contact with finger 652 to retain a strand therebetween. Arm 620 includes an opening 653 (see Fig. 39A) through which finger 654 pivots between a lower position and an upper position as shown in Fig. 39B. In an embodiment, fingers 654, 652 are substantially similar to fingers 634, 632. It can be appreciated that fingers 652, 654 can have any profile that allows them to grip a strand.

One embodiment of an arm is illustrated in Fig. 40. Arm 620 includes a central portion 2310 and side flanges 2312, 2314. The side flanges 2312, 2314 are proximate to and are oriented at an angle with respect to the central portion 2310. In the illustrated embodiment, the side flanges 2312, 2314 are oriented downwardly at an angle of 45° with respect to the central portion 2310.

In the illustrated embodiment, the arm 620 includes an upper surface 2300 and a lower surface 2302. The upper surface 2300 is textured to reduce the tendency of the strand to adhere to the arm 620 due to the surface tension of the size material on the strand as compared to a smooth contact surface. A suitable material for upper surface 2300 is commercially available under the trade Rigidtex^{™}, which is manufactured by Rigidized Metals Corp. in Buffalo, NY. The rest of the components of the arm 620 are stainless steel.

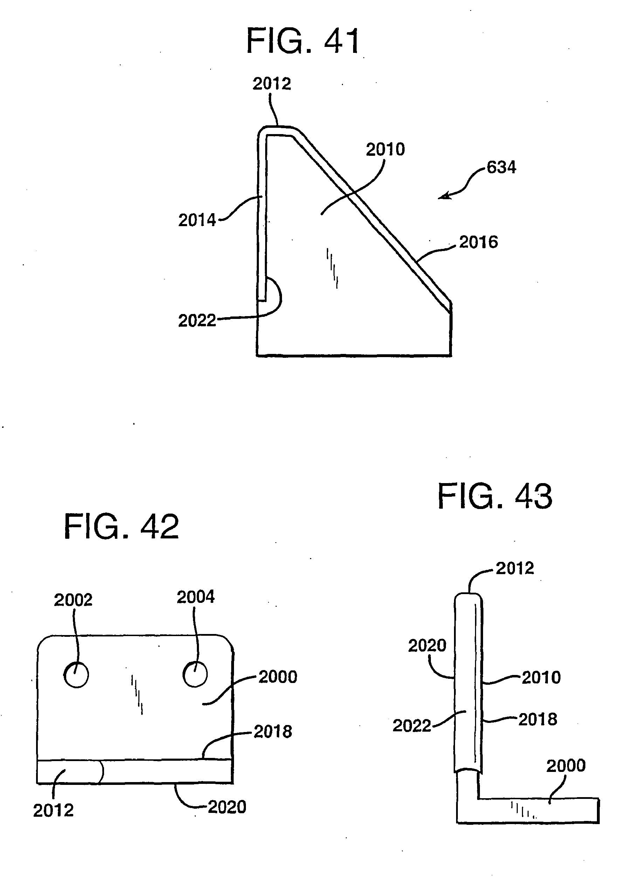

An embodiment of a fixed finger is illustrated in Figs. 41-43. Fixed finger 634 is illustrated and described below. In the illustrated embodiment, fixed finger 644 is substantially the same as finger 634. However, it can be appreciated that fixed finger 644 can have a different configuration from finger 634.

Finger 634 includes a base 2000 and a contact portion 2010. In the illustrated embodiment, the base 2000 and the contact portion 2010 are integrally formed. The base 2000 includes openings 2002, 2004 through which fasteners can be inserted to secure the finger 634 to a mounting bracket, which is discussed in greater detail below.

The contact portion 2010 includes a contact surface 2014, a top surface 2012, and a rear surface 2016. The contact surface 2014 is the surface that engages a strand when the strand is held between fingers 632, 634.

The finger 634 includes a shoulder 2022 formed around the surfaces 2012, 2014, 2016. Shoulder 2022 is wider than the rest of the contact portion 2010 and provides a larger surface area for contacting a strand. The shoulder 2022 extends between sides 2018, 2020 of the finger 634.

Finger 634 can be made from metal, such as aluminum, or any other material that can be used to grip a strand. It can be appreciated that the fixed finger can be any shape that enables the finger to be used to grip a strand.

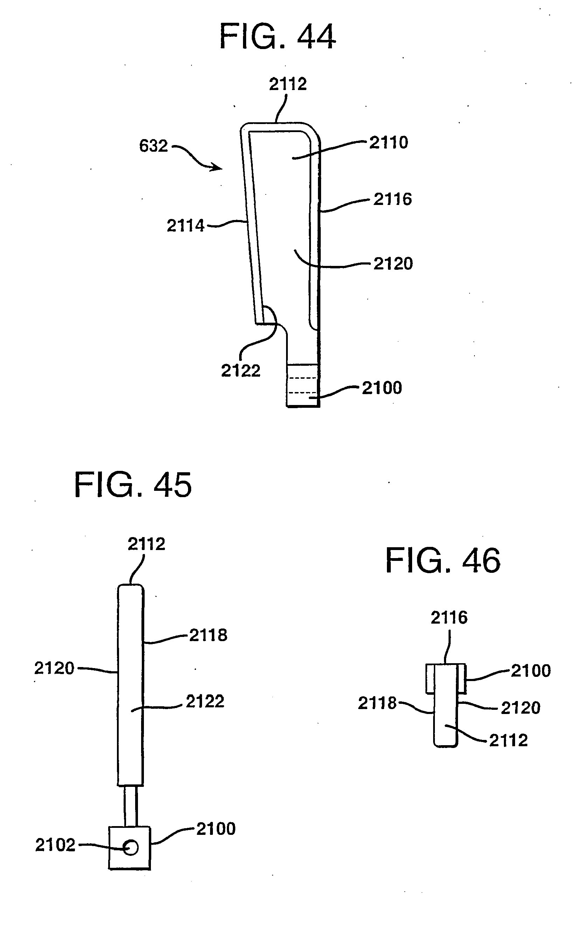

An embodiment of a movable finger is illustrated in Figs. 44-46. Finger 632 is illustrated and described below. In the illustrated embodiment, finger 642 is substantially the same as finger 632. However, it can be appreciated that finger 642 can have a different configuration from finger 632.

Finger 632 includes a base 2100 and a contact portion 2110. In the illustrated embodiment, the base 2100 and the contact portion 2110 are integrally formed. The base 2100 includes an opening 2102 via which the finger 632 can be coupled to a movable bracket (not shown) for movement.

The contact portion 2110 includes a contact surface 2114, a top surface 2112, and a rear surface 2116. The contact surface 2114 is the surface that engages a strand when the strand is held between fingers 632, 634.

The finger 632 includes a shoulder 2122 formed around the surfaces 2112, 2114, 2116. Shoulder 2122 is wider than the rest of the contact portion 2110 and provides a larger surface area for contacting a strand. The shoulder 2122 extends between sides 2118, 2120 of the finger 632.

Finger 632 can be a metal, such as aluminum, or any other material that can be used to grip a strand. It can be appreciated that the finger can be any shape that enables the finger to be used to grip a strand.

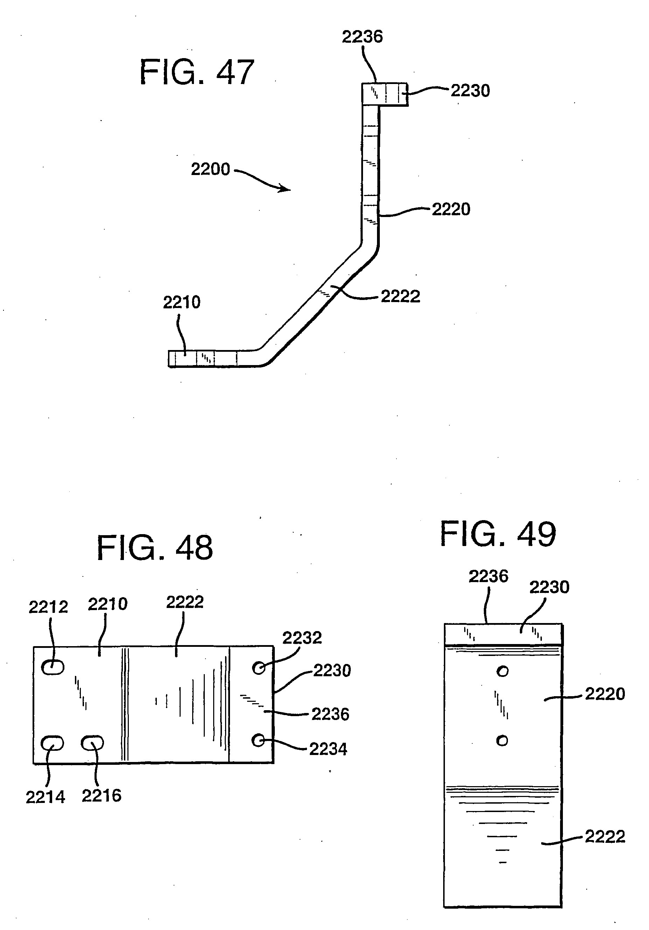

An embodiment of a mounting bracket for a gripper finger is illustrated in Figs. 47-49. Mounting bracket 2200 is representative of the mounting brackets to which the fixed fingers 632, 634 are coupled for movement along arm 620. Mounting bracket 2200 is beneath arm 620 and moved along the length of the arm 620 by a linear actuator.

In the illustrated embodiment, mounting bracket 2200 includes a base 2210, a middle portion 2220, and a mounting portion 2230. The base 2210 has openings 2212, 2214, 2216 through which fasteners can be inserted to mount the bracket 2200 for movement. The middle portion 2220 includes an angled portion 2222.

The mounting portion 2230 of the bracket 2200 includes an upper, mounting surface 2236 to which a fixed gripper 632 or 634 is coupled. The mounting portion 2230 includes openings 2232, 2234 that receive a fastener inserted through openings 2002, 2004 of finger 632.

In the illustrated embodiment, the mounting bracket 2200 is made from metal, such as aluminum.

The auto splicer/cutter 600 includes a strand guide pin 656 that extends from the upper surface 622 of the arm 620. Strand guide pin 656 limits the movement of a strand 510 when it is carried by grippers 630, 640 along the upper surface 622 as discussed in greater detail below.

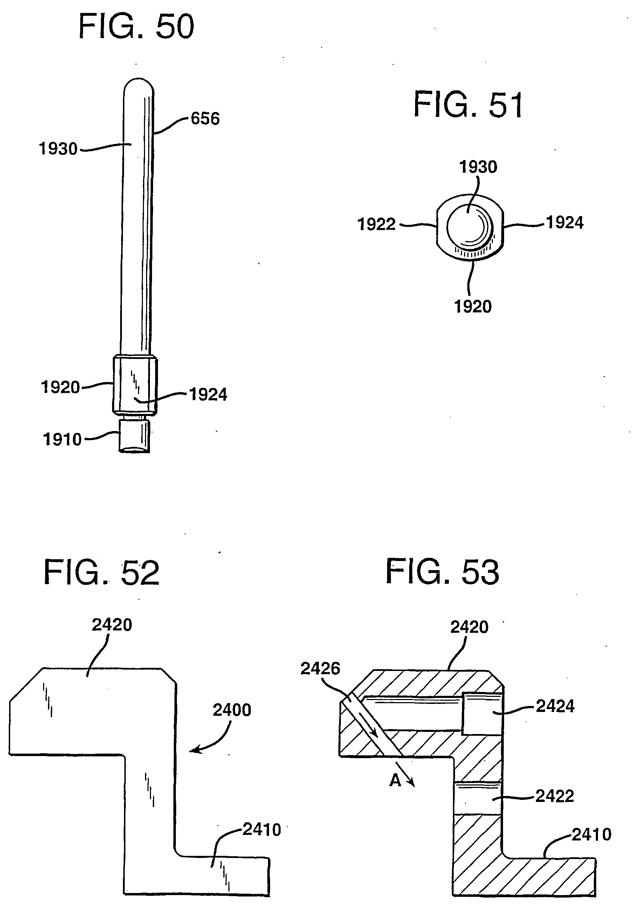

An embodiment of a strand guide pin is illustrated in Figs. 50-51. As illustrated, the strand guide pin 656 includes a base 1910, a mounting portion 1920, and a contact portion 1930. The mounting potion includes two planar surfaces 1922, 1924 on opposite sides. The mounting portion 1920 is inserted into an opening on the arm 620 to mount the strand guide pin 656.

The contact portion 1930 is substantially cylindrical along its length. The contact portion 1930 is contacted by a strand during the splicing and cutting operations as described above.

The auto splicer/cutter 600 includes strand sensors 680 to sense the presence of a strand on arm 620. Strand sensors 680 are preferably implemented as photo or optical detectors. Strand sensors 680 are mounted on brackets 684, 686 at each end of the arm. 620. The auto splicer/cutter 600 includes an air line that continually blows air across the lens 688 of each strand sensor 680 to keep the lens 688 clear. Suitable photo sensors are available from Banner of Minneapolis, MN.

An alternative embodiment of a sensor bracket is illustrated in Figs. 52-55. In this embodiment, the sensor bracket 2400 includes a base 2410 and a support portion 2420.

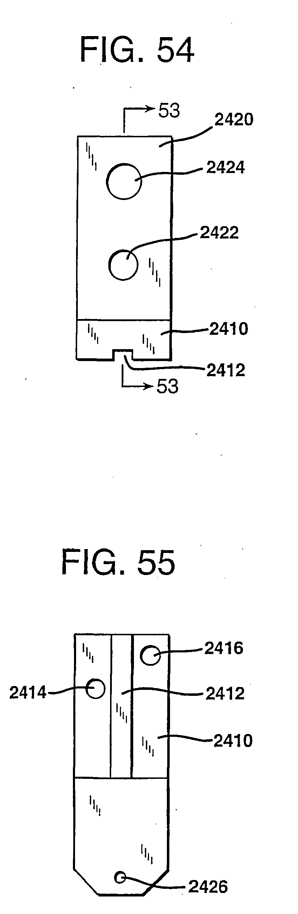

The base 2410 includes a channel 2412 formed in its bottom surface (see Fig. 54) and openings 2414, 2416 (see Fig. 55). Since each sensor bracket 2400 is used to support a sensor which detects the presence of a strand, the sensors and sensor brackets 2400 should be aligned. In the illustrated embodiment, the sensor brackets 2400 are aligned by placing the brackets 2400 on the arm 620 so that a ridge formed on the arm 620 engages the channels 2412.

The support portion 2420 includes several openings 2422, 2424, 2426. A sensor (not shown) is inserted and retained in opening 2422. The sensor is mounted so that the lens of the sensor is oriented to the left in Fig. 53. An air supply line (not shown) is coupled to opening 2424. Air supplied to opening 2424 travels through air passage or opening 2426 and is discharged proximate the lens of the sensor. The air is blown on the sensor lens to keep the lens clean and to remove loose particles.

The support portion 2420 includes angled corners and surfaces on its upper surface to shed errant glass and reduce the likelihood of operator contact with a sharp edge on the bracket 2400. In the illustrated embodiment, the sensor bracket is made from metal, such as aluminum.

The auto splicer/cutter 600 includes a pneumatic cylinder 676 that lifts arm 620 to prevent contact with the vibrating mechanism 400 as the arm 620 pivots.

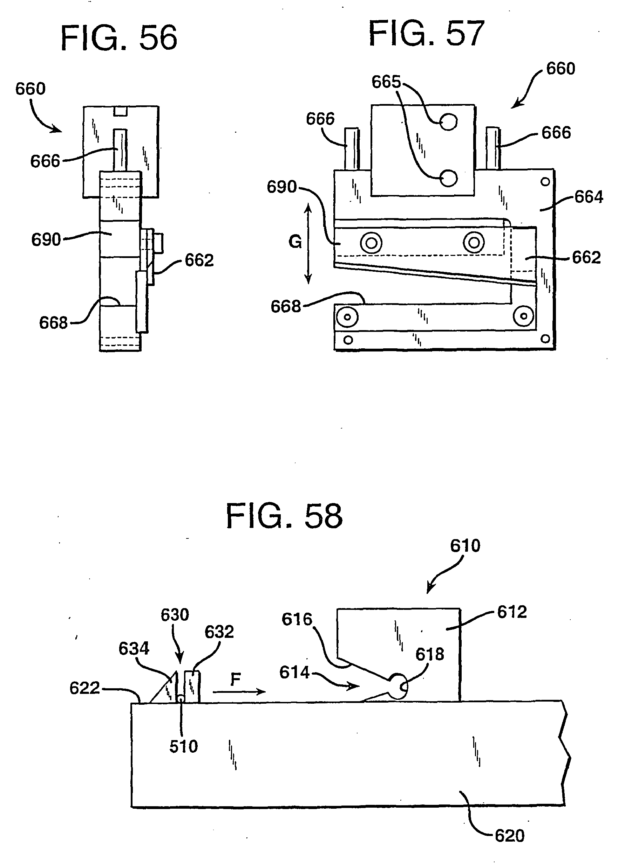

The auto splicer/cutter 600 includes a cutter assembly 660 for cutting one or more strands, as shown in Figs. 56-57. The cutter assembly 660 includes a body 664 with a blade 662 coupled to the body 664. The blade 662 is mounted on a gripper block 690 that is connected to two rods 666. The gripper block 690 and blade 662 moves vertically in the direction indicated by arrow "G" in Fig. 57. The blade 662 is guided by the movement of rods 666 through holes in the body 664.

The movement of the blade 662 is pneumatically driven. The body 664 includes air connection 665 to which air lines are connected to move the blade 662. The blade 662 cuts the strand as it passes adjacent to cutting surface 668. The distance that the blade 662 travels is approximately 1 in. (2.5 cm).

The gripper block 690 forms a part of a gripper that grips the strands while they are being cut. Gripper block 690 and cutting surface 668 form the gripper. A suitable cutter assembly is available from AZCO of Elmwood Park, N.J. as part no. 970198.

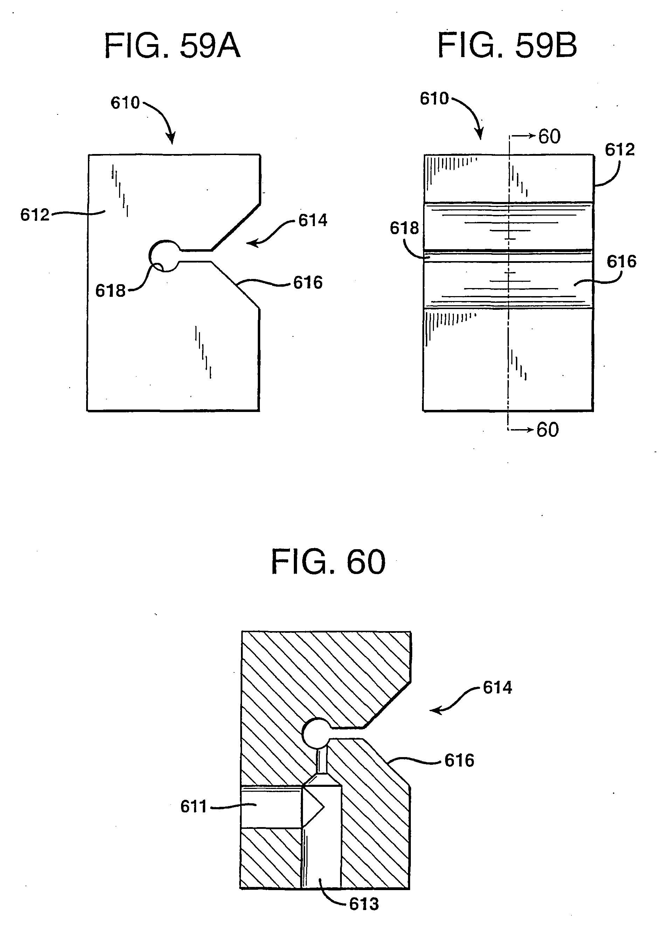

The splicing assembly 610 includes a body 612 with a slot 614 formed in one side. The slot 614 includes a generally V-shaped portion 616 and a radiused portion 618, as shown in Figs. 58-60. As illustrated in Fig. 60, the body 612 includes bores 611, 613 which are in communication with each other and the radiused portion 618. Each of the bores 611, 613 can be used to supply air to the radiused portion 618 of the body 612. During operation, only one of the bores is used depending on the orientation of the body 612.

Strands to be spliced are placed in the radiused portion 618 as grippers 630, 640 move a strand along the surface of the arm 620 in the direction of arrow "F". The components of the splicing assembly 610 are made of metal, preferably aluminum.

A break in the strand is detected one of two ways. If the break occurs upstream of the attenuator 100 and the strand 510 is in the attenuator 100, a change in torque on the attenuator belts 112, 132 is sensed. The attenuator drive wheel 116 is immediately stopped. If a break occurs and the strand is not in the attenuator 100, the strand sensors 680 of the auto splicer/cutter 600 will determine that no strand has been laid on arm 620 when the attenuator 100 moves from its start up position to its filling position.

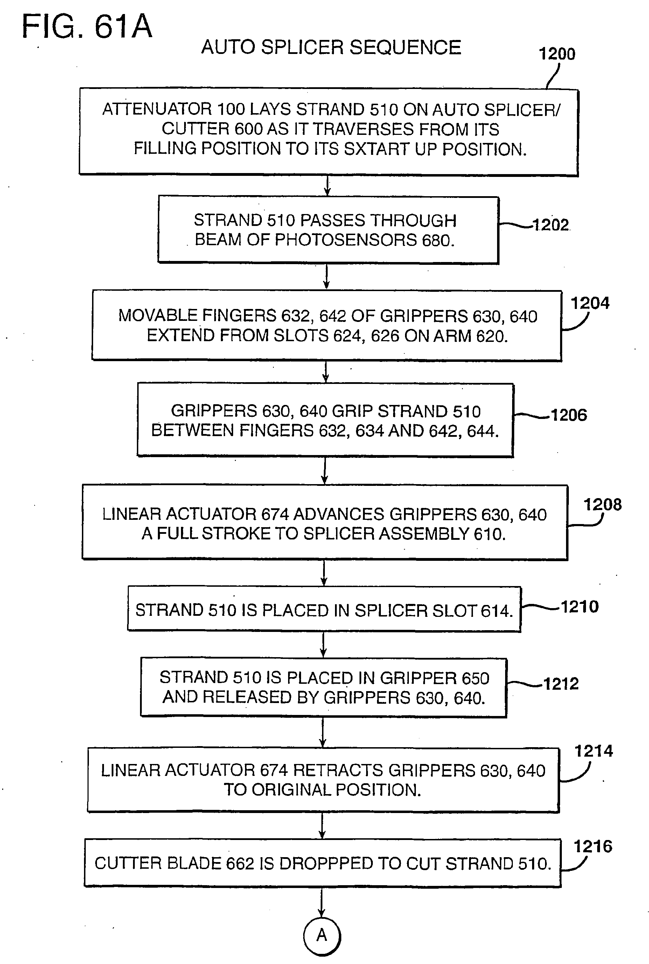

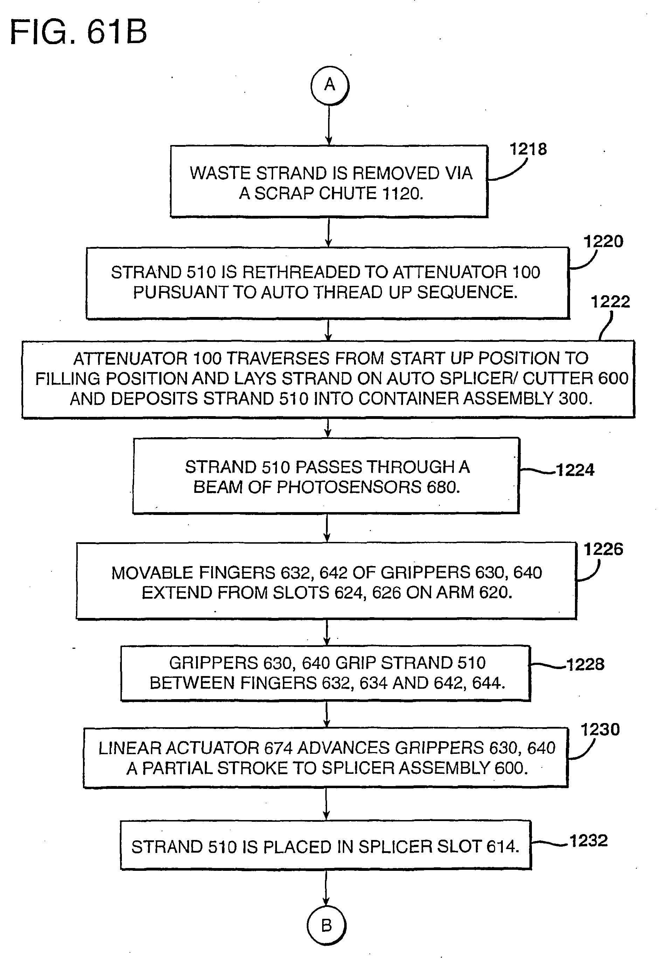

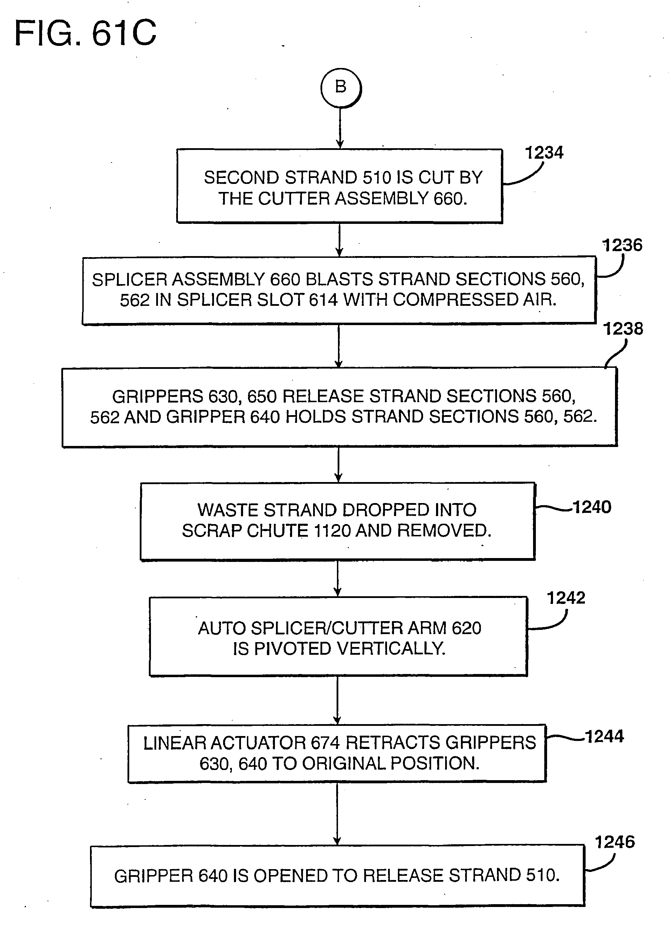

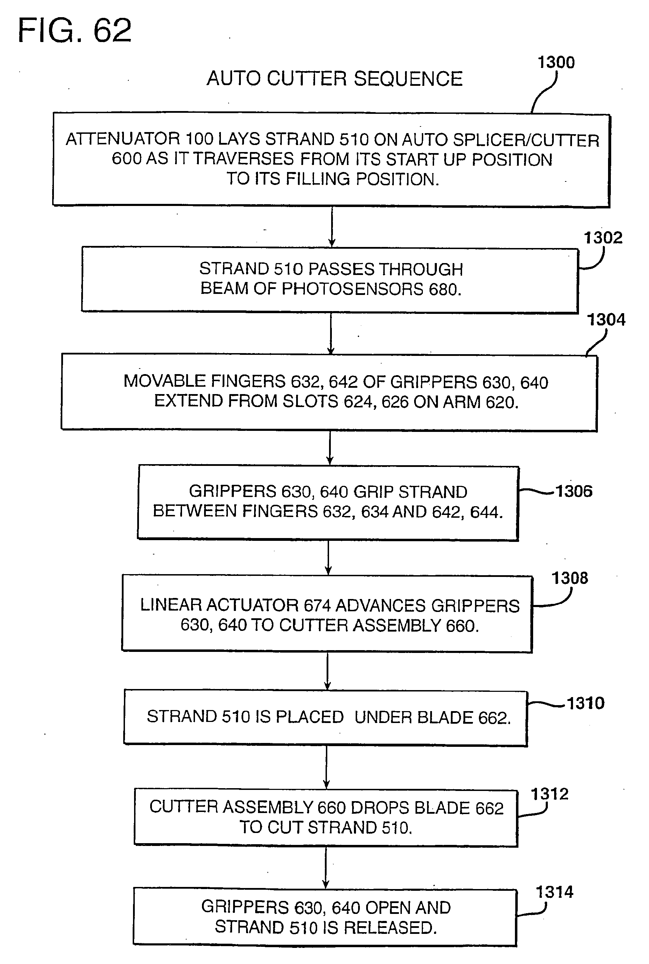

The operation of the auto splicer/cutter 600 will now be discussed with reference to Figs. 61A-C and 62. When a break in the strand occurs, the attenuator 100 is usually positioned above the container assembly 300. Once the break is sensed, the attenuator 100 is stopped sufficiently quickly that the strand end is retained in attenuator 100. In steps 1200, 1300, the attenuator 100 moves laterally away from the container assembly 300 and over the auto splicer/cutter 600 to its start up position. Once in its start up position, the attenuator 100 rotates one revolution to lay the end of the strand over the auto cutter/splicer 600.

Grippers 630 and 640 are initially positioned at the distal end of arm 620. The strand 510 will pass through the beam between strand sensors 680 (steps 1202, 1302). The strand sensors 680 detect the strand 510 and generate a signal that is transmitted to a controller. The controller includes control logic which is responsive to the detection signal generated by the strand detector. The controller or processor generates an output signal that is transferred to the auto splicer/cutter servo drive system to energize part of the program. The signal may be indicative of the detection of the strand by the strand sensors 680.

Upon receipt of the detection signal, the controller causes movable fingers 632, 642 of the grippers 630, 640 to pivot up and out of the slots 624, 626 (steps 1204, 1304). In steps 1206, 1306, 1308, the servo drive system operates linear actuator 674 to advance fingers 632, 642 along the slots 624, 626 to grip the strand with fingers 624, 644. In step 1208, the grippers 630 and 640 grip the strand between their fingers and are moved to the proximal end of the arm 620. The grippers 630, 640 are moved a full stroke along the length of the slots 624, 626 to engage the strand in the cutter assembly 660, splicing slot 614, and gripper 650 on the same stroke (steps 1210, 1212).

The strand 510 is delivered by the grippers 630 and 640 to the splicer assembly 610. The strand 510 is transferred to gripper 650 and positioned into slot 614 (steps 1210, 1212, 1310). In step 1214, grippers 630 and 640 are retracted to the distal end of the arm 620, where they await the leading end of the next strand section 562. In steps 1216, 1312, the cutter assembly 660 drops blade 662 to cut the strand 510 and form a first strand section 560. The waste strand is removed via a scrap chute 1120 (step 1218).

In step 1220, the attenuator 100 is rethread by the auto thread up system. When the attenuator 100 is at operating speed, the attenuator 100 indexes over the auto splicer/cutter 600 to its position above the container assembly 300. As the attenuator 100 passes over the auto splicer/cutter 600, it lays a strand 510 on the upper surface 622 of the arm 620 (step 1222). Once the attenuator 100 is above the container assembly 300, the attenuator 100 and deflector assembly 200 direct strand into the container assembly in the normal operating manner.

In step 1224, the presence of the strand 510 is detected by the strand sensors 680. The fingers of the grippers are moved to their operating positions and grip the strand end (steps 1226, 1228). In steps 1230, 1232, the grippers 630 and 640 are moved a partial stroke along the arm 620 to position the strands adjacent to each other in slot 614. The grippers are moved only a partial stroke because it is not necessary for this strand to held by gripper 650. The strand section 562 is cut by cutter assembly 660 (step 1234).

In step 1236, splicer assembly 610 blasts the ends 564, 566 of strand sections 560, 562 in the slot 614 with compressed air. The compressed air is delivered at a pressure of approximately 10 to 80 psi (7030 to 56,250 kg/m²). The strand ends 564, 566 are spliced together by a blast of compressed air. The air pressure is sufficient to separate the filaments in each strand and tangle the filaments of the two strands together to splice the ends. The resulting splice is not a permanent splice. It simply holds the sections of the strand together and marks the location of the splice so that it may be replaced with a permanent splice.

In step 1238, grippers 630, 650 release the strands and gripper 640 retains the strand sections. The waste strand is dropped into scrap chute 1120 (step 1240). In step 1242, the arm 620 is pivoted vertically. The linear actuator 674 retracts grippers 630, 640 to their original position and gripper 640 is opened to release the strand sections (steps 1244, 1246). The arm 620 is subsequently pivoted up to its horizontal position.

The spliced end of the strands is approximately 19 in. (48 cm) from the edge of the outer container. Since there are two strand sections spliced together, a total of approximately 40 in. (102 cm) of strand hangs outside the container assembly 300 during operation.

The only time consideration that is important to the auto splicing procedure is that the strand ends be spliced prior to another strand break or system stoppage.

The auto splicer is controlled by a control system that evaluates three different signals or indicators that determine the subsequent operation of the auto splicer. The first indicator is whether the strand sensors detect the presence of a strand. The second indicator is a timer that indicates how full the container assembly is. The third indicator indicates whether the attenuator 100 is above the scrap chute 360 or the container assembly 300. The particular action of the auto splicer depends on these three indicators. The processor generates and transfers output signals to the auto splicer/cutter that are related to these three indicators.

The cutter assembly 660 has a sequence of operation independent from the auto splicing sequence of operation. When the initial strand is laid onto the arm 620 by the traversing attenuator 100, only the cutter assembly 660 is used to cut the end clean, since no splicing steps or procedure is needed.

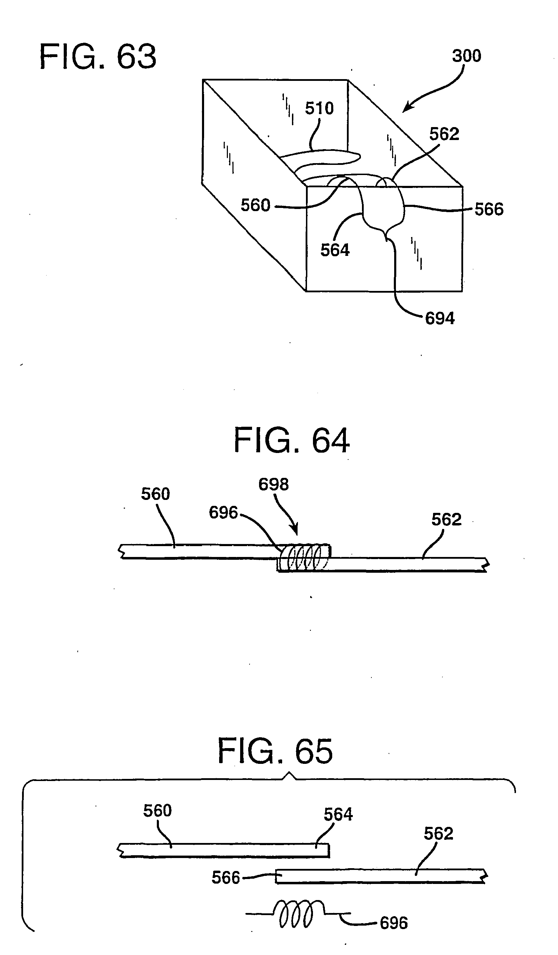

A package with strand sections with spliced ends is shown in Fig. 63. Strand sections 560, 562 have ends 564, 566, respectively, that hang over the edge of the container assembly 300. Ends 564, 566 are spliced together by splicing assembly 610 to form splice 694.

Once the package of strand has been dried and, preferably, the outer container removed, the strand ends that were temporarily spliced by the auto splicer/cutter 600 are manually cut as close to the outer surface of the strand package as possible. The newly cut ends are overlapped and filament wrapped using the splicer. The strand ends 564, 566 are cut adjacent to the side of the package and are overlapped as shown in Fig. 64 a distance equal to the width of the manual splicer.

The ends are wrapped with filament 696 so that both ends of the strands are covered, yielding a continuous strand with a permanent splice 698. The splice is usually positioned outside the outer surface 506 of the block of strand, as shown in Fig. 63. Alternatively, the splice may be positioned inside of the block, as defined by the perimeter of the dried block of strand. The location of the splice is determined by the location of where the strand sections 560, 562 are cut.

A suitable manual splicer is available from Mill Devices Co. of Gastonia, N.C. as Illman wrap splicer, Model No. 3000.

As the artisan will appreciate, there are many possible variations on the splicing methods and apparatuses that would be consistent with the principles of the invention. Some of the variations are identified below.

The strand may be spliced manually or by machine during or after collection. The strand may be spliced during an interruption in the collection process.

Instead of permanently splicing the strand ends after the package has been dried, the ends may be permanently spliced during the strand collection process. If the ends are permanently spliced during operation, the ends may be placed into the container assembly as soon as they are spliced, where they will be covered by successive layers of deposited strand.

The spliced strand ends may be cut at a point outside or inside of the container assembly. The strand ends may also be cut at a position where the ends are inside of the mass of strand.

### Strand Drying

As previously discussed, the strand is coated with a size material which adheres the strands to itself when the strand dries. The strand package is preferably dried to reduce package moisture collected during the collection process and in the final product to the desired level, for example, to the point where the size adheres the strand to itself sufficiently to be self-supporting. There are several ways that the package may be dried.

The preferred method of drying the package is to use a dielectric oven to dielectrically dry the package. Dielectric drying is several times faster than convective drying. For example, a 750 lb. (340 kg) bulk strand package may take 18 to 20 hours to dry in a conventional oven and 1 to 2 hours in a dielectric oven.

The use of polypropylene as the outer container 300 facilitates the dielectric drying because a metal container would spark in the dielectric oven. Any known dielectric oven may be used to dry the strand package. An additional advantage of dielectric drying is that the dried size on the strand remains white instead of turning yellow as is typically the case when the package is dried in a convective oven.

A suitable dielectric oven has a volume sufficient to accommodate the desired package size and a power sufficient to remove the residual moisture in a desired time. For the illustrated embodiment, a suitable oven is available from Strayfield Fastran in the United Kingdom, which has a power of 85 watts.

As the artisan will appreciate, there are many possible variations on the method of drying that would be consistent with the principles of the invention. Some of the variations are identified below.

The package may be dried while the strand is collected or in an in-line rotating drying process.

Alternatively, the package could be dried by a convective oven that uses forced air to dry the strand. By heating the package with a strong convective air stream during the collection process, some of the forming moisture can be eliminated without relying solely on conduction to remove the moisture. The perforations in the outer container enable the forced air to penetrate the package. Accordingly, since the package will be at a higher temperature when it enters the convective oven, less energy will be needed to dry the package.

### Automatic Thread Up System

The strand collection system 80 may include an auto thread up system to assist with the start of the strand collection process. Once an operator threads strand in the auto thread up system, the system automatically threads the attenuator 100 and the strand collection process begins.

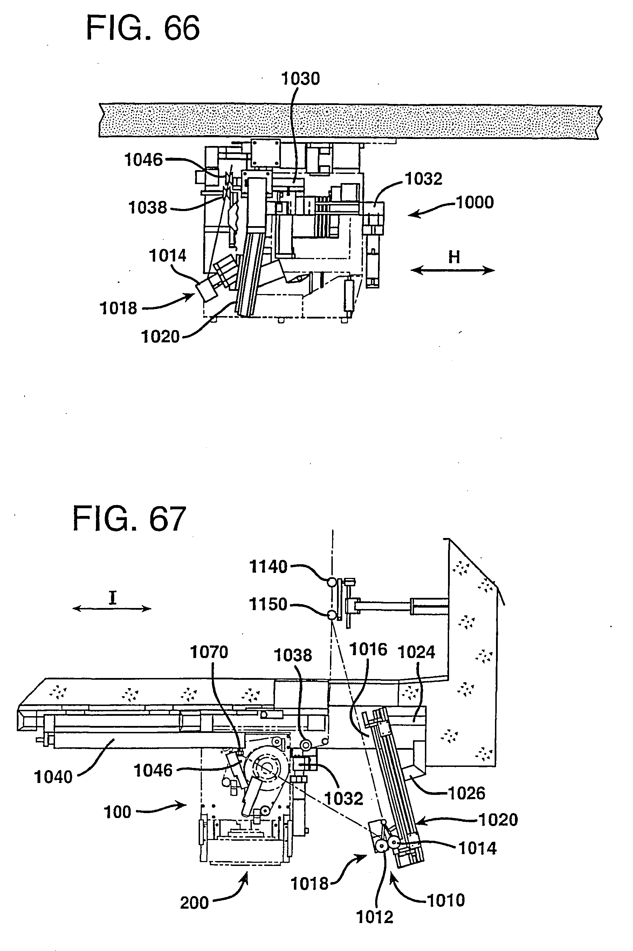

One implementation of an auto thread up system 1000 is shown in Figs. 66-78. The auto thread up system 1000 includes a pull roll assembly 1010, an oscillating/drag idler arm 1030, and an extension arm 1040. The assembly 1010 and arms 1030, 1040 are used to attenuate a strand and move the strand between the belts 112, 132 of the attenuator 100.

The pull roll assembly 1010 includes pull rolls 1012, 1014 that operate as an attenuator and apply tractive forces on a strand to attenuate filaments from bushing 10. The pull rolls 1012, 1014 are mounted on a pull roll actuator 1020 for movement between an upper position 1016 and a lower position 1018 as shown in Fig. 67. The pull roll assembly 1010 is mounted to a support by top and bottom angle supports 1024, 1026, respectively.

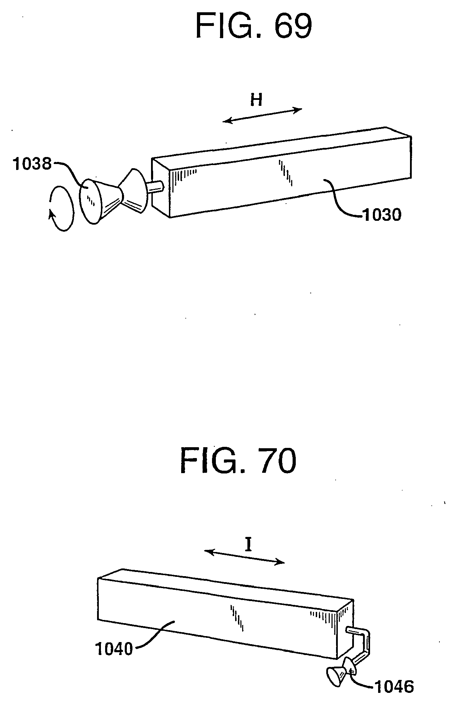

The oscillating/drag idler arm 1030 is moved between a retracted position 1034, a center position 1035, and an extended position 1036 by a linear actuator 1032. The oscillating/drag idler arm 1030 includes a contact surface that engages the strand during the auto thread up process. The contact surface is an idler 1038 is mounted at one end of the arm 1030 as shown in Fig. 69. In the illustrated embodiment, idler 1038 is a bowtie idler. The movement of the oscillating/drag idler arm is controlled by a servo drive system that receives inputs from the PLC processor. The servo drive system includes logic, such as a software code, that is activated by an output signal from the processor.

The extension arm 1040 moves between a retracted position 1042 and an extended position 1044. The extension arm 1040 is mounted on the side of the linear actuator assembly 170 from which the attenuator 100 is suspended. The extension arm is driven by an air cylinder and has a contact surface such as an idler 1046 mounted at one end of the arm 1040, as shown in Fig. 70. In the illustrated embodiment, idlers 1038 is a bowtie idler, but may be any other idler structure. The operation of the air cylinder is controlled by the PLC processor.

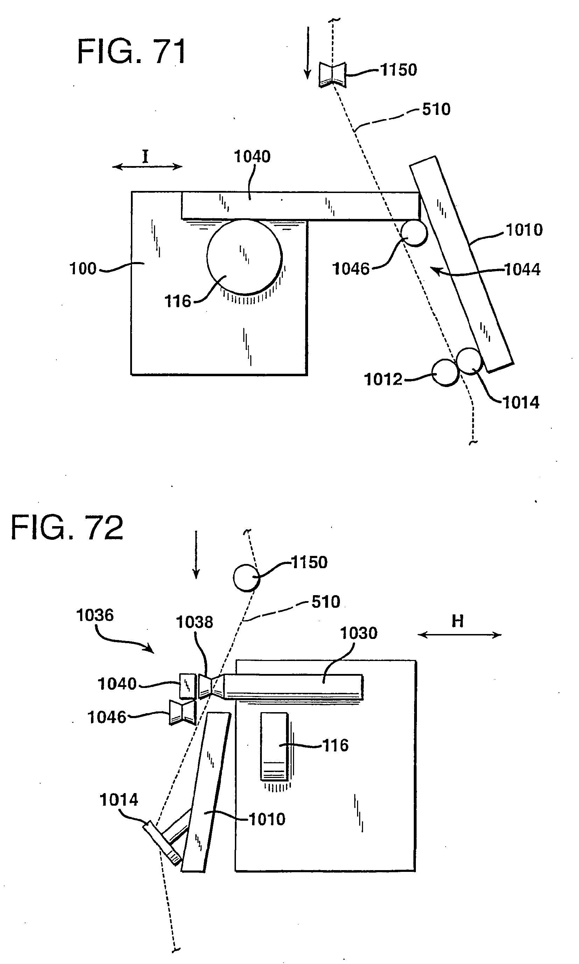

The operation of the auto thread up system 1000 will now be described in detail in reference to Figs. 71-79. Initially, the pull rolls 1012, 1014 do not rotate and are in their lower position 1018. The attenuator 100 is in its start-up position near the scrap opening or waste collector. The oscillating/drag idler arm 1030 and the extension arm idler 1040 are in their retracted positions. The scrap chute 1120 is in its upper position to catch the leading end of the strand when the system begins operation. An empty container assembly 300 is positioned on the vibrating mechanism 400.

An operator prepares the glass filaments that are draining from the bushing 10 by collecting them into a single large bundle (step 1400). The extension arm 1040 is moved to its extended position 1044 adjacent the pull roll assembly 1010 as shown in Fig. 71 (step 1402). The oscillating/drag idler arm 1030 is moved to its extended position 1036 as shown in Fig. 72 (step 1404). The attenuator 100 is moved to its start up position if not presently in place (step 1406). In step 1408, the pull roll actuator 1020 raises the pull rolls 1012, 1014 to their upper position 1016. The pull rolls 1012, 1014 start rotating at a thread up speed (which is less than operating speed) of approximately 200 ft./min. When the control system processor indicates that the system is ready for the strand, the operator starts the auto thread up system which initially moves the extension arm and the oscillating/drag arm.

The operator threads the strand to a primary idler assembly 1140 and a bowtie idler assembly 1150 and between the pull rolls 1012, 1014 (steps 1410, 1412). While the strand is running in the pull rolls 1012, 1014, the pull roll actuator 1020 moves the pull rolls 1012, 1014 to their lower position 1018 (step 1414).

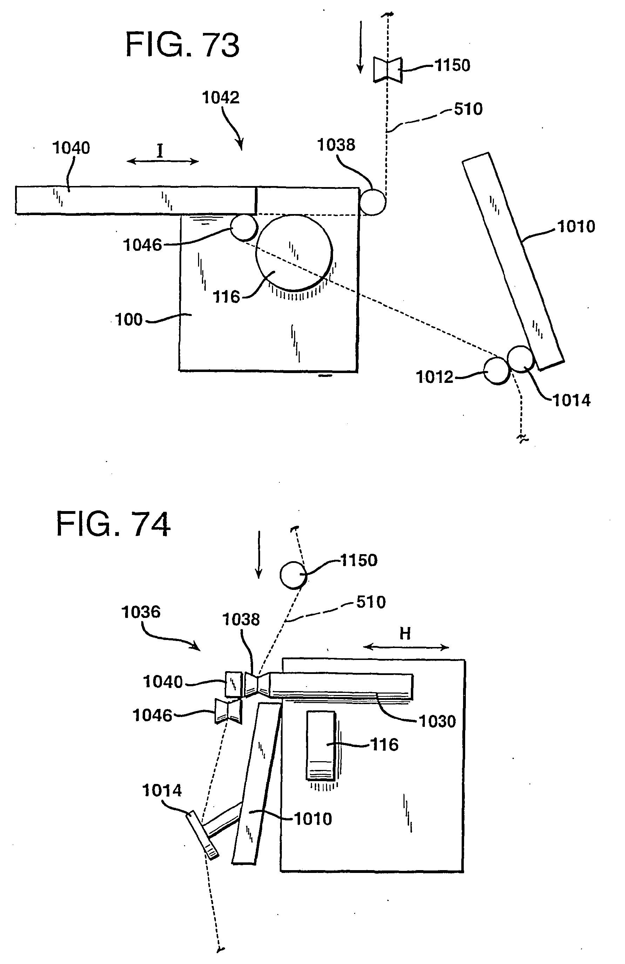

In step 1416, the extension arm 1040 is retracted toward the attenuator 100 along the direction of arrow "I" in Fig. 71. The extension arm 1040 retracts to its retracted position 1042 and the extension arm idler 1046 engages the running strand and pulls it toward an outer edge of the attenuator 100 as shown in Fig. 73. As the extension arm 1040 retracts, it lays the strand onto the oscillating/drag idler 1036 as shown in Figs. 73 and 74. The strand continues to be attenuated by pull rolls 1012, 1014.

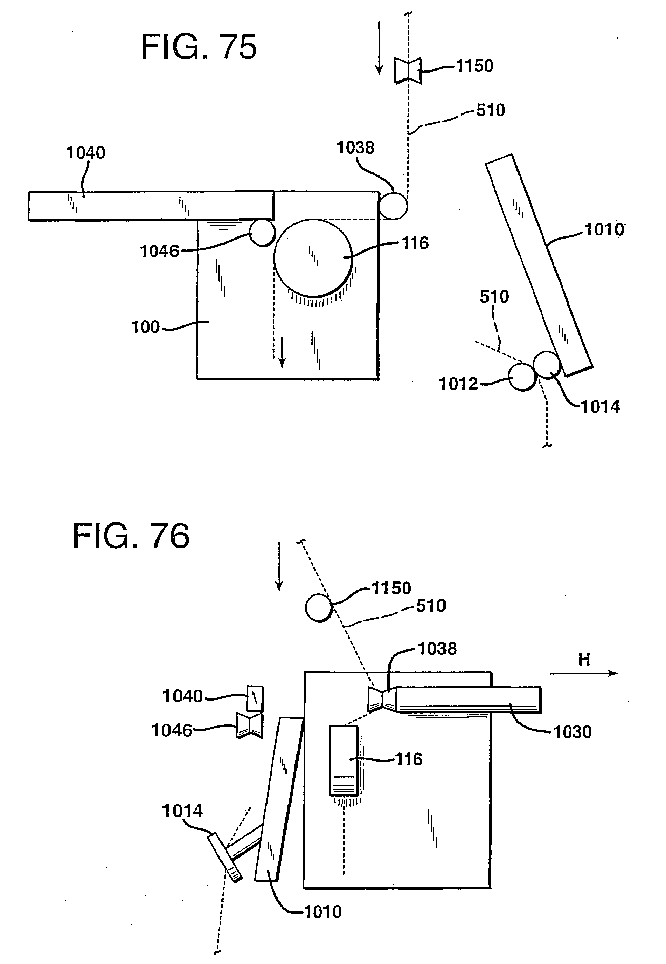

At this point, the oscillating/drag idler arm 1030 is retracted in the direction of the arrow "H" in Fig. 76 (step 1418). Since the strand is engaged with the idler 1038, the strand is moved between the nip point of the belts 112, 132. The belts 112, 132 of the attenuator 100 are running as the strand is brought across them. The strand is grabbed at the nip point of the belts 112, 132 and advanced through the belts and to the deflector assembly. An idler 180 mounted on the attenuator frame 106 limits the drag angle of the strand (step 1420).

The attenuator 100 and the pull rolls 1012, 1014 experience a change in tension in opposite directions to show that the strand has been effectively picked up by the attenuator 100 (step 1422). The attenuator belts 112, 132 accelerate to operating speed. The tail of the glass strand being pulled into the attenuator 100 is cut off by a knife that is attached to the single pressure-roll assembly 140 of the idler wheel assembly 130 (step 1424). The knife is mounted approximately 0.001 in. (.025 mm) from the side of the attenuator 100. The strand is cut immediately after the strand is pulled between the belts 112, 132. The cut strand portion is passed through the pull rolls to a scrap opening 1170 as shown in Fig. 75 (steps 1426, 1428). In step 1430, the pull rolls 1012, 1014 are stopped.

After the attenuator 100 reaches its operating speed, the attenuator 100 indexes from its start up position to its filling position (step 1432). The strand from the attenuator 100 is laid on the auto splicer/cutter 600 as the attenuator 100 indexes. The auto splicer/cutter 600 grabs the strand and cuts the strand end between the scrap chute 1120 and the container assembly 300 (step 1434).

The scrap chute 1120 is positioned behind the container assembly 300 and is extended to collect the cut strand end upon start up. In step 1436, the chute 1120 directs the strand to a scrap opening or waste collector 1170 (shown in Fig. 3).

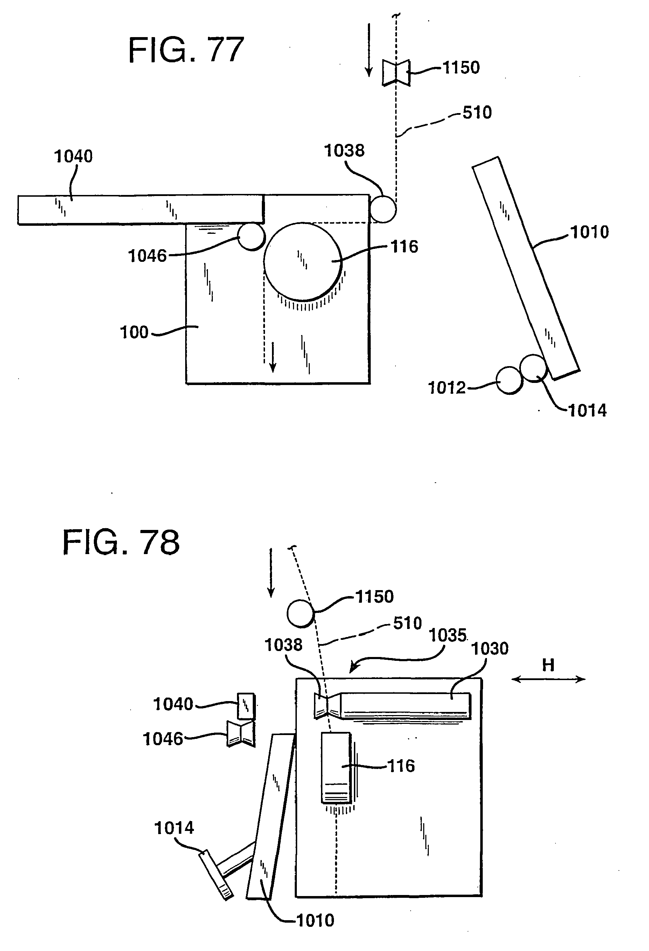

During operation of the attenuator 100, the oscillating/drag idler arm 1030 oscillates about its center position in the direction of arrow "H" in Fig. 78 to guide the strand 510 across the width of the attenuator belts 112, 132 (step 1428). The arm 1030 oscillates the strand across the width of the belts to wear the belts evenly. The arm 1030 is oscillated by an actuator 1032, which is the servo drive system that receives input from the PLC processor. The frequency of oscillation may be any frequency that does not adversely affect the strand collection process. The attenuator 100 deposits strand into the container assembly 300 pursuant to the operating sequence (step 1438).

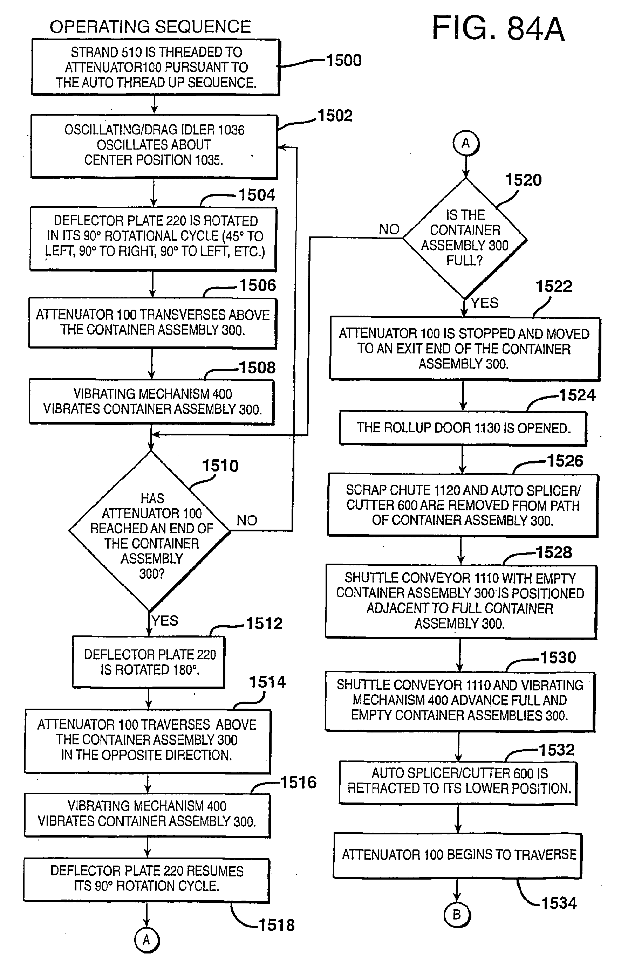

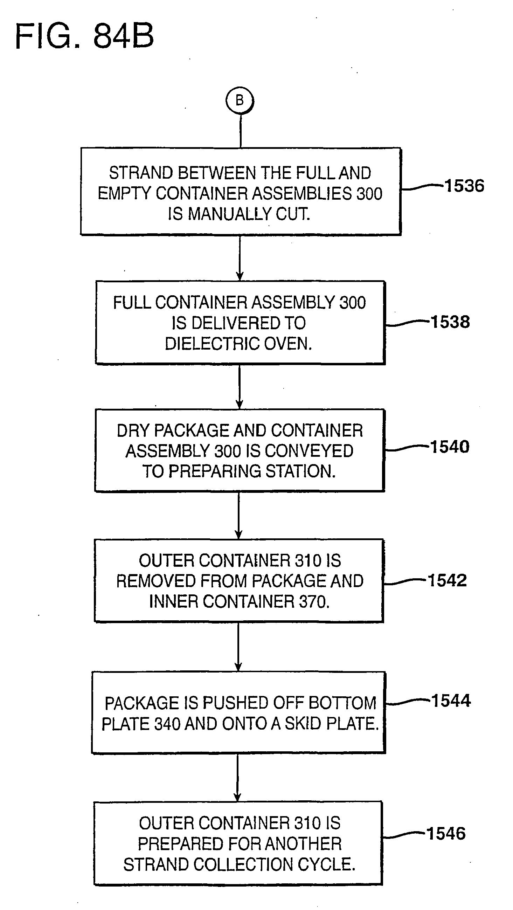

The strand collection process will be described in reference to Figs. 84A-B. Prior to and while the operator prepares the strand for threading into the strand collection system, the glass is deflected by an upper glass diverter 1160 around the strand collection components and into the scrap opening 1170 until the operator is prepared to start up the auto thread up system. The diverter 1160 is a plate mounted at an angle with respect to a vertical plane and located between the upper level and lower level as shown in Fig. 3.

The container assembly 300 is assembled and transported to the forming area. Strand 510 is thread to the attenuator 100 by auto thread up system 1000 (step 1500). The attenuator 100 is brought up to operating speed and initially dumps the attenuated strand into the scrap opening or waste collector 1170. The attenuator 100 is brought up to its operating speed before directing strand into the container assembly 300 to ensure that all of the collected strand has the desired filament diameters.

In step 1502, the oscillating/drag idler arm 1030 oscillates about its center position. When the attenuator 100 has reached its operating speed, which takes only a few seconds, the attenuator 100 and deflector assembly 200 are moved from their start up position, over the auto splicer/cutter 600, and to their filling position above the container assembly 300. The PLC has an internal timer that is used to determine the fill time of the container assembly. The filling time is set prior to the strand collection operation.

When the PLC starts its timing mechanism, the attenuator 100 and deflector assembly 200 traverse above and direct strand into the container assembly 300 and the deflector assembly 200 begins a 90° rotation cycle of the rotating ring 210 (steps 1504, 1506).

When the attenuator 100 reaches an end of the container assembly 300, the rotating ring 210 is rotated so that the deflector plate 220 faces the direction opposite that which the attenuator 100 just traveled (step 1510, 1512). In step 1514, the attenuator 100 reverses direction and traverses back toward the first edge of the container assembly 300. The deflector assembly 200 repeats its 90° rotation cycle (step 1518). When the attenuator 100 reaches the first edge, the deflector arm 220 rotates 180° to turn around again and the attenuator 100 reverses direction. The process is repeated until the container assembly 300 is full.

During collection of the strand, the container assembly 300 is vibrated every 15 minutes for a period of 1 minute. This vibration pattern is repeated during the collection process (steps 1508, 1516).

Prior to the container assembly 300 being full, an automatic guided vehicle (AGV) is called to pick up the full container assembly 300. The AGV is an automatic forklift that is commonly used in the industry to pick up and drop off loads. The path of the AGV is determined by magnetic strips in the floor of the facility, a laser guiding system, or a global positioning satellite (GPS) system. The AGV waits for the full container assembly 300 to index out of the filling station. A sensor at the filling station indicates that the AGV is in position for pickup of the full container assembly 3 00.

When the PLC timer indicates that the filling time is complete, the attenuator 100 oscillation is stopped and positioned over the container assembly 300 at a position towards the exit end referred to as the transfer position. When the container is full, the attenuator 100 is stopped and moved to an exit end of the container assembly 300 (steps 1520, 1522). In steps 1524, 1528, the rollup door 1130 opens and the shuttle conveyor 1110 transporting an empty container assembly 300 moves adjacent to the vibrating mechanism 400.

The shuttle conveyor 1110 has an upper deck 1112 and a lower track portion 1114 as shown in Fig. 3. The upper deck 1112 is mounted on the lower portion 1114 for movement relative thereto when the shuttle conveyor 1110 is adjacent the vibrating mechanism 400. The lower track portion 1114 has rollers that run on rails. An ac motor drives the rollers of the shuttle conveyor 1110 to position the cart adjacent to the vibrating mechanism 400. The shuttle conveyor 1110 spans the scrap opening 1170 when it moves adjacent to the vibrating mechanism 400. The upper deck includes a belt on which the empty container assembly 300 is positioned. The belt wraps around two rollers which are driven by internal dc drives to advance the empty container assembly 300 when the shuttle conveyor 1110 is adjacent the vibrating mechanism 400. The shuttle conveyor 1110 includes two sets of sensors 1116 at one end that detect the presence of a container assembly on the upper deck. The sensors 1116 are preferably implemented as photo or optical detectors. The shuttle conveyor 1110 also includes a position switch 1118 located at an opposite end of the conveyor 1110. The position switch 1118 detects when the upper deck is in a position to transfer the container to the vibrating mechanism 400. Position switch is preferably implemented as a contact switch, as appreciated by the artisan. During operation, an empty container assembly 300 is positioned on the upper deck.

In step 1526, the scrap chute 1120 and the auto splicer/cutter 600 are moved out of the path of the container assemblies. The empty container assembly 300 is indexed to just behind the filling station (step 1530). The auto splicer/cutter arm 620 is moved to an up position that allows the empty container assembly 300 to index below the arm 620.

The container sensors of the vibrating mechanism 400 are used to position the filled and empty container assemblies 300. The shuttle conveyor 1110 is operated to run to force the empty container assembly 300 against the filled container assembly 300. The incoming empty container assembly 300 blocks sensor 494. The belt 410 and the shuttle conveyor 1110 index both container assemblies 300 until sensors 494, 496 are clear, which signals that the full container assembly has been indexed to the transfer deck (step 1530).

The deflector assembly 200 is indexed to its operating position. The attenuator 100 is indexed back to the waiting empty container assembly 300. A timer 1602 in the control system resets and begins timing. The vibration belt 410 reverses until sensors 494, 498 are clear and contact is made with sensor 496.

In step 1532, the auto splicer/cutter arm 620 is retracted to a lower position. In step 1534, the attenuator 100 begins to traverse above the empty container assembly 300 and the strand collection cycle begins again. The scrap chute 1120 extends to protect the belt 410 from glass and other particles. In step 1536, the strand between the full and empty container assemblies 300 is manually cut. Alternatively, the strand between the two container assemblies may be cut by a machine.

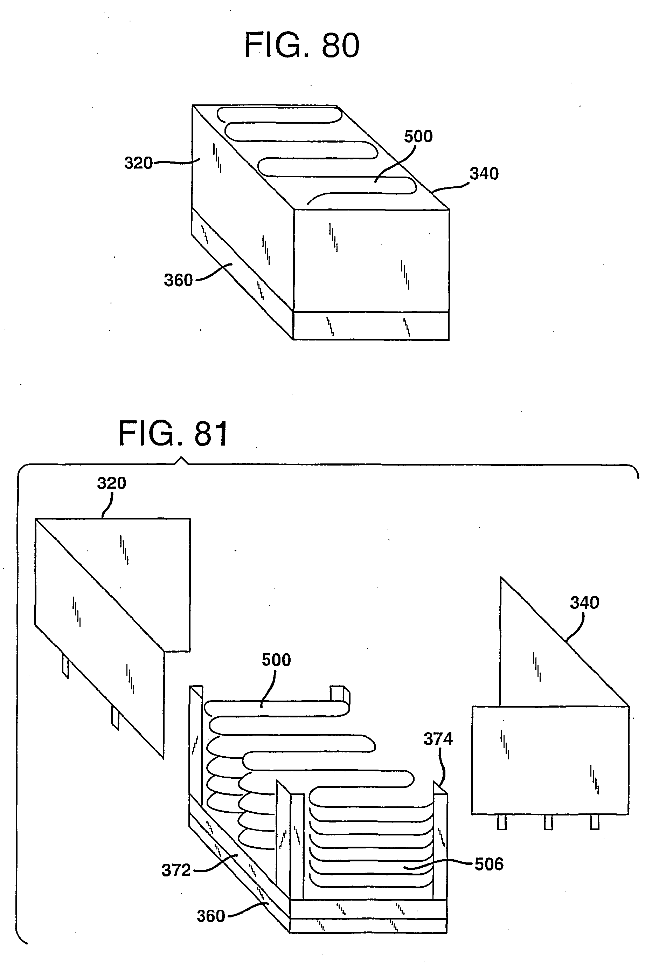

Turning to the handling of the strand package, the container assembly and strand are placed in a dielectric oven and dried as shown in Fig. 80 (step 1538). The self-supporting block of strand includes an outer surface 506, shown in Fig. 81. Since the block of strand was dried while it was in the container assembly 300, the sides of the outer surface 506 resembles the inner shape of the outer container 310 which can be tailored to end user specifications. The outer surface 506 is also defined by the top level of the block of strand as well. After the package is dried, any strand ends are manually spliced.

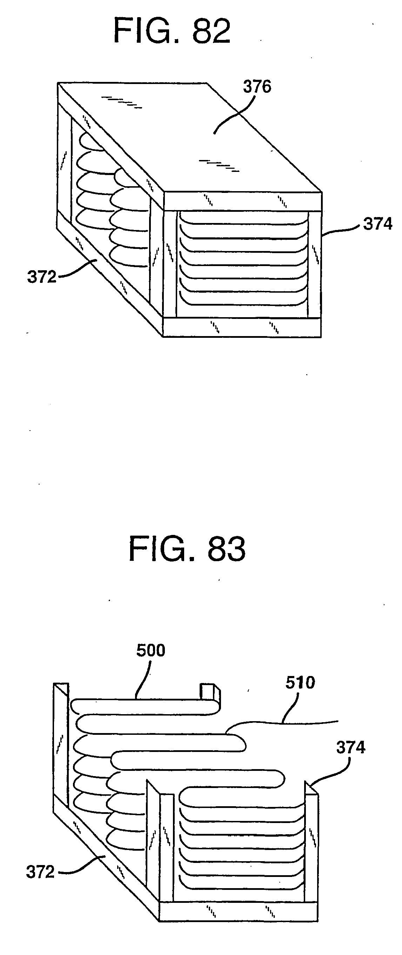

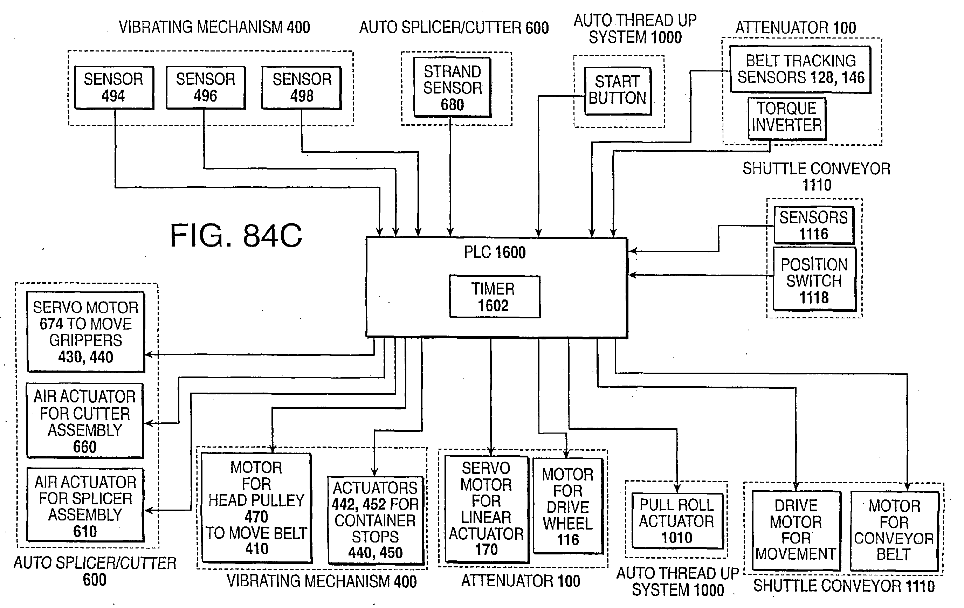

The outer container 310 is removed from the package at the preparation station either manually or automatically as shown in Fig. 81 (steps 1540, 1542). For the manual removal operation, the corner brackets 350 are removed, and the two sides 320, 340 are separated from each other and the package. In the automated removal process, the corner brackets 350 are automatically removed. The outer container sides 320, 340 are lifted straight up off of the strand package. In step 1542, the package with the bottom tray 372 and columns 374 is pushed off of the bottom plate 360 onto a skid plate (not shown). The bottom tray 372 and the columns 374 adhere to the package of strand because of the adhesion of the dried size material on the strand. A cap 376 is placed on the top of the package as shown in Fig. 82. The package is wrapped for protection. The skid plate may be transported to an end user by any appropriate mechanism. The outer container is used for a subsequent collection cycle (step 1546). The inputs and outputs of the control system will be briefly described in reference to Fig. 84C. The control system includes a PLC 1600 that has an internal timer 1602. The PLC 1600 receives input signals from a variety of sources and generates output signals to activate operating mechanisms of the strand collection system components.

The functional block diagram shown in Fig. 84C illustrates some of the inputs the PLC 1600 receives and the corresponding outputs or results to those inputs. Input signals are received from the container sensors 494, 496, 498 on the vibrating mechanism 400, the strand sensor 680 of the auto splicer/cutter 600, the operator input using the start button of the auto thread up system 1000, and the torque inverter of the attenuator 100 which detects a change in torque on the drive wheel 116.

Input signals received from the sensors 1116 on the shuttle conveyor are processed by the PLC. Based on the input signals received from the sensors, the PLC 1600 will send an output signal to the motor for the head pulley 470 to advance belt 410 or the actuators 442, 452 for the container stops 440, 450. Also, the PLC 1600 will send an output signal to the drive motor that moves the shuttle conveyor 1110 or the motor that advances the if the position switch 1118 indicates that the upper deck 1112 is in a position to transfer the container to the vibrating mechanism 400.

When the container sensors 494, 496, 498 on the vibrating mechanism 400 sense that an empty container assembly 300 is in its filling position, the PLC 1600 generates a signal instructing the linear actuator 170 to traverse the attenuator 100 from its start up position to its filling position.

When the strand sensors 680 on the auto splicer/cutter 600 sense the presence of a strand on the auto splicer/cutter arm 620, the PLC 1600 instructs the auto splicer/cutter servo motor 674 to operate grippers 630, 640 to grip and advance the strand to the cutter and splicer assemblies. When a second strand is sensed by the strand sensors 680, the PLC 1600 instructs the servo motor 674 to bring the other strand to the cutter and splicer assemblies. When the strands are ready to be spliced, a signal is sent to the air actuators for the cutter and splicer assemblies as shown.

A change in tension on attenuator 100 during the auto thread up process indicates that the strand is being attenuated by the attenuator 100. After the tension changes, the attenuator 100 is brought up to operating speed. In response to a change in torque on the attenuator drive wheel 116 during operation, the attenuator drive wheel 116 is stopped. Each change is sensed by the torque inverter of the attenuator 100. When the PLC 1600 has received a signal that the torque has changed, then the motor for the drive wheel 116 is stopped.

When the operator starts the auto thread up process by pressing the start button, the pull roll actuator 1010 moves the pull rolls 1012, 1014 to their upper position. The timer 1602 is used to determine the filling time for a container assembly 300 and the periods of vibration of the container assembly during the collection of strand.

When the belt tracking sensors 126, 146 sense the lateral movement of one of the belts, the PLC 1600 generates a signal instructing the appropriate nose bar to pivot to adjust the tracking of the belt. The position of the scrap chute 1120 is controlled by the PLC 1600. The scrap chute 1120 is extended and retracted by a pneumatic cylinder. The scrap chute may be moved by any other suitable drive mechanism, such as gears or a motor, as appreciated by the skilled artisan.

### Attenuator Stoppage

Now the sequence of operation when the attenuator 100 is stopped is described. When the torque on the attenuator inverter is sensed to have dropped, for example due to a strand becoming jammed between the belts, the attenuator 100 is stopped using a dynamic brake, and the timer in the PLC is paused. The deflector assembly 200 is returned to its home position. The attenuator 100 is traversed to its start-up position, passing over the auto splicer/cutter 600.

The attenuator belts 112, 132 are rotated forward one revolution to loop the strand across the auto splicer/cutter 600. The strand is cut between the attenuator 100 and the container assembly 300. The attenuator belts 112, 132 are rotated backwards to eject trapped strand from the attenuator 100 and the ejected strand is carried away by the scrap chute 1120.

After removing the strand, the operator re-energizes the attenuator 100 and returns it to its start up position. The auto thread up system rethreads the strand to the attenuator 100. Once the attenuator belts 112, 132 are at operating speed, the attenuator 100 indexes back over the auto splicer/cutter 600. The cutter assembly 660 cuts the strand between the scrap chute 1120 and the container assembly 300. The splicer assembly 610 gathers both strand ends and splices them together.

Another problem encountered by the attenuator 100 is a "roll wrap" when the strand wraps around one of the belts 112, 132. As the strand is wrapped around an attenuator belt, the torque on the belt will increase. The amount of torque is sensed by the control system. A sudden increase in torque on the attenuator belts 112, 132 indicates that a strand has wrapped around a belt.

The attenuator 100, deflector assembly 200, and auto splicer/cutter 600 are operated in a manner similar to that just discussed. The operator indexes the attenuator 100 to a position located in front of the container assembly 300. The operator turns off the power to the attenuator 100 and removes the wrapped strand. The attenuator 100 is returned to its start-up position and the auto splicer/cutter cuts the strand as previously discussed.

Sometimes the strand may break and the attenuator 100 is not stopped quickly enough to retain the strand. If the lost end of the strand is in the container assembly, the operator will switch the strand collection system to manual operation and attempt to locate the lost end. The lost end of the strand is then laid over the arm 620 of the auto splicer/cutter 600 and the system is restarted.

### Multiple Strand Package

In some end-use applications, it is preferred that a package have multiple strands, rather than a single strand. Filaments attenuated from a bushing may be divided into multiple strands or splits by a splitter shoe which has fingers and grooves that correspond to the number of strands to be formed.

When more than one bundle of filaments is used to form a package, the run out of the strands from the package presents difficulties. If multiple bundles or strands are pulled out of the package simultaneously, individual strands may lead or lag with respect to other strands, which may cause looping and curling in a bundle of strands. A variation in one of the strands creates a difference in the pullout rate between the strands. If the pullout rates or attenuation rates during collection are not equal, some strands will be shorter than others strands and the difference in length will accumulate and cause problems in the form of loops or knots. An example of a variation is a difference in filament diameter which may arise when the temperature gradient along the bushing bottom plate is not uniform.

The above problem is addressed by the concept of "authentically linking" the filaments or strands. Authentic linking involves coupling various bundles of filaments together during the strand collection process to continuously reset any discrepancy between them as they are simultaneously pulled out of the package. Even though individual bundles will follow different paths during the collection process, the bundles are linked together at periodic points to correct any discrepancies and prevent slippage of individual splits.

Strands of filaments are periodically coupled to each other during the strand collection process. Since the filaments are coated with a size material that has adhesive characteristics, the filaments or strands adhere to each other when they are brought into contact and the size material dries. The dried size material provides a sufficient bond between the contacted strands so the strands remain linked when they are deflected and deposited in the container assembly 300. The distance between the authentic links is variable.

There are several ways to implement the concept of authentically linking strands together.

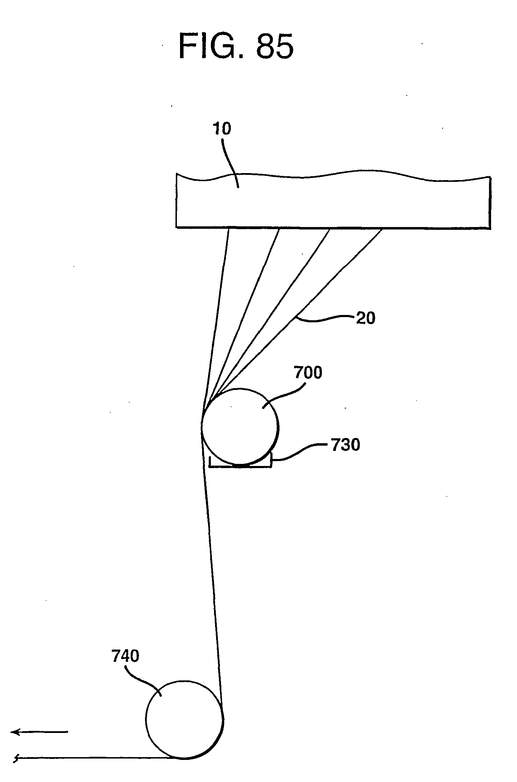

One suitable apparatus and method for creating authentic links is illustrated in Figs. 85-91. The illustrated apparatus is a roll that has two functions. First, roll 700 periodically brings bundles of adjacent filaments into contact with each other to authentically link them at coupling locations along the lengths of the bundles. Second, the roll 700 applies a size material to the filaments that contact the roll 700 as they are attenuated. The roll 700 is located upstream of the attenuator 100 as shown in Fig. 85.

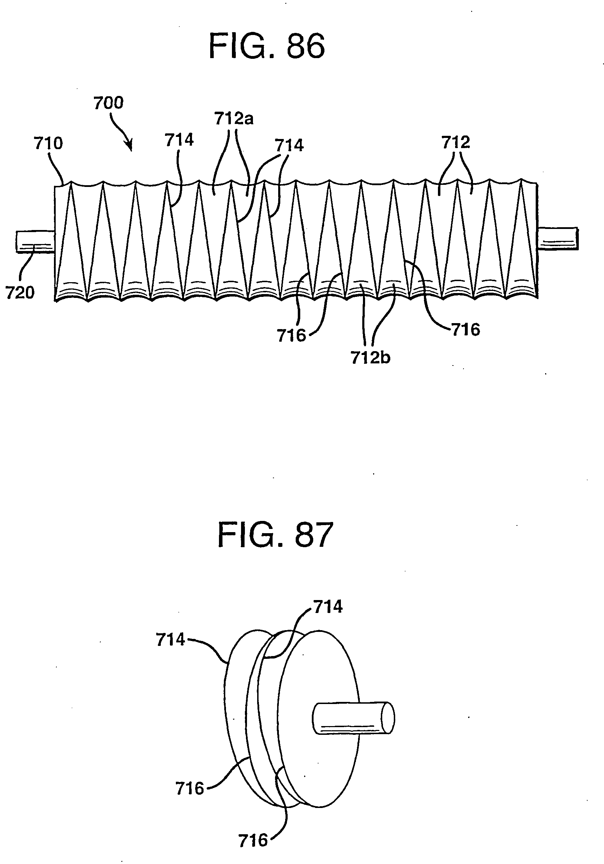

The roll 700 is generally cylindrical and is mounted on a shaft 720 for rotation about its longitudinal axis. The roll 700 is rotated in the direction that the filaments are attenuated by a motor (not shown). The roll 700 has an outer surface 710 with a continuous, double helix groove 712, as shown in Fig. 86.

The lower portion of the roll 700 is immersed in a pond of size material that is held in a reservoir 730 as shown in Fig. 85. Since the roll 700 rotates, the outer surface 710 of the roll 700 is continuously replenished with the size material. The filaments are coated with the size material when they contact the outer surface 710 of the roll 700 while they are attenuated.

To simplify the explanation of the roll 700 and its operation, the groove 712 is referred to as having two parts, a right leading groove 712a and a left leading groove 712b, as shown in Fig. 86. The cross-section of the groove 712 is a gradual U-shape that is defined and bounded by adjacent peaks. Groove 712a is defined by peaks 714 and groove 712b is defined by peaks 716. As apparent in Fig. 86, grooves 712a and 712b repeatedly cross each other due to the double helix structure of groove 712.

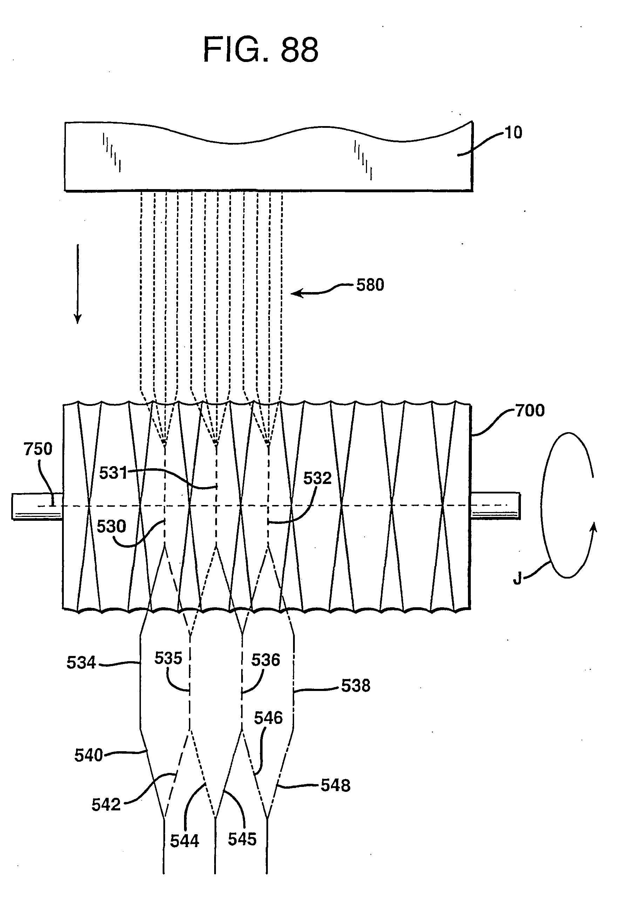

The operation of the roll 700 is now described with reference to Figs. 88-90, which show sequential positions of the roll 700 and the filaments. Initially, a fan 580 of filaments is attenuated from bushing 10 above the roll 700. The filaments are pulled by the attenuator 100, located downstream from the roll 70, across the outer surface of the roll 700. The filaments contact the roll 700 approximately along contact line 750. The peripheral extent of the contact between the roll 700 and the filaments is a function of the angle at which the filaments are attenuated around the roll 700.

To facilitate the understanding of the authentic linking concept using the roll, the filaments will be referred to as bundles or groups and subbundles or subgroups of filaments. Note that any number of filaments may form a bundle and that the arrangements of bundles of filaments discussed below are selected for explanation purposes only and are not intended to be limiting.

As the filaments contact the roll 700, the peaks 714, 716 on the roll 700 split the filament fan 580 into groups of filaments. When filaments are collected at the bottom of one of the grooves 712a, 712b of the roll, the filaments are brought into contact with each other with sufficient force to create a forced contact point. The filaments are brought together to form groups in a cyclic pattern.

Groups 530, 531, and 532 are formed by the roll 700 along the contact line 750 as shown in Fig. 88. Each group 530, 531, and 532 includes four filaments from the filament fan 580. The groups 530, 531, 532 of filaments are made up of subgroups 540, 542, 544, 545, 546, and 548. Specifically, group 530 includes filaments from subgroups 540, 542, group 531 includes filaments from subgroups 544, 545, and group 532 includes filaments from subgroups 546, 548.

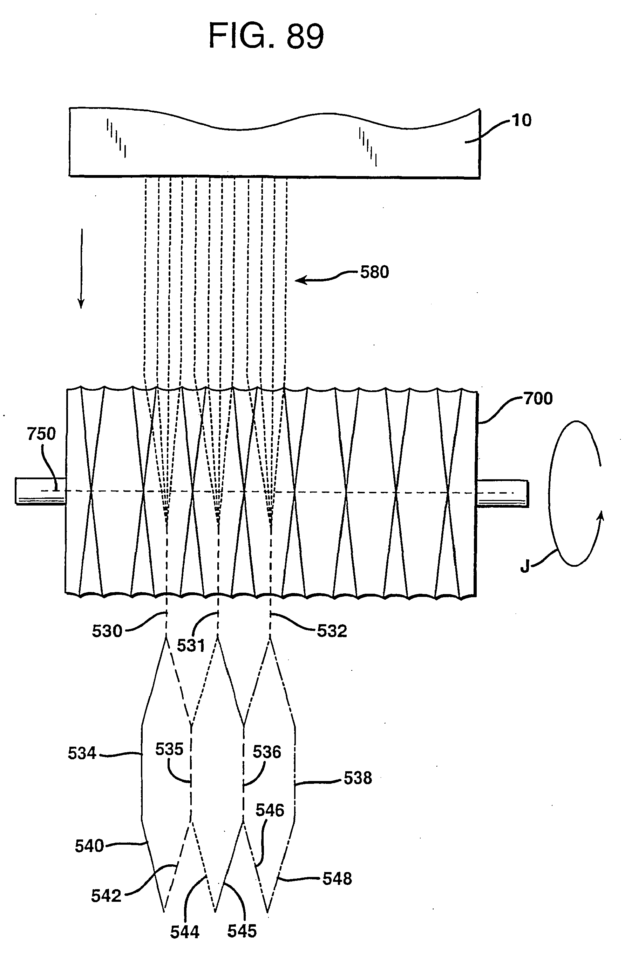

As the roll 700 rotates 90° to the position shown in Fig. 89, new peaks 712a, 712b begin to divide the filament fan 580 into different groups of filaments.

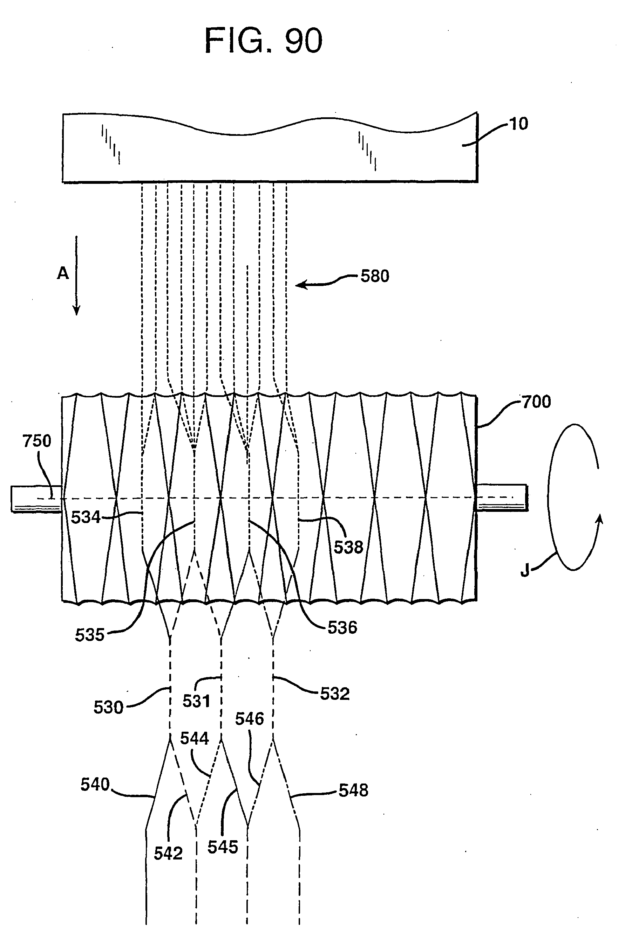

As the roll 700 rotates another 90° to the position shown in Fig. 90, different groups 534, 535, 536, and 538 of filaments are collected in the grooves of the roll 700 along the contact line 750. Groups 534 and 538 have two filaments and groups 535 and 536 include four filaments each. In this position, group 534 includes filaments from subgroup 540, group 535 includes filaments from subgroups 542, 544, group 536 includes filaments from subgroups 545, 546, and group 538 includes filaments from subgroup 548.

As shown in Figs. 88-90, adjacent subgroups of filaments are periodically linked with each other. For example, subgroup 542 is alternately linked to subgroups 540 and 544. The filaments in each group or subgroup are constantly migrating to adjacent groups or subgroups.

The number of groups that is formed is related to the width of the bushing 10 and the number of revolutions of the groove 712. In the illustrated embodiment, a fan of filaments are attenuated from a bushing with 2,000 to 5,800 filaments divided by roll 700 into 13 groups. As the artisan will appreciate, the number of groups may be varied depending on the bushing geometry and the desired characteristics of the end product.

After the filaments contact the roll 700, they pass around an idler 740 (illustrated schematically in Fig. 85) that redirects them toward the attenuator 100. In the illustrated embodiment, the idler 740 has a hyperbolic shape.

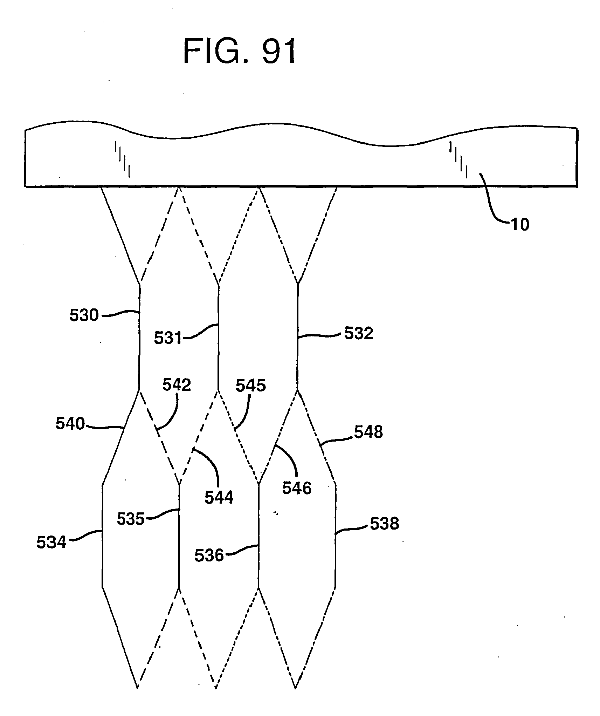

The bundles of filaments are coupled when the coating of size material on the filaments dries and acts as an adhesive coupling the filaments. A simplified schematic view of the strands exiting the attenuator 100 in a periodic linked manner is shown in Fig. 91. The groups 530, 531, 532, 534, 535, 536, 538 represent the coupling locations between subgroups or subbundles 540, 542, 542, 545, 546, 548. Each bundle of filaments includes a plurality of coupling locations. The distance between successive coupling locations or authentic links is a function of the diameter of the roll, the speed of rotation of the roll, and the attenuating speed of the filaments. In an exemplary embodiment, the strands are attenuated at 1,000 to 4,000 fpm (305 to 1220 m/min), a total of 2,000 to 5,800 filaments attenuated from the bushing are divided into 13 groups of 150 to 450 filaments each by the roll 700, which has an maximum outside diameter of 3 in. (7.5 cm), a length of 20 in. (51 cm), and is rotated at a speed of less than 250 rpm. The strand produced thus has a spacing from the beginning of one coupling location to the beginning of the next coupling location at which the same bundles of filaments are brought together. The spacing between coupling locations may be varied depending on the end user's run-out process requirements.

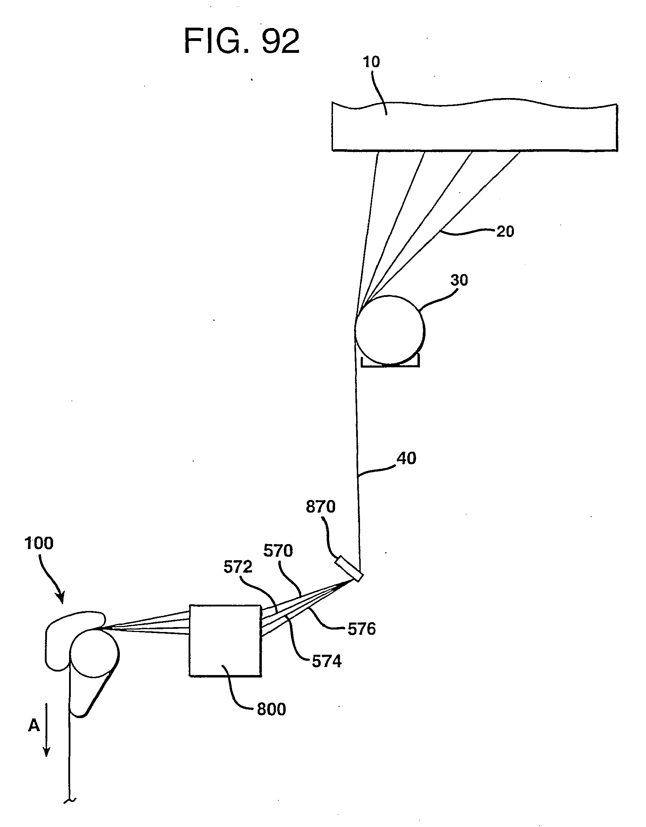

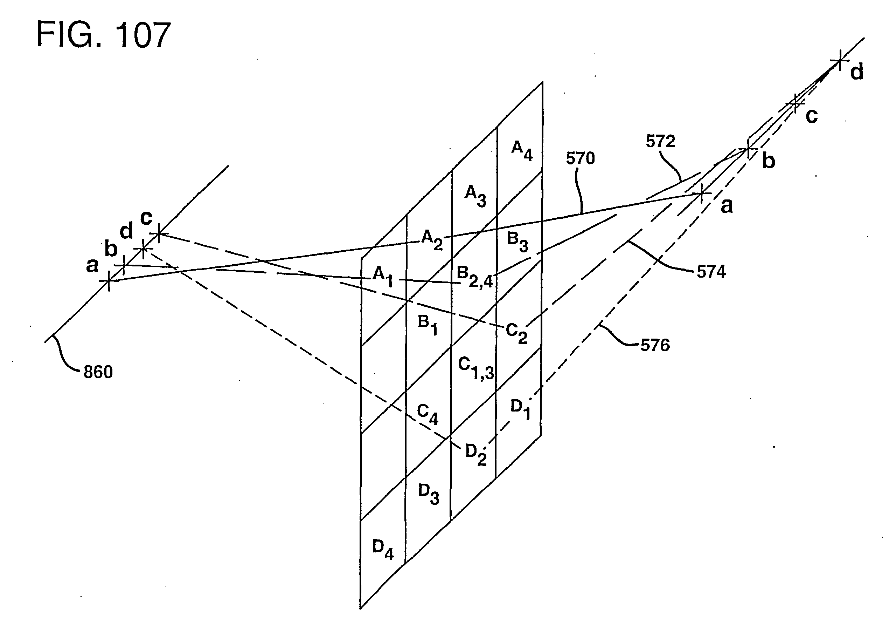

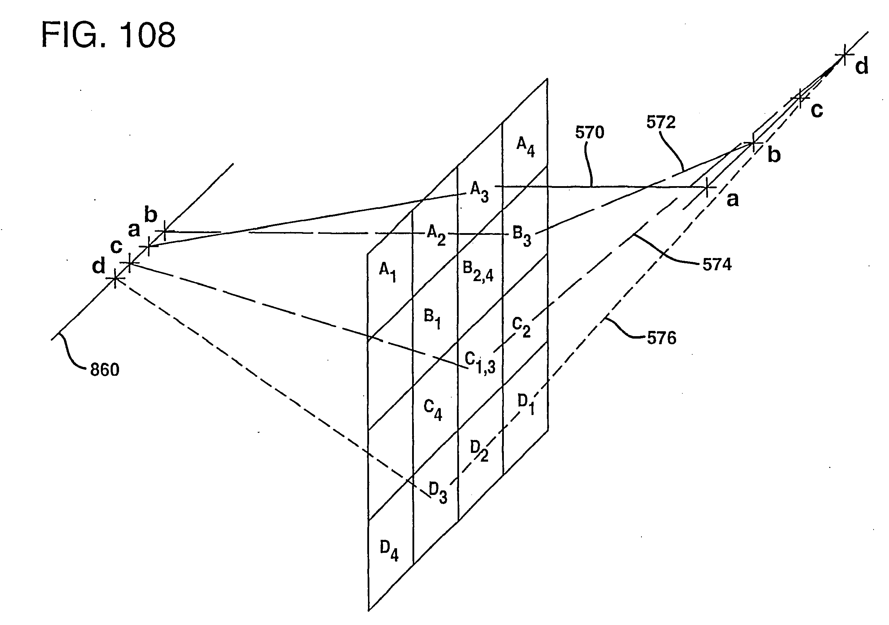

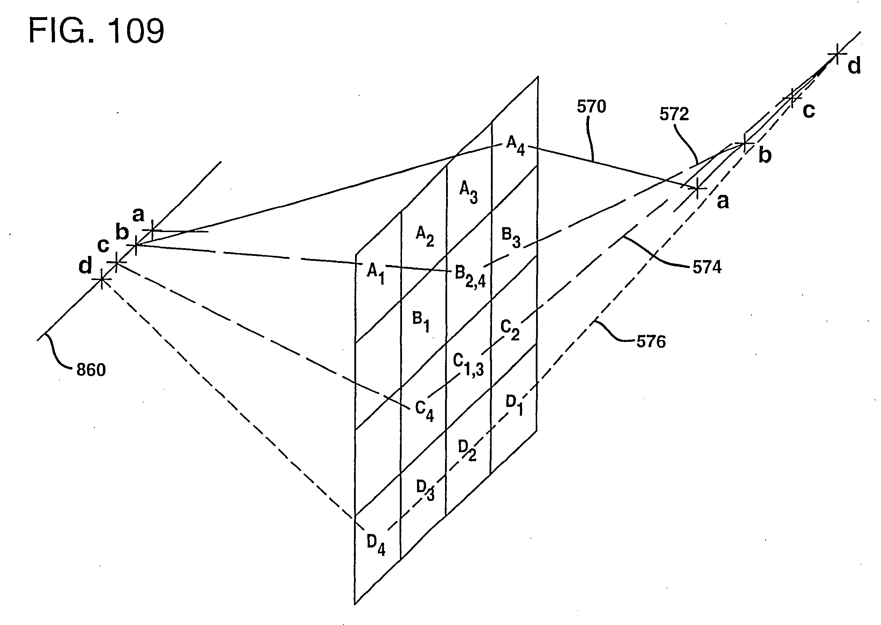

An alternative apparatus and process for coupling bundles of filaments together is illustrated in Figs. 92-111. In this approach, planes of bundles or splits are moved relative to each other to cross the bundles in each of the planes to link the bundles. This apparatus is referred to herein as a sine traverse mechanism.

The sine traverse mechanism moves planes of strands relative to each other to link the strands together. The terms split, bundle, and strand will be used interchangeably. The sine traverse mechanism of the illustrated embodiment moves ten splits in each of four horizontal planes. Upstream of the sine traverse mechanism 800 is a comb 870 that separates the strands into 40 groups or splits.

The sine traverse mechanism 800 reciprocates each group of strands in its respective plane. The groups of strands are moved out of phase from one another. In other words, during operation the shoes guiding the strands are different distances from the housing 810. The shoes are moved so that they have a sinusoidal pattern of movement when viewed as a whole, as described in detail below.

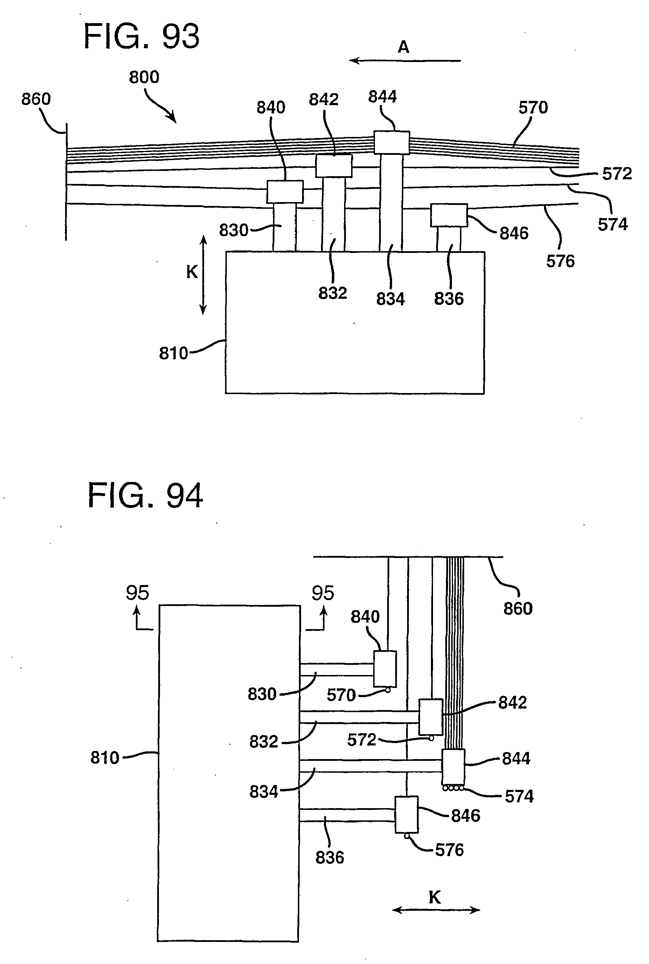

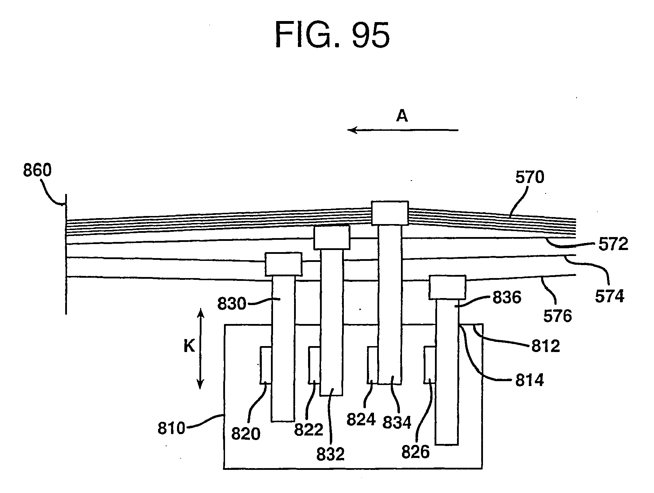

The sine traverse mechanism 800 is positioned between a shoe 870 and the attenuator 100 as shown in Fig. 92. The sine traverse mechanism 800 includes a housing 810 and rods 830, 832, 834, and 836 that extend from the housing 810 as shown in Figs. 93-94. The rods have the same length and are reciprocated by linear actuators 820, 822, 824, and 826 in the housing 810 as shown in Fig. 95. The rods reciprocate along the direction of arrow "K". The rods extend different distances from the housing 810 and each rod and shoe combination reciprocates in its own horizontal plane.

Plan and side views of the relative positions of the shoes 840, 842, 844, and 846 are shown in Figs. 93 and 94, respectively. It is to be understood that a plane of splits or bundles engages each of the shoes 840, 842, 844, and 846. To simplify the understanding of the sine traverse mechanism, only one plane of bundles is shown engaging one of the four shoes in the figures. The single bundle that is shown engaging the other shoes should be considered as representative of the above mentioned planes of bundles.

The sine traverse mechanism 800 includes shoes 840, 842, 844, and 846 mounted on the free ends of the reciprocating rods 830, 832, 834, and 836. Since the shoes are identical, only shoe 840 will be discussed in detail.

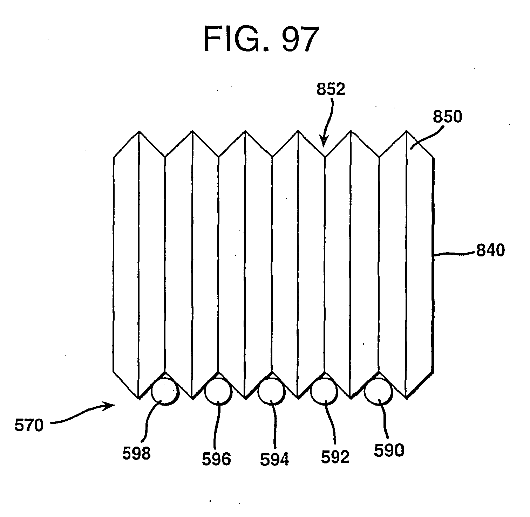

Shoe 840 is cylindrical and has peaks 850 that define grooves 852 therebetween as shown in Fig. 97. For ease of illustration, shoe 840 is shown with five grooves 852, although the preferred shoe 840 has ten such grooves. The peaks should be sufficiently large to prevent the strands from laterally sliding out of contact with the shoe. However, the surface should not damage the filaments or strands as they travel along the shoes in the direction in which they are attenuated, which can be ensured by minimizing the turning angle of the strands around the shoes.

The sine traverse mechanism 800 includes several servo motors or linear actuators 820, 822, 824, and 826, as shown schematically in Fig. 95. Each servo motor is coupled to a reciprocating rod to oscillate the rod. The reciprocating rods 830, 832, 834, and 836 extend through slots 814 in the wall 812 of the housing 810, as shown in Fig. 95.

Each servo motor is independently controlled by the control system and its own program. Each servo motor includes an encoder to determine the distance of the respective shoe from the housing 810. The reciprocating rods 830, 832, 834, and 836 are driven at substantially the same speed and with substantially the same stroke length.

Each of the planes 570, 572, 574, 576 shown in Fig. 92 includes multiple bundles or splits of filaments. Splits 590, 592, 594, 596, and 598 are in a single plane 570 and engage the grooves 852 along the bottom surface 854 of the shoe 840.

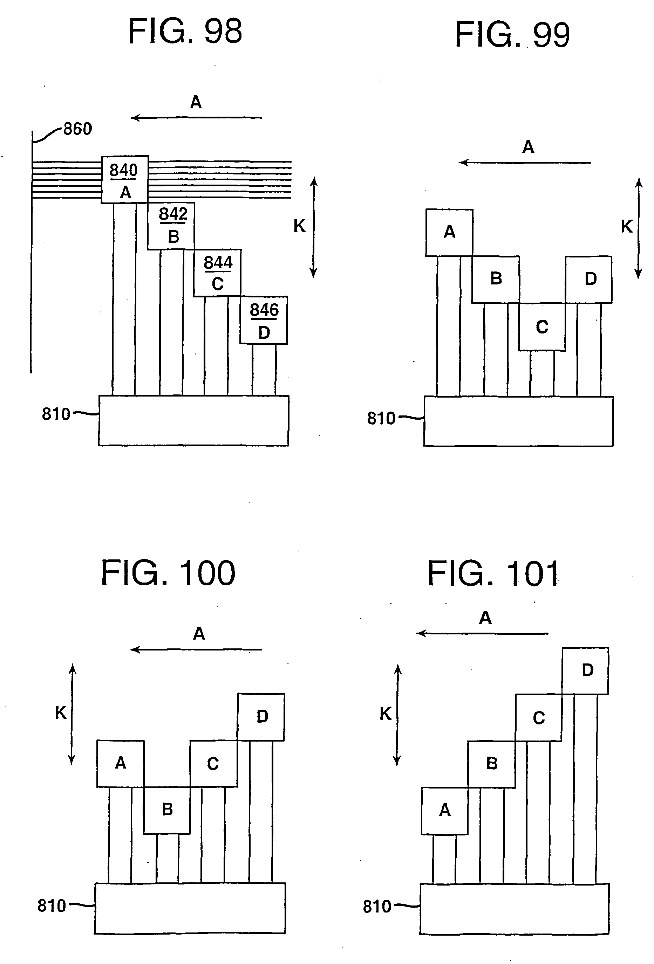

Turning to Figs. 98-109, the relative positions of the shoes during the operation of the sine traverse mechanism 800 will now be discussed.

Plan views of the shoes and the housing 810 of the sine traverse mechanism 800 are shown in Figs. 98-101. Shoes 840, 842, 844, and 846 are referred to as A, B, C, and D, respectively, for purposes of this discussion. The shoes reciprocate along the direction of arrow "K". The direction of travel of the planes of strands is shown by arrow "A".

Fig. 98 represents the positions of the shoes at a particular point in time. Figs. 99-101 represent the positions of the shoes at subsequent points in time. Each of the shoes is out of phase from an adjacent shoe. Adjacent rods are generally extended from the housing at different lengths than the other rods. As the sine traverse mechanism 800 operates, the rods and shoes are moved in a sinusoidal pattern when viewed from above. The sinusoidal pattern ensures that the planes of the splits cross over one another and enter the nip point 860 and are linked between the belts 112, 132 of the attenuator 100.

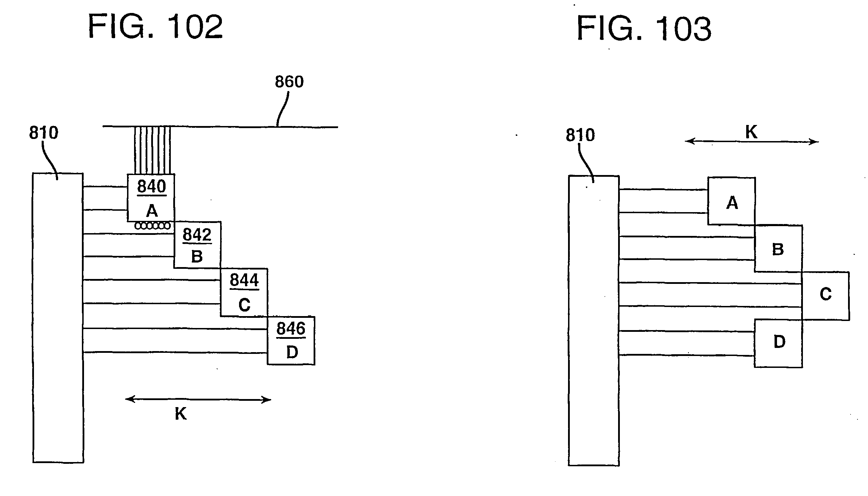

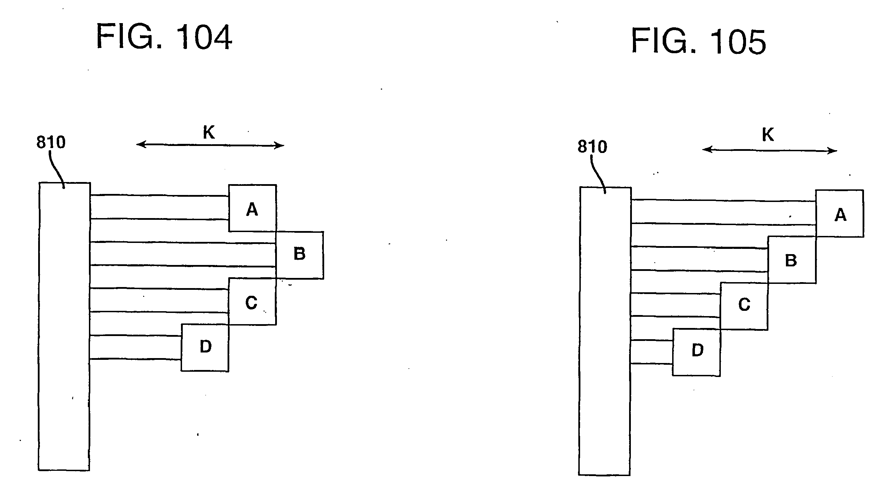

Fig. 102 represents the positions of the shoes relative to the sine traverse mechanism housing 810 at a particular point in time. Figs. 103-105 represent the positions of the shoes at subsequent points in time during operation. As shown, each rod and shoe combination remains in its horizontal plane and is reciprocated along the direction of arrow "K".

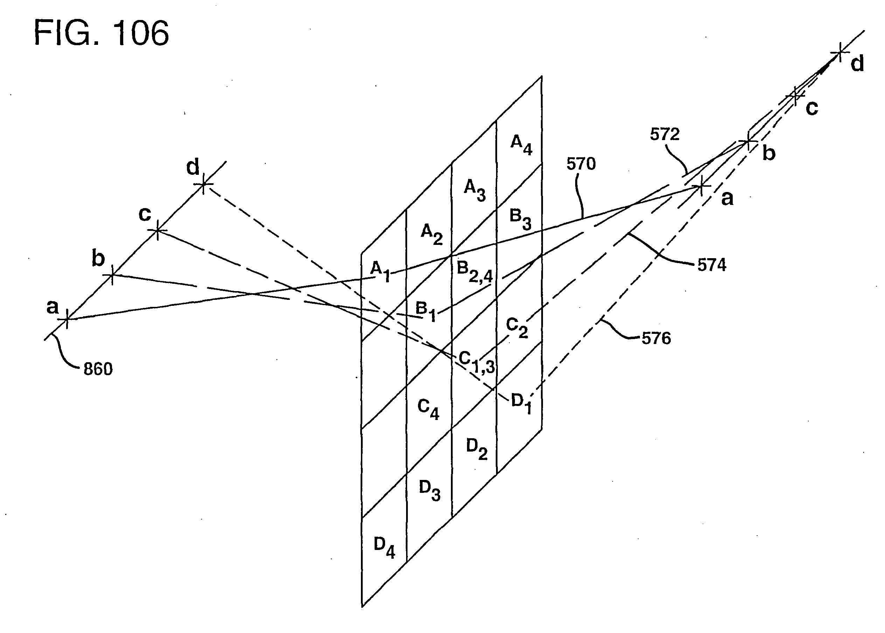

Figs. 106-109 are schematic perspective views showing the positions of the shoes relative to the comb 870 and the nip point 860 of the attenuator belts 112, 132. These views have been simplified to illustrate the relative motions during operation. It is to be understood that planes 570, 572, 574, and 576 each include ten splits and that shoes A, B, C, and D are shown in a single plane, but are laterally spaced apart as previously discussed.

Each shoe A, B, C, and D includes a subscript that indicates a particular point in time. The references A₁, B₁, C₁, and D, represent the positions of the shoes at time t=1. The shoe positions at t=2, t=3, and t=4 are shown with the corresponding subscripts to facilitate the understanding of the pattern of movement of the shoes.

The pinch line 860 between the belts 112, 132 of the attenuator 100 is shown. The entry points a, b, c, and d along the pinch line 860 represent the positions of the planes 570, 572, 574, and 576 between the belts 112, 132. As the shoes reciprocate, the entry points a, b, c, and d oscillate along the pinch line 860. The oscillation of the entry points crosses the planes which are subsequently linked by the attenuator 100.

When the strand collection system 80 is started, each plane of splits is threaded manually around comb 870, one of sine traverse mechanism shoes 840, 842, 844, and 846, and between the attenuator belts 112, 132.

The forced contact points between the splits survive deceleration by the deflector assembly 200 and the drying of the package. A minimum moisture level of the strands required is between 5 and 9% water.

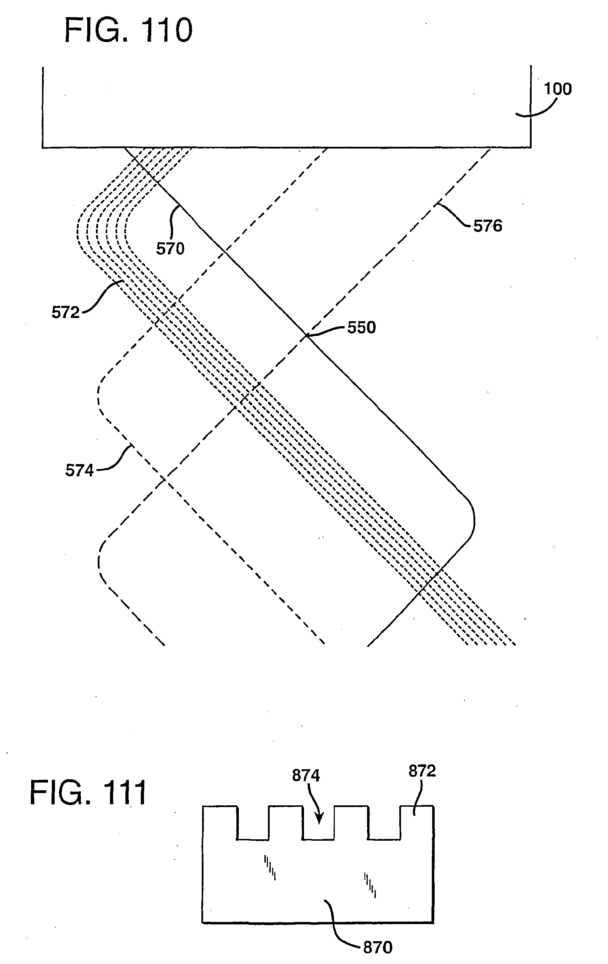

The resulting pattern of authentic links 550 between the planes 570, 572, 574, and 576 of splits as they exit the attenuator 100 is shown in Fig. 110. The sine traverse mechanism 800 links adjacent and non-adjacent strands together due to the relative motions of the shoes.

The following dimensions are provided for a sine traverse mechanism embodying the principles of the invention.
distance between rods = 2 in. (5 cm)
distance between peaks 850 on a shoe 840 = 0.125 in. (0.32 cm)
diameter of shoe 840 = 0.5 to 1 in. (1.3 to 2.5 cm)
distance between the sine traverse mechanism and the attenuator =12 in. (30.5 cm)

As the artisan will appreciate, there are many possible variations on the embodiment of the sine traverse mechanism 800 described above that would be consistent with the principles of the invention. Some of the variations are identified below.

The number of planes that the sine traverse mechanism reciprocates may be greater or less than four. The number of planes is related to the quantity of splitter shoes and the width of the belt.

The number of splits in each plane may be varied as well. The number of splits is related to the number of peaks and grooves on each splitter shoe.

The splitter shoes of the sine traverse mechanism may be reciprocated in a non-periodic pattern.

The shoes and reciprocating rods of the sine traverse mechanism-may be reciprocated mechanically by a cam drive shaft with eccentric portions or a cam shaft having only one eccentricity, by driving a center-mounted rocker arm so that the output motion is the ratio of lengths to the fixed point.

The stroke length that the reciprocating rods of the sine traverse mechanism are oscillated may be varied if the width of the belts of the attenuator is insufficient. The width may be insufficient if numerous splits are guided in each horizontal plane.

The distance between the links formed by the roll or the sine traverse mechanism is variable, and depends on the attenuation speed and the oscillation frequency.

The sine traverse mechanism may be changed to a four bar mechanism with the planes of splits traveling around the bars.

### Use of Package

The package of strand may be used by an end user by pulling an end of the strand out of the package, as shown in Fig. 83. The strand may then be used in a secondary process, such as being wound on a rotating tube to form a wound package, or used in a chopper, or gun. Preferably, tension is applied to the strands when run out of the package, such as by the use of a tensioning device. A suitable tensioning device may include banks of rods around which the strands pass as they are pulled out. Each successive rod increases the strand tension from an initially loose bundle. In the case of strand packages with multiple strands, loops in the strands may be eliminated by the tensioning device. The loop count in a final product can be minimized by increasing the distance between upper and lower banks of tensioner rods beyond the distance between successive authentic links.

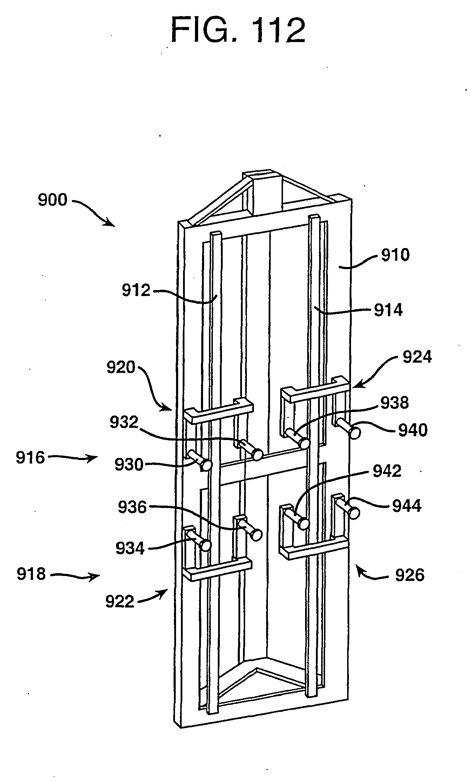

One implementation of a tensioner embodying the principles of the invention is shown in Figs. 112-114. Tensioner 900 applies tension to the strands as they are pulled out of the package. The tensioner 900 includes a frame 910 and tensioner assemblies 920, 922, 924, and 926, as shown in Fig. 112.

The tensioner 900 includes rails 912, 914 coupled to the frame 910. Tensioner assemblies 920, 922, 924, and 926 are mounted on the rails 912, 914 and moved by a suitable drive mechanism as appreciated by the artisan.

The upper and lower banks of rods apply tension to bundles of strands that are pulled through the tensioner 900. The upper bank 916 includes tensioner assemblies 920, 922 with rods 930, 932, 934, and 936. The lower bank 918 includes tensioner assemblies 924, 926 with rods 938, 940, 942 and 944. The rods are preferably formed of graphite.

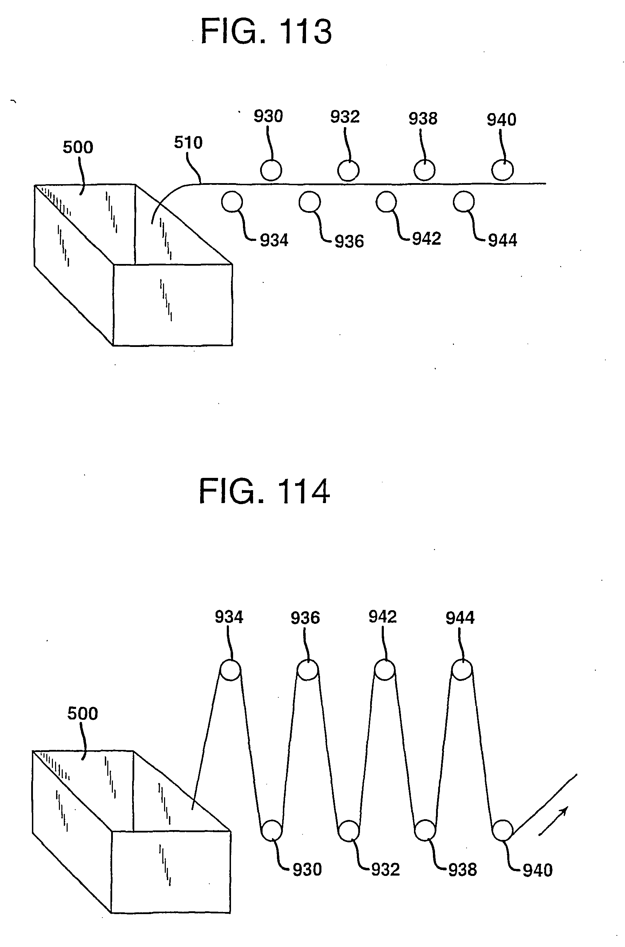

Initially, the upper and lower banks 916, 918 of rods are positioned in their threading positions in which they are substantially in the same horizontal plane as shown in Fig. 113. A bundle of strands is thread between the banks and to a secondary process. The upper and lower banks 916, 918 are moved to their run out position as shown in Fig. 114. The upper bank 916 is moved downward and the lower bank 918 is moved upward to create a serpentine strand path and apply tension to the strands.

The path of the strand through the tensioner 900 is preferably vertical rather than horizontal to ensure that strands will not drag on the ground. Rod 940 is spring-loaded to self-adjust for variations in pulling tension.

The rods are rotated while the strands are pulled through the tensioner to prevent grooving of the graphite rods. The rotation of the rods may be accomplished passively using a torsional clutch or actively.

Exemplary dimensions for the components of the illustrated embodiment are:
rod diameter = 2 in. (5 cm)
rod length = 6 in. (15 cm)
horizontal spacing between rods = 12 in. (30 cm).
vertical offset between rods = 8 ft. (2.5 cm)

As the artisan will appreciate, there are many possible variations on the embodiment of the tensioner 900 described above that would be consistent with the principles of the invention. Some of the variations are identified below.

Collars may be mounted on the end of each rod to retain the strands on the rods as the strands are pulled from the package. The collars may be brass or any other suitable metal.

The path of the strand through the tensioner could be diagonal if an increase in distance between the banks of rods is desired in a particular vertical space.

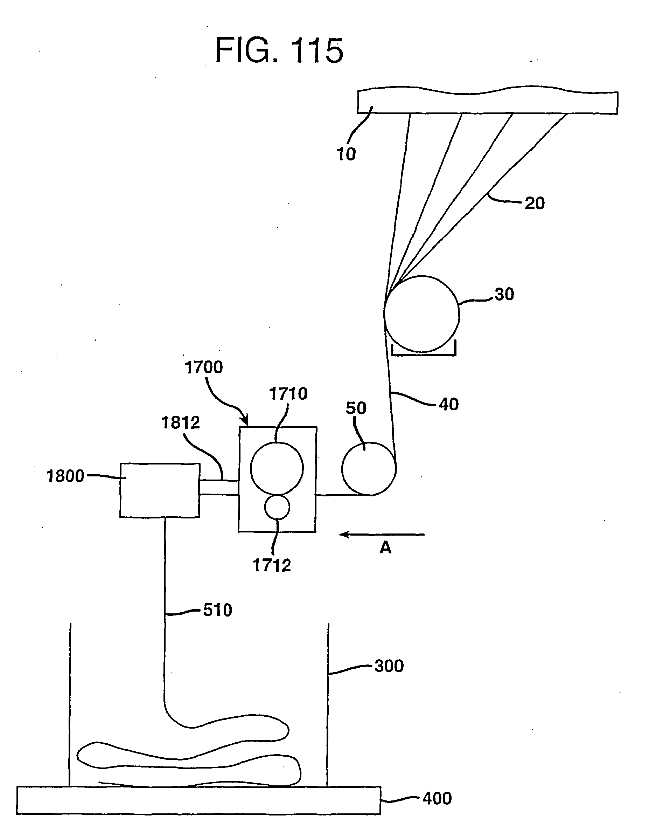

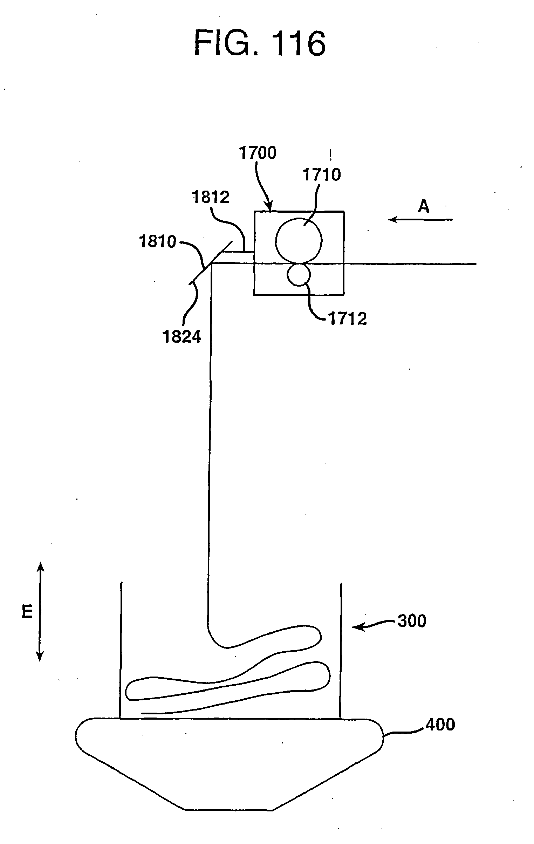

An alternative embodiment of a strand collection system is illustrated in Fig. 115 and an alternative embodiment of a strand collection process is illustrated in Fig. 116. The strand collection system includes a bushing 10, an attenuator or pull wheel assembly 1700, a deflector assembly 1800, a container assembly 300, and a vibrating mechanism 400.

In the illustrated embodiment, the attenuator 1700 and deflector assembly 1800 are coupled together for movement above the container assembly 300. The deflector assembly 1800 is coupled to the attenuator 1700 by a coupling mechanism 1812.

In the illustrated embodiment, the coupling mechanism 1812 has a fixed length, thereby positioning the deflector assembly 1800 a fixed distance from the attenuator 1700. It can be appreciated that the deflector assembly can be coupled to the attenuator using any device or element that provides sufficient support for the deflector assembly. Similarly, the coupling mechanism can be adjustable in length to allow for the variation in distance between the deflector assembly and the attenuator.

The attenuator 1700 includes a drive wheel assembly 1710 and a contact wheel assembly 1712. While the drive wheel assembly 1710 and the contact wheel assembly 1712 are illustrated as single wheels, each of the assemblies 1710 and 1712 can be any mechanism that imparts a velocity to the strand, such as multiple wheels and/or belts.

The drive wheel assembly 1710 and the contact wheel assembly 1712 are arranged so that a strand 40 is discharged from the attenuator 1700 in a substantially horizontal direction. The extent that the strand 40 remains in a substantially horizontal direction prior to contacting the deflector assembly 1800 is related to the distance between the attenuator 1700 and the deflector assembly 1800. Once the strand 40 passes through the attenuator 1700, it is subject to gravitational forces.

The deflector assembly 1800 reduces the velocity of the strand 40 and directs the strand 510 into the container assembly 300. In the illustrated embodiment, the strand 510 is directed in a substantially vertical direction into the container 300.

The deflector assembly 1800 includes a deflector 1810 having a contact surface 1824. In the illustrated embodiment, the contact surface 1824 is a resilient surface that can dissipate energy. The surface 1824 transforms strand kinetic energy into vibration wave energy across the surface 1824. Accordingly, the deflector 1810 reduces strand energy while deflecting the strand into a container at a slower rate. The resulting collected strand has an improved overall strand integrity.

The deflector 1810 is coupled to coupling mechanism 1812 so that the contact surface 1824 is oriented at an angle with respect to a horizontal plane. In the illustrated embodiment, the contact surface 1824 is oriented at an angle between 40° and 50°, for example, at an angle of 45°. The deflector 1810 can be mounted to permit the angular adjustment of the contact surface 1824 relative to the horizontal plane. For example, the deflector 1810 can be pivotally mounted to the coupling mechanism 1812.

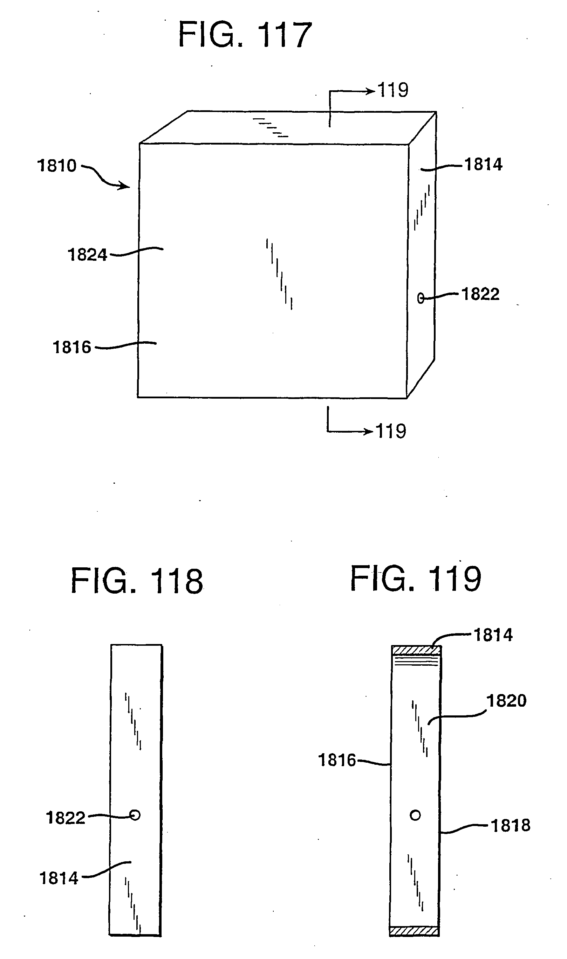

An embodiment of a deflector is illustrated in Figs. 117-119. Deflector 1810 includes a frame 1814 and membranes 1816, 1818 coupled to the frame 1814. In the illustrated embodiment, membranes 1816, 1818 are coupled to opposite sides of the frame 1814. Depending on the mounting of the frame 1814, one of membranes 1816, 1818 functions as a contact surface 1824 which the strand impacts.

In the illustrated embodiment, the membranes 1816 and 1818 are coupled to the frame 1814 with coupling mechanisms, such as wire clamps. Other coupling mechanisms can be used, such as metallic or elastic bands.

The membranes can include a textured pattern on the contact surfaces that reduces the tendency of the strand to stick to the contact surfaces of the membranes. For example, a membrane can include raised dimples.

In the illustrated embodiment, the membranes are elastic membranes or flexible films, such as a silicon film. However, any membrane or material that can dissipate energy can be used.

As illustrated in Fig. 119, the frame 1814 defines an interior, hollow region. The interior region is part of a chamber 1820 that is defined by the frame 1814 and membranes 1816, 1818. The membranes 1816, 1818 are coupled to the frame 1814 in an air-tight manner to prevent any leaks from the chamber 1820. Accordingly, the chamber 1820 can be filled with a fluid, such as air, which will affect the responsiveness of the membranes 1816, 1818 to the impact of a strand.

When a strand impacts membrane 1816, the energy of the impact travels through the chamber 1820 and effects a response in membrane 1818. The pressure of the fluid in the chamber 1820 provides a cushion for the strand. The fluid pressure in the chamber 1820 can be adjusted to affect the responsiveness or deflecting properties of the membranes 1816, 1818 of the deflector 1810. The elastic surfaces combined with the chamber 1820 function as soft surfaces that absorb energy and reduce strand damage.

Membrane 1818 on the rear of the frame 1814 provides a second surface that can dissipate energy from the strand. It can be appreciated that all of the sides of the frame 1814 but one can be closed. Accordingly, in such an implementation, the deflector includes a single membrane to cover the one open side and the frame includes a fixed surface instead of a second membrane.

Other fluids or any material that can transmit energy waves can be introduced into the chamber 1820. The frame 1814 includes an opening 1822 through which the fluid can be introduced and released from the chamber 1820.

Exemplary dimensions for an embodiment of a deflector having a circular cross-section are:
frame diameter = 12 in. (30 cm)
frame depth = 3 in. (7.5 cm)

There are many possible variations on the embodiment of the deflector assembly 1800 described above that would be consistent with the invention. Some of the variations are identified below.

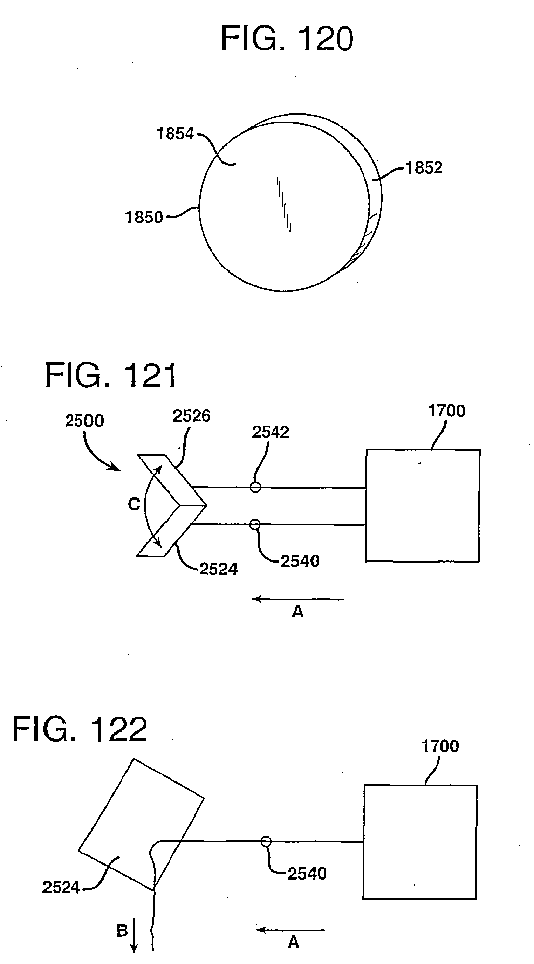

The frame 1814 may be any shape, for example, such as a circle as illustrated in Fig. 120.

In an alternative implementation, the deflector can have a single membrane coupled to the frame. The single membrane can be stretched to cover both openings of the frame. Alternatively, the single membrane can be coupled to one side of the frame and the other side of the frame remains open or closed by a rigid wall.

An alternative embodiment of a strand collection process is illustrated in Figs. 121 and 122. The strand collection process includes an attenuator 1700 and a deflector assembly.

In the illustrated embodiment, the attenuator 1700 and deflector 2500 can be coupled together for movement above a container assembly as described above relative to other embodiments. It can be appreciated that deflector 2500 can be adjustably mounted to vary the angle at which the deflector is mounted relative to the attenuator. As illustrated, the attenuator 1700 discharges a strand in a substantially horizontal direction.

In the illustrated embodiment, the strand includes multiple splits 2540,2542. Splits 2540, 2542 impact contact surfaces 2524, 2526, respectively, as illustrated in Fig. 121. The splits 2540, 2542 contact surfaces 2524, 2526 and are subsequently collected in a container. The illustrated splits 2540, 2542 are separate strands that are attenuated at the same time, but not cross-linked together.

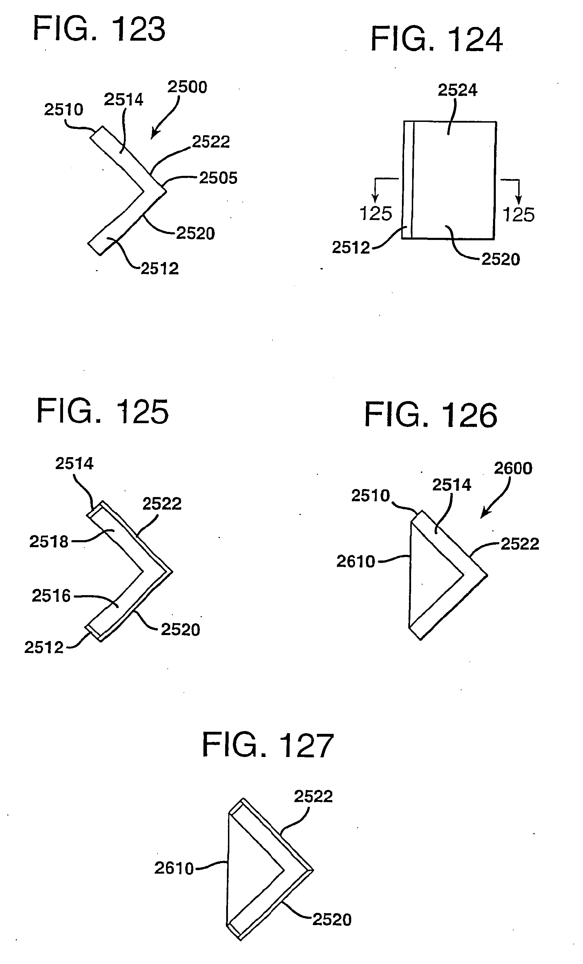

An embodiment of a deflector is illustrated in Figs. 123-125. Deflector 2500 includes a frame 2510 and a membrane 2505 coupled to the frame 2510. The frame 2510 includes side portions 2512, 2514 that are spaced apart at an angle C. In the illustrated embodiment, angle C is in the range of 40 to 50°. It can be appreciated that the side portions 2512, 2514 can be mounted for movement relative to each other, thereby varying the angle C between them.

In the illustrated embodiment, membrane 2505 includes two membrane portions 2520, 2522, that are separately coupled to side portions 2512, 2514, respectively. Membrane 2505 is similar to previously described membranes 1816, 1818 and is coupled to the frame 2510 in the same manner. While membrane 2505 includes two separate portions 2520, 2522, membrane 2505 can be integrally formed as a single membrane and stretched over side portions 2512, 2514.

As illustrated in FIG. 125, the side portions 2512, 2514 define interior, hollow regions 2516, 2518. In this embodiment, deflector 2500 does not have any membranes that seal regions 2516, 2518 to form air-tight chambers.

An alternative embodiment of a deflector is illustrated in FIGS. 126, 127. Deflector 2600 is similar to deflector 2500 with the additional membrane 2610 coupled to the frame 2510. The openings in the top and bottom of the deflector 2600 can be closed to establish an air-tight chamber between the membranes 2520, 2522, 2610.

While the invention has been described in detail and with reference to specific embodiments thereof, various changes and modifications can be made therein without departing from the spirit and scope thereof. Thus, it is intended that the present invention covers the modifications and variations of this invention provided they come within the scope of the appended claims and their equivalents.

Some further aspects of the invention can be found in the following paragraphs:
1. A method of collecting a strand (40), the method comprising the steps of:
   imparting to the strand an initial velocity in a first direction;
   deflecting the strand off a first surface (222) disposed at an angle to said first direction to redirect the strand in a second direction and thereby to reduce the component of the strand's velocity in said first direction;
   deflecting the strand off a second surface (214) disposed substantially perpendicular to said second direction to change the component of the strand's velocity in said first direction to a substantially non-positive value; and
   allowing the strand to fall under the influence of gravity into a container (300).
2. The method as described in paragraph 1 above, wherein said step of imparting to the strand an initial velocity includes ejecting the strand from an attenuator (100).
3. The method as described in paragraph 1 above, wherein said first direction is substantially vertical and said second direction is substantially horizontal.
4. The method as described in paragraph 1 above, further comprising the step of rotating the first surface (222) about an axis approximately parallel to said first direction.
5. The method as described in paragraph 1 above, further comprising traversing said first and second surfaces (222, 214) with respect to the container (300).
6. A package of strand (500) manufactured by the method as described in paragraph 1 above.
7. A self-supporting block of strand (500) comprising a continuous strand (510) bound together by a coating of size and distributed in a plurality of substantially parallel layers (502, 504), said strand being disposed in each of said layers in a serpentine pattern of nested loops (512).
8. The block as described in paragraph 7 above, wherein said loops (512) are circular.
9. The block as described in paragraph 7 above, wherein said loops (512) are arcuate.
10. The block as described in paragraph 7 above, wherein said continuous strand (510) includes two strand sections (560, 562) and a splice (698) coupling said strand sections.
11. The block as described in paragraph 7 above, wherein said block has an outer surface (506) and said splice is disposed outside said block adjacent said outer surface.
12. The block as described in paragraph 7 above, wherein said splice is within said block.
13. The block as described in paragraph 7 above, wherein said strand includes first and second bundles of filaments disposed in parallel relationship and coupled to each other at a plurality of locations along said bundles by said coating of size.
14. A package of strand comprising:
   a first bundle of filaments disposed in said package; and
   a second bundle of filaments disposed in said package in substantially parallel relationship with said first bundle of filaments and coupled to said first bundle of filaments at a plurality of locations along said bundles.
15. The package as described in paragraph 14 above, wherein said bundles include a coating of size and wherein said bundles are coupled by adhesion of said size.
16. The package as described in paragraph 14 above, further comprising a third bundle of filaments disposed in said package in substantially parallel relationship with said first and second bundles of filaments, said third bundle being coupled to said first bundle and to said second bundle.
17. The package as described in paragraph 14 above, further comprising a third bundle of filaments disposed in said package in substantially parallel relationship with said first and second bundles of filaments, said third bundle being coupled to said second bundle and not coupled to said first bundle.
18. A method of manufacturing a package of strand (40) comprising the steps of:
   attenuating filaments (20) from a source of material;
   dividing the filaments into a first bundle and a second bundle;
   coupling said first and second bundles to each other at a plurality of coupling locations along said bundles; and
   directing said coupled bundles into a container (300).
19. The method as described in paragraph 18 above, wherein said coupling step comprises:
   dividing each of said bundles into two subbundles;
   coupling one subbundle from each bundle together by adhesion with a coating of size on the filaments in said subbundles.
20. The method as described in paragraph 18 above, wherein said bundles are coated with size and wherein said coupling step comprises:
   crossing said first bundle and said second bundle at each of said coupling locations;
   pressing said first bundle against said second bundle at each of said coupling locations to adhere said bundles together with said size.
21. The method as described in paragraph 20 above, wherein
   said dividing step further includes dividing said filaments into a third bundle;
   said coupling step further comprises:
   coupling said third bundle to said first bundle at a plurality of second coupling locations by crossing said third bundle and said first bundle and pressing said third bundle against said first bundle at each of said second coupling locations to adhere said bundles together with said size; and
   coupling said third bundle to said second bundle at a plurality of third coupling locations by crossing said third bundle and said second bundle and pressing said third bundle against said second bundle at each of said third coupling locations to adhere said bundles together with said size.
22. Apparatus for coupling together at spaced intervals parallel bundles of filaments attenuated from a source of material, comprising:
   a cylindrical body (700) mountable for rotation about a central axis and having an outer surface (710),
   a first helical groove (712) formed in said outer surface; and
   a second helical groove (712a) formed in said surface and intersecting said first helical groove,
   said intersecting helical grooves defining coupling regions in which bundles of filaments drawn across said outer surface can be brought into coupling contact and further defining parting regions in which bundles of filaments coupled in said coupling regions can be divided into sub-bundles.
23. A coupling device for coupling together at spaced intervals two parallel bundles of filaments attenuated from a source of material by an attenuator (100) having an entry region in which the bundles of filaments are engaged by the attenuator, the coupling device (800) comprising:
   a first shoe (840) adapted to engage between the source of material and the attenuator one of the bundles;
   a second shoe(822) adapted to engage between the source of material and the attenuator the other of the bundles;
   a drive coupled to said first and second shoes to reciprocate said shoes with respect to each other so that the two bundles are urged to cross each other before entering the entry region, whereby the bundles are coupled together in the attenuator.
24. Apparatus for joining two sections of strand, comprising:
   a base (602);
   a strand cutter (660) coupled to said base;
   a strand splicer (610) coupled to said base adjacent said strand cutter;
   a strand gripper (630) movably coupled to said base for movement between a first position adjacent said strand cutter and said strand splicer and a second position spaced from said strand cutter and said strand splicer;
   a gripper drive coupled to said strand gripper to move said strand gripper between said first and second positions;
   a strand detector (680) operative to detect the presence of a strand disposed between said first position and second positions of said strand gripper and to generate a detection signal in response thereto; and
   a controller operatively coupled to said strand cutter, said strand splicer, said strand gripper, said gripper drive, and strand detector, said controller including control logic which is responsive to receipt of a detection signal generated by said strand detector when a first strand is detected to cause said strand gripper to grip said first strand, to cause said gripper drive to move said first strand to said second position and into operative engagement with said strand cutter and said strand splicer, and to cause said strand cutter to cut said first strand and form a first cut end, said control logic further being responsive to receipt of a detection signal generated by said strand detector when a second strand is detected to cause said strand gripper to grip said second strand, to cause said gripper drive to move said second strand to said second position and into operative engagement with said strand cutter and said strand splicer, to cause said strand cutter to cut said second strand and form a second cut end, and to cause said strand splicer to splice said first and second cut ends together.
25. The apparatus as described in paragraph 24 above, wherein said strand splicer (610) includes:
   a splicing cavity (614) in which said first and second cut ends can be received; and
   means for directing a flow of air into said splicing cavity with sufficient velocity and flow rate to cause said first and second cut ends to become entangled.
26. The apparatus as described in paragraph 24 above, wherein said strand gripper (630) includes two gripper fingers (632, 634) for gripping a strand therebetween.
27. The apparatus as described in paragraph 24 above, wherein said strand detector(680) is an optical detector.
28. The apparatus as described in paragraph 24 above, further comprising:
   a second strand gripper (640) movably coupled to said base for movement between said first position and said second position.
29. The apparatus as described in paragraph 24 above, further comprising:
   a third gripper (650) positioned adjacent to said strand cutter (660) and said strand splicer (660).
30. A method of manufacturing a package of strand comprising the steps of:
   directing the strand into a container (300); and
   vibrating said container to shift and settle the strand.
31. The method as described in paragraph 30 above, wherein the vibrating step (400) includes imparting to the container vibrations that include a vertical acceleration component.
32. The method as described in paragraph 30 above, wherein said vibrating step is performed concurrently with said directing step.
33. The method as described in paragraph 32 above, wherein said vibrating step includes vibrating said container intermittently.
34. The method as described in paragraph 30 above, wherein said vibrating step includes imparting to the container vibrations having a sinusoidal form.
35. A package of strand manufactured by the method as descried in paragraph 30 above.
36. A method of manufacturing a package of strand comprising the steps of:
   directing into a non-metallic container (300) a strand coated with an aqueous size; and
   dielectrically drying said strand to remove moisture from the size, whereby the dried size adheres the strand to itself sufficiently to form a self-supporting block of strand; and
   removing said block of strand from said container.
37. A block of strand formed by the method as described in paragraph 36 above.
38. A method of attenuating a strand, comprising the steps of:
   engaging a strand attenuated a strand from a source of a material with a first attenuator (100);
   attenuating the strand at a first attenuation speed with the first attenuator;
   bringing the strand into operative engagement with a second attenuator;
   releasing the strand from the first attenuator; and
   attenuating the strand at a second attenuation speed, greater than said first attenuation speed, with the second attenuator.
39. The method as described in paragraph 38 above, wherein said bringing step includes engaging the strand between the source of material and the first attenuator.
40. The method as described in paragraph 39 above, wherein said releasing step includes severing said strand between said first and second attenuators.
41. The method as described in paragraph 38 above, further including the steps of:
   directing strand attenuated with said first attenuator into a waste collector (1120); and
   directing strand attenuated with said second attenuator into a container to collect said strand for use.
42. Apparatus for engaging with a strand attenuator a strand attenuated from a source of material, comprising:
   a first attenuator (100) for attenuating the strand from the source of material; and
   an arm (1030) having a contact surface mounted on an end, said arm mounted for movement relative to the strand attenuator, said contact surface engaging the strand between the source of material and said first attenuator and bringing the strand into operative engagement with the strand attenuator.
43. The apparatus as described in paragraph 42 above, wherein said first attenuator comprises a pair of rolls (1012, 1014).
44. The apparatus as described in paragraph 42 above, wherein said contact surface is an idler roll (1038), said idler roll mounted proximate to an end of the arm (1030).
45. The apparatus as described in paragraph 42 above, further comprising:
   a second arm (1040) having a second contact surface mounted on an end, said second arm mounted for movement relative to the strand attenuator, said second contact surface engaging the strand between said arm contact surface and said first attenuator.
46. The apparatus as described in paragraph 42 above, further comprising:
   a cutter (600) mounted proximate to the strand attenuator, the cutter cutting the strand between the strand attenuator and said first attenuator.
47. A method of manufacturing a package of strand comprising the steps of:
   disposing a container (300) at a fill position beneath an attenuator mounted for movement with respect to the fill position;
   attenuating the strand from a source of material with the attenuator;
   coating the strand with an aqueous size;
   directing the strand from the attenuator into the container; moving said container away from said fill position;
   drying said strand in said container to remove moisture from the strand and thereby to adhere the strand to itself with the dried size to form a self-supporting package of strand; and
   removing said self-supporting package of strand from said container.
48. The method as described in paragraph 47 above, wherein in said directing step the strand is deflected off a first surface of a deflector (200).
49. The method as described in paragraph 47 above, wherein said attenuating step includes engaging the strand from the source of material with the attenuator.
50. The method as described in paragraph 47 above, wherein said attenuating step comprises attenuating filaments from the source of material and dividing the filaments into a first bundle and a second bundle, and further comprising the step of:
   coupling said first and second bundles to each other at a plurality of coupling locations along said bundles.
51. The method as described in paragraph 47 above, further comprising the step of:
   vibrating said container to shift and settle the strand.
52. The method as described in paragraph 47 above, wherein said attenuating step includes traversing the attenuator with respect to said container.
53. The method as described in paragraph 47 above, wherein said strand includes a first section having a first end and a second end (564) and a second section having a first end (566) and a second end, and further comprising the step of:
   coupling (698) the first end of the second strand section to the second end of the first strand section.
54. The method as described in paragraph 47 above, wherein said moving step includes moving an empty container (300) to the fill position.
55. The method as described in paragraph 47 above, wherein said attenuating step includes oscillating the path of the strand as it enters said attenuator (100).
56. A system for manufacturing a package of strand comprising:
   a source of material;
   a container (300) for collecting the strand;
   an attenuator (100) for attenuating the strand from said source of material, said attenuator mounted for movement relative to said container between a start up position and a fill position; and
   a deflector (200) coupled to said attenuator, wherein said deflector directs the strand from said attenuator away from said container when said attenuator is in its start up position and directs the strand from said attenuator into said container when said attenuator is in its fill position.
57. The system as described in paragraph 56 above, wherein said attenuator and said deflector are movable with respect to said container.
58. The system as described in paragraph 56 above, wherein said deflector includes a frame (220) and a membrane (222) coupled to said frame, said membrane oriented at an angle relative to a horizontal plane.
59. The system as described in paragraph 58 above, wherein said frame is adjustable relative to said attenuator so that said angle between said membrane and the horizontal plane can be adjusted.
60. The system as described in paragraph 56 above, further comprising:
   a vibrating mechanism, wherein said container is positioned on said vibrating mechanism and said vibrating mechanism imparts vibrations to said container.
61. The system as described in paragraph 56 above, further comprising:
   a movable conveyor (1110) for transporting an empty container (300) adjacent to the vibrating mechanism.
62. The system as described in paragraph 56 above, further comprising:
   a splicer/cutter assembly (600) positioned proximate to said container, said splicer/cutter assembly including a base (602);
   a strand cutter (660) coupled to said base; and a strand splicer (610) coupled to said base adjacent said strand cutter, wherein said strand splicer splices strand ends and said strand cutter cuts said spliced strand ends.
63. The system as described in paragraph 62 above, wherein said attenuator lays the strand on said splicer/cutter assembly as said attenuator moves from said start up position to said filling position.
64. The system as described in paragraph 56 above, further comprising:
   a dielectric oven for drying the strand to remove moisture from the size, whereby the dried size adheres the strand to itself sufficiently to form a self-supporting block of strand.
65. The system as described in paragraph 56 above, wherein said container (300) comprises an inner container (370) including a bottom plate (372) having a perimeter and a plurality of upright columnar supports (374) disposed about, and projecting upwardly from, said perimeter of said bottom plate and defining between said supports and said plate a strand containing volume; and an outer container(310) disposed around and containing said bottom plate and said columnar supports, said outer container including an upstanding, perforated peripheral wall (320) surrounding said block of strand and said columnar supports.
66. The system as described in paragraph 56 above, further comprising:
   a thread up apparatus (1000) for engaging with a strand attenuator a strand attenuated from a source of material, said thread up apparatus including a first attenuator for attenuating the strand from the source of material; and an arm (1030) having a contact surface mounted on an end, said arm mounted for movement relative to the strand attenuator, said contact surface engaging the strand between the source of material and said first attenuator and bringing the strand into operative engagement with the strand attenuator.
67. A system for manufacturing a package of strand comprising:
   a source of material;
   a container (300) for collecting the strand;
   an attenuator (100) for attenuating the strand from said source of material, said attenuator mounted for movement relative to said container between a start up position and a fill position; and
   a vibrating mechanism (400), wherein said container is positioned on said vibrating mechanism, said vibrating mechanism imparts vibrations to said container, and said vibrations include a vertical acceleration component.
68. The system as described in paragraph 67 above, further comprising:
   a deflector (200) coupled to said attenuator, wherein said deflector directs the strand from said attenuator away from said container when said attenuator is in its start up position and directs the strand from said attenuator into said container when said attenuator is in its fill position.
69. The system as described in paragraph 68 above, wherein said attenuator and said deflector are movable with respect to said container.
70. The system as described in paragraph 67 above, further comprising:
   a splicer/cutter assembly (600) positioned proximate to said container, said splicer/cutter assembly including a base (602); a strand cutter (660) coupled to said base; and a strand splicer (610) coupled to said base adjacent said strand cutter, wherein said strand splicer splices strand ends and said strand cutter cuts said spliced strand ends.
71. The system as described in paragraph 70 above, wherein said attenuator lays the strand on said splicer/cutter assembly as said attenuator moves from said start up position to said filling position.
72. The system as described in paragraph 67 above, further comprising:
   a dielectric oven for drying the strand to remove moisture from the size, whereby the dried size adheres the strand to itself sufficiently to form a self-supporting block of strand.
73. The system as described in paragraph 67 above, wherein said container (300) comprises an inner container (370) including a bottom plate (372) having a perimeter and a plurality of upright columnar supports (374) disposed about, and projecting upwardly from, said perimeter of said bottom plate and defining between said supports and said plate a strand containing volume; and an outer container(310) disposed around and containing said bottom plate and said columnar supports, said outer container including an upstanding, perforated peripheral wall (320) surrounding said block of strand and said columnar supports.
74. The system as described in paragraph 67 above, further comprising:
   a thread up apparatus (1000) for engaging with a strand attenuator a strand attenuated from a source of material, said thread up apparatus including a first attenuator for attenuating the strand from the source of material; and an arm (1030) having a contact surface mounted on an end, said arm mounted for movement relative to the strand attenuator, said contact surface engaging the strand between the source of material and said first attenuator and bringing the strand into operative engagement with the strand attenuator.
75. A system for manufacturing a package of strand comprising:
   a source of material;
   a container (300) for collecting the strand;
   an attenuator (100) for attenuating the strand from said source of material, said attenuator mounted for movement relative to said container between a start up position and a fill position;
   a vibrating mechanism (400), said container being positioned on said vibrating mechanism and said vibrating mechanism imparts vibrations to said container, said vibrating mechanism including a sensor (494) for generating an input signal in response to presence of said container;
   a controller, said controller including control logic and a timing mechanism, said controller producing an output signal in response to said input signal; and
   an actuator (152), wherein said actuator moves said attenuator from the start up position to the fill position in response to said output signal from said controller.
76. The system of paragraph 75, wherein said attenuator includes a drive wheel (116) driven by a motor (150) and an inverter for sensing the torque on said drive wheel, said inverter generates an inverter input signal in response to a change in torque, said controller generates an inverter output signal in response to said inverter input signal, and said controller transmits said inverter output signal to the drive wheel motor to control the operation of the drive wheel.
77. A method of collecting a strand, the method comprising the steps of:
   imparting to the strand an initial velocity in a first direction;
   deflecting the strand off a surface to change the component of the strand's velocity in said first direction to a substantially non-positive value; and
   allowing the strand to fall in a second direction under the influence of gravity into a container, said second direction being substantially perpendicular to said first direction.
78. The method as described in paragraph 77 above, wherein said first direction is substantially horizontal and said second direction is substantially vertical.
79. The method as described in paragraph 77 above, further comprising:
   adjusting the orientation of said surface relative to a horizontal plane.
80. The method as described in paragraph 77 above, further comprising:
   adjusting the responsiveness of said surface.
81. The method as described in paragraph 80 above, wherein said deflecting the strand off a surface includes deflecting the strand off a first membrane (222) coupled to a frame (220), said frame including a second membrane (214) coupled to a side opposite said first membrane and defining a chamber therebetween, and said adjusting said responsiveness includes varying the fluid pressure in said chamber.
82. A deflector assembly for deflecting a strand comprising:
   a frame (220); and
   first and second membranes (222, 214) coupled to said frame, said frame and said membranes defining a chamber therebetween.
83. The deflector assembly as described in paragraph 82 above, wherein said first membrane (222) is a flexible film.
84. The deflector assembly as described in paragraph 82 above, wherein said frame (220) includes a port in fluidic communication with said chamber.
85. A deflector assembly for deflecting a strand comprising:
   a frame (220) defining a hollow, interior region; and
   a membrane (222) coupled to said frame and covering a portion of said interior region, said membrane being a flexible film.
86. The deflector assembly as described in paragraph 85 above, wherein said membrane includes a first membrane portion (222) and a second membrane portion (214), said first membrane portion being oriented at an angle relative to said second membrane portion.

## Claims

1. A package of strand comprising:
an approximately planar bottom plate having a perimeter;
a plurality of upright columnar supports disposed about, and projecting upwardly from, said perimeter of said bottom plate and defining between said supports and said plate a strand containing volume; and
a self-supporting block of strand bound together by a coating of size and disposed within and substantially filling said strand containing volume.

2. The package of claim 1, wherein said columnar supports are sufficiently strong to collectively support a second package of approximately equal weight.

3. The package of claim 1, wherein said bottom plate is rectangular and said plurality of columnar supports includes four columnar supports.

4. The package of claim 1, wherein said bottom plate and said columnar support are integrally formed.

5. The package of claim 1, wherein said columnar supports are releasably adhered to said block of strand by said size.

6. The package of claim 1, wherein said bottom plate and said columnar supports are formed of polymer.

7. The package of claim 1, further comprising a top plate supported above said block of strand on said columnar supports.

8. The package of claim 1, further comprising an outer container disposed around and containing said bottom plate and said columnar supports, said outer container including an upstanding, perforated peripheral wall surrounding said block of strand and said columnar supports.

9. The package of claim 1, wherein said block of strand comprises a continuous strand distributed in layers substantially parallel to said bottom plate, said strand being disposed in each of said layers.

10. A container (300) for collecting strand comprising:
an inner container (370) including a bottom plate (372) having a perimeter and a plurality of upright columnar supports (374) disposed about, and projecting upwardly from, said perimeter of said bottom plate and defining between said supports and said plate a strand containing volume; and
an outer container(310) disposed around and containing said bottom plate and said columnar supports, said outer container including an upstanding, perforated peripheral wall (320) surrounding said block of strand and said columnar supports.

11. The container of claim 10, wherein said peripheral wall has a lower edge and said outer container includes a bottom wall (360) coupled to said lower edge.

12. The container of claim 10, wherein said bottom plate and said columnar supports are formed of polymer.

13. A method of forming a self-supporting block of strand, comprising the steps of:
disposing into an outer container(310) having an upstanding, perforated peripheral wall (320) and an inner container (370) having a bottom plate (372) with a perimeter and a plurality of upright columnar supports (374) disposed about, and projecting upwardly from, said perimeter of said bottom plate and defining between said supports and said plate a strand containing volume;
directing into said inner container a strand coated with an aqueous size to substantially fill said strand containing volume with strand;
removing moisture from said strand to dry said aqueous size and thereby adhere said strand to itself to form a self-supporting block of strand; and
removing said inner container and block of strand from said outer container.

14. The method of claim 13, wherein said drying step includes forcing a flow of air through said peripheral wall, between said columnar supports, and through said strand containing volume.

15. The method of claim 13, wherein said outer container is formed of non-metallic material and wherein said drying step includes dielectrically heating said aqueous size.

16. The method of claim 13, further including the step of vibrating said outer container to shift and settle the strand within said strand containing volume.

17. The method of claim 13, further including the step of removing said columnar supports from said block of strand.

18. A package of strand comprising two sections of strand and a splice coupling said strand sections.

19. The package of claim 18, wherein:
said sections of strand have a coating of size and said strand is adhered to itself by said size to form a self-supporting block of strand having an outer surface; and
said splice is disposed outside said block adjacent said outer surface.

20. The package of claim 18, wherein:
said sections of strand have a coating of size and said strand is adhered to itself by said size to form a self-supporting block of strand; and
said splice is disposed within said block.

21. A method of manufacturing a package of strand comprising the steps of:
attenuating from a source of material a first strand section (560) having a first end and a second end (564);
directing said first end of said first strand section into a container (300);
attenuating from the source of material a second strand section (562) having a first end (566) and a second end;
coupling said first end of said second strand section to said second end of said first strand section; and
directing said second strand section into said container.

22. The method of claim 21, wherein in said coupling step said first end of said second strand section (566) and said second end of said first stand section (564) are coupled at a splice (698).

23. The method of claim 22, wherein in said directing step said splice is directed outside said container.

24. The method of claim 23, wherein said splice is a temporary splice (694) and further comprising the step of replacing said temporary splice with a permanent splice.

25. The method of claim 24:
wherein said strand is coated with a size;
further comprising the step of drying said size to adhere said strand sections to themselves and to each other to form a self-supporting block of strand having an exterior surface; and
wherein said replacing step includes the steps of:
removing said temporary splice (694) by shortening said first end of said second strand section (566) close to the exterior surface of the block of strand and shortening said second end of said first strand section (564) adjacent the exterior surface; and
overlapping said shortened first end of said second strand section and said shortened second end of said first strand section; and
wrapping said overlapped shortened ends to form said permanent splice (698), whereby said permanent splice is adjacent the exterior surface of the block of strand.

26. The method of claim 22, wherein in said directing step said splice is directed inside said container (300).

27. The method of claim 21, wherein said coupling step includes the steps of:
securing said second end of said first strand section (564);
shortening said second end of said first strand section by removing a portion of said second end;
securing said first end of said second strand section (566);
shortening said first end of said second strand section by removing a portion of said first end;
bringing said shortened ends together; and entangling said shortened ends to form said splice (698).

28. The method of 22, wherein said coupling step includes the steps of:
directing said second end of said first strand section (564) outside said container; and
directing said first end of said second strand section (566) outside said container; and further comprising the step of directing said splice (698) into said container (300).

29. A package(500) formed by the method of claim 28.

30. A package (500) formed by the method of claim 21.
